(19) Europäisches Patentamt
European Patent Office
Office européen des brevets

(11) EP 1 459 901 A2

(12) **EUROPEAN PATENT APPLICATION**

(43) Date of publication:
**22.09.2004 Bulletin 2004/39**

(51) Int Cl.[7]: **B41M 5/00**, C09D 11/00

(21) Application number: **04005966.9**

(22) Date of filing: **12.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **19.03.2003 JP 2003075066**
**27.08.2003 JP 2003302792**

(71) Applicant: **Fuji Photo Film Co., Ltd.**
**Minami-Ashigara-shi, Kanagawa (JP)**

(72) Inventors:
- **Takashima, Masanobu**
  **Fujinomiya-shi, Shizuoka-ken (JP)**
- **Nagata, Kozo**
  **Fujinomiya-shi, Shizuoka-ken (JP)**

(74) Representative: **HOFFMANN - EITLE**
**Patent- und Rechtsanwälte**
**Arabellastrasse 4**
**81925 München (DE)**

(54) **Ink-jet recording method**

(57) An ink-jet recording method using an ink set for forming an image on an ink-jet recording medium, wherein the ink-jet recording medium has an ink-receiving layer which contains a sulfur-containing compound and is disposed on a support, the ink set contains a yellow ink containing a yellow dye, a magenta ink containing a magenta dye, and a cyan ink containing a cyan dye, as essential components, and the magenta dye has an oxidation potential of higher than 0.8 V (vs SCE).

EP 1 459 901 A2

## Description

BACKGROUND OF THE INVENTION

Field of the Invention

The present invention relates to an ink-jet recording method that can form an image excellent in ozone resistance.

Description of the Related Art

In recent years, materials to form color images have been mainly used in image recording. Specifically, ink-jet recording materials, thermal transfer-type image-recording materials, recording materials using electrophotographies, transfer-type silver halide photosensitive materials, printing inks, recording pens, etc. have been widely used as such color image-recording materials.

In the color image-recording materials, coloring agents such as dyes and pigments for so-called subtractive primary three colors are used to reproduce or record full-color images. However, a coloring agent, which shows absorption properties for desired color reproduction regions and fastness to various use conditions, has not been known, and expectations are high for improving the coloring agents.

The ink-jet recording methods have been rapidly popularized and further developing because the methods have advantages of low material costs, recording images at high speed, low recording noises, and recording color images with ease.

The ink-jet recording methods include continuous methods where droplets are continuously ejected and on-demand methods where droplets are ejected depending on image information signals. In the ink-jet recording methods, the droplets of an ink are discharged by a method of applying pressure to the ink by a piezo device; heating the ink to generate bubbles therein; using an ultrasonic wave; or aspirating the ink by an electrostatic force. The ink for ink-jet recording is a water ink, an oil-based ink, or a solid (melting-type) ink.

Coloring agents contained in the ink for ink-jet recording are required to have excellent solubility or dispersibility in a solvent; to be capable of recording with a high density; to be excellent in a hue; to have fastness to lights, heat, environmental active gases (e.g., $SO_x$, oxidizing gases such as $NO_x$, ozone, etc.), water, and chemicals; to hardly blur on an image-receiving material with excellent fixation; to be excellent in storability as an ink; to have no toxicity; to be high in purity; and to be available at a low price. However, it is extremely difficult to find a coloring agent satisfying these requirements. In particular, the coloring agents are required to have excellent hue of three primary colors; to be excellent in fastness to lights, humidity and heat; and to show fastness to oxidizing gases such as an environmental ozone gas in printing on an ink-receiving layer of an image-receiving material.

As a magenta dye for ink-jet recording, azo dyes using a coupling component such as phenol, naphthol and aniline have been widely used conventionally. The azo dyes described in JP-A No. 11-209673, Japanese Patent No. 3020660, etc. are excellent in color hue, however, the dyes have disadvantage of poor light fastness. JP-A No. 2000-220649 discloses a dye having excellent hue and improved light fastness to solve the disadvantage. However, the dyes described in the patent documents are remarkably insufficient in the fastness to the oxidizing gases such as ozone gases.

As a cyan dye, phthalocyanine dyes, triphenylmethane dyes, etc. have been used typically. The most popular phthalocyanine dyes include C.I. Direct Blues 86, 87, and 199. Though these cyan dyes are more excellent in light fastness than magenta dyes and yellow dyes, they are remarkably faded or discolored by the oxidizing gases such as nitrogen oxide gases and ozone gas, which attract much attention in environmental view.

JP-A Nos. 3-103484, 4-39365 and 2000-303009 have reported phthalocyanine dyes with the ozone resistance. However, the dyes are not sufficiently improved in the oxidizing gas fastness, and further improvement is desired.

The triphenylmethane dyes including Acid Blue 9 are excellent in color hue, however, remarkably poor in the light fastness and the ozone resistance.

As a yellow dye, azobenzene dyes including Direct Yellows 86 and 120, or heterocyclic azo dyes such as azopyrazolone dyes including Acid Yellow 17 and azopyridone dyes have been used. Further, quinophthalone dyes have also been proposed as the yellow dye. However, among the conventionally known dyes, the dyes such as the quinophthalone dyes, which are excellent in color hue, particularly sharpness of the longer wavelength side of the absorption spectrum, are often poor in the fastness to ozone and lights. The azobenzene dyes are poor in sharpness of the longer wavelength side of the absorption spectrum, though they are fast. Thus, a yellow dye excellent in both of the hue and the fastness is not known.

To obtain a full-color image with excellent color reproducibility and fastness, the dyes for forming the image need to satisfy the following conditions: the dyes for three primary colors have excellent absorption property; the dyes

for the three primary colors are appropriately combined to obtain wide color reproduction regions; the dyes for the three primary colors have a high fastness; the fastness is not reduced by interaction between the dyes; and the fastnesses of the dyes for the three primary colors are well balanced.

However, the principle for selecting the dyes depending on the fastness cannot be obtained, the fastness to the oxidizing gases such as ozone being particularly important matter in ink-jet printing, because characteristics of the dye, such as structure and physical property, effective for improving the ozone fastness are not reported. The selection of the dyes is further difficult when the dyes are selected depending also on the light fastness.

The ink-receiving layer of the ink-jet recording medium may contain fine particles and water-soluble resin. Such an ink-receiving layer has a porous structure due to the fine particles, and thereby having improved ink absorption property. However, the porous layer is disadvantageous in poor ozone resistance.

For example, methods of using a sulfur-based additive to improve the ozone resistance have been reported in JP-A Nos. 2002-86904, 2002-36717, 2001-260519, and 7-314882. Though the ozone resistance is improved by the methods as compared with methods without using the sulfur-based additive, the ozone resistance is still not satisfactory.

SUMMARY OF THE INVENTION

An object of the present invention is to solve the conventional problems, thereby providing an ink-jet recording method capable of forming an image excellent in ozone fastness.

As a result of intense research on an ink-jet recording method to obtain excellent ozone fastness, the inventor has found that the ozone fastness is remarkably and unexpectedly increased by using a combination of an ink-jet recording medium having an ink-receiving layer containing a sulfur-containing compound, and an ink set containing an unknown dye with a particular oxidation potential. The invention has been accomplished by the finding.

Thus, the invention provides the following method.

A first aspect of the present invention is to provide an ink-jet recording method using an ink set for forming an image on an ink-jet recording medium, wherein the ink-jet recording medium comprises a support and an ink-receiving layer comprising a sulfur-containing compound which is disposed on the support, the ink set comprises a yellow ink comprising a yellow dye, a magenta ink comprising a magenta dye, and a cyan ink comprising a cyan dye, and the magenta dye has an oxidation potential of higher than 0.8 V (vs SCE).

A second aspect of the present invention is to provide an ink-jet recording method according to the first aspect, wherein the cyan dye has an oxidation potential of higher than 0.8 V (vs SCE).

A third aspect of the present invention is to provide an ink-jet recording method according to the first or second aspect, wherein the sulfur-containing compound is at least one selected from the group consisting of thioether compounds, thiourea compounds, sulfoxide compounds, thiocyanic acid compounds, sulfinic acid compounds, disulfide compounds, and sulfur-containing heterocyclic compounds.

The ink-jet recording method of the invention can form an image excellent in the ozone resistance, etc.

DETAILED DESCRIPTION OF THE INVENTION

<Ink for ink-jet recording>

- Dye-

A magenta dye having an oxidation potential of higher than 0.8 V (vs SCE) is used in the present invention. The more the oxidation potential is, the more preferable. The oxidation potential of the magenta dye is preferably more than 1.0 V (vs SCE), more preferably more than 1.1 V (vs SCE), further preferably more than 1.15 V (vs SCE), and most preferably more than 1.2 V (vs SCE).

Further, it is preferable that a cyan dye having an oxidation potential of higher than 0.8 V (vs SCE) is used with the magenta dye to keep gray balance.

The value of the oxidation potential indicates mobility of an electron from a sample of the dye to an electrode. The larger the value is (or the more the oxidation potential is), the less the electron is transferred from the sample to the electrode (or the less the sample is oxidized). As for the relation between the oxidation potential and the structure of the dye, the oxidation potential is increased by introducing an electron-withdrawing group to the dye, and the oxidation potential is reduced by introducing an electron-donating group to the dye.

The value of the oxidation potential, to be hereinafter described in detail, means an electric potential at which an electron is extracted from a compound on a positive electrode of a voltammetry. The value is considered to approximately correspond with the HOMO energy level of the compound in the ground state.

As a result of intense research on ozone fastness of a colored image, the inventors have found that there is a correlation between the ozone fastness and the oxidation potential of a compound used for forming the image,

whereby the ozone fastness can be improved by using a compound having a higher oxidation potential for a saturated calomel electrode (SCE).

The improvement of the ozone fastness of the colored image can be explained by relation between HOMO (highest occupied molecular orbital) of the compound and LUMO (lowest unoccupied molecular orbital) of the ozone gas. It is considered that the dye is oxidized in a reaction between HOMO of the dye and LUMO of the ozone gas, and as a result, the ozone fastness of the image is reduced. Thus, the reactivity of the dye with the ozone gas can be reduced by lowering the HOMO energy of the dye to increase the ozone fastness.

The oxidation potential (Eox) can be easily measured by one skilled in the art. Methods for measuring the oxidation potential are described in P. Delahay, *New Instrumental Methods* in *Electrochemistry,* 1954, Interscience Publishers; A. J. Bard, et al., *Electrochemical Methods,* 1980, John Wiley & Sons; Akira Fujishima, et al., *Denki Kagaku Sokutei-ho,* 1984, Gihodo Shuppan Co., Ltd.; etc.

The methods for measuring the oxidation potential are specifically described below. The oxidation potential in the present invention is measured at a temperature of 25°C. The oxidation potential may be measured as a value for SCE (saturated calomel electrode) such that $1 \times 10^{-4}$ to $1 \times 10^{-6}$ $mol \cdot dm^{-3}$ of a sample is dissolved in a solvent composed of a supporting electrolyte (e.g. sodium perchlorate, tetrapropylammonium perchlorate, etc.) and a solvent (e.g. dimethylformamide, acetonitrile, etc.), and the resulting solution is subjected to measurement using a cyclic voltammetry or a direct current polarography.

The supporting electrolyte and the solvent may be appropriately selected depending on the oxidation potential or the solubility of the sample. The supporting electrolyte and the solvent are described in Akira Fujishima, et al., *Denki Kagaku Sokutei-ho,* 1984, Gihodo Shuppan Co., Ltd., pages 101 to 118.

The value of the oxidation potential is often affected by liquid junction potential or solution resistance of the sample solution to be changed in approximately several tens mV. However, the value of the oxidation potential can be reproducibly obtained by calibration using a standard sample such as hydroquinone.

In the invention, the oxidation potential is obtained by measuring an N,N-dimethylformamide solution containing 0.1 $mol \cdot dm^{-3}$ of tetrapropylammonium perchlorate as a supporting electrolyte and $1 \times 10^{-3}$ $mol \cdot dm^{-3}$ of a sample compound by a direct current polarography using an SCE (saturated calomel electrode) as a reference electrode, a graphite electrode as a working electrode, and a platinum electrode as a counter electrode.

The dyes used in the invention may have any structure as long as they satisfy the above-mentioned condition of the oxidation potential. Because yellow dyes naturally have a high oxidation potential (or a low HOMO), the structures thereof are not particularly restricted. The structures of the dyes satisfying the condition of the oxidation potential are described in detail below.

In the invention, it is desirable that the oxidation potential of the dye is increased by introducing an electron-withdrawing group to the dye structure to reduce the reactivity to an ozone electrophile. In other words, using Hammett's substituent constant $\sigma_p$ which is a scale for indicating an electron-withdrawing or electron-donating property of a substituent, the oxidation potential can be increased by introducing a substituent having a large constant $\sigma_p$ such as a nitro group, a cyano group, a sulfinyl group, a sulfonyl group, and a sulfamoyl group.

The Hammett's substituent constant $\sigma_p$ is briefly described below. The Hammett rule is an empirical rule proposed by L. P. Hammett in 1935 to quantitatively treat effects of substituents on reactions or equilibriums of benzene derivatives. The Hammett rule is widely considered to be appropriate nowadays. Values $\sigma_p$ and $\sigma_m$ are used as substituent constants in the Hammett rule. The substituent constants can be found in many common books, and are described in detail in, for example, *Lange's Handbook of Chemistry,* edited by J. A. Dean, 12th edition, 1979, McGraw-Hill, and *Kagaku no Ryoiki,* extra edition, No. 122, pages 96 to 103, 1979, Nanko-do.

In general, the oxidation potential becomes higher as a chromophoric group of the dye contains more high electronegative atoms in addition to the above-mentioned substituents. Thus, for example, the oxidation potential of a dye with a chromophoric group containing an unsaturated heterocycle is more than that of a dye with a chromophoric group containing an aryl group. Examples of the electronegative heteroatoms include a nitrogen atom, an oxygen atom, and a sulfur atom. Among them, a nitrogen atom is particularly preferred.

Thus, the chromophoric group of the dye preferably contains a heteroatom, an unsaturated heterocycle, or an electron-withdrawing group.

Examples of the dyes having the chromophoric group containing the heteroatom include azo dyes, azomethine dyes, phthalocyanine dyes, etc. Among them, the azo dyes are particularly preferred.

The unsaturated heterocycle is preferably a 5- or 6-membered, unsaturated heterocycle. Examples of such unsaturated heterocycles include a thiophene ring, a furan ring, a pyrrole ring, a thiazole ring, an oxazole ring, an imidazole ring, an isothiazole ring, an isoxazole ring, a pyrazole ring, a thiadiazole ring, an oxadiazole ring, a triazole ring, a pyridine ring, a pyridazine ring, a pyrimidine ring, and a pyrazine ring. The unsaturated heterocycle may form a condensed ring with a hydrocarbon ring or a heterocycle. When the unsaturated heterocycle is a nitrogen-containing heterocycle, the nitrogen atom thereof may be quaternary. The unsaturated heterocycles that can be tautomerized include all tautomers even if only one tautomer is described. Preferred as the unsaturated heterocycle are a thiazole

ring, an isothiazole ring, a pyrazole ring, a thiadiazole ring, a pyridine ring, a pyrimidine ring, and a pyrazine ring, and the most preferred are an isothiazole ring, a pyrazole ring, a 1,2,4-thiadiazole ring, a 1,3,4-thiadiazole ring, and a pyridine ring.

The electron-withdrawing group preferably has a Hammett's substituent constant $\sigma_p$ of 0.40 or more. The constant $\sigma_p$ is more preferably 0.45 or more, and most preferably 0.50 or more. In the case where the chromophoric group of the dye has a plurality of electron-withdrawing groups as substituents, the sum of the constants $\sigma_p$ of the electron-withdrawing groups is preferably 0.50 or more, more preferably 0.60 or more, and most preferably 0.70 or more. Specific examples of the electron-withdrawing groups having a Hammett's substituent constant $\sigma_p$ of 0.40 or more are described in J. A. Dean, *Lange's Handbook of Chemistry,* 12th edition, 1979, McGraw-Hill, and *Kagaku no Ryoiki,* extra edition, No. 122, pages 96 to 103, 1979, Nanko-do.

The dyes used in the invention are preferably a combination of those represented by the following formula (I).

$$(Ch)\text{-}(EWG)_n \qquad \text{Formula (I)}$$

In the formula (I), Ch represents a chromophoric group containing an unsaturated heterocycle, EWG represents an electron-withdrawing group having a Hammett's substituent constant $\sigma_p$ of 0.40 or more, and n is an integer from 1 to 8.

Ch may be a chromophoric group of an azo dye; a phthalocyanine dye; an azomethine dye; a quinone dye such as an anthraquinone dye and an anthrapyridone dye; a carbonium dye such as a triphenylmethane dye, a xanthene dye, and an acridine dye; or an azine dye such as an oxazine dye and a thiazine dye. Preferred among the dyes are an azo dye, a phthalocyanine dye, an azomethine dye, and an anthrapyridone dye. Ch is most preferably a chromophoric group containing an unsaturated heterocycle of an azo dye or a phthalocyanine dye.

The azo dye used as the magenta dye or the yellow dye is preferably represented by the following formula (II).

$$\text{Het(A)-N=N-Het(B)} \qquad \text{Formula (II)}$$

In the formula (II), Het(A) and Het(B) represent a 5- or 6-membered unsaturated heterocycle, respectively. Examples of the 5- or 6-membered unsaturated heterocycles include a thiophene ring, a furan ring, a pyrrole ring, a thiazole ring, an oxazole ring, an imidazole ring, an isothiazole ring, an isoxazole ring, a pyrazole ring, a thiadiazole ring, an oxadiazole ring, a triazole ring, a pyridine ring, a pyridazine ring, a pyrimidine ring, a pyrazine ring, etc. The unsaturated heterocycles may have substituents, and the substituents may bond together to form a hydrocarbon ring or an unsaturated heterocycle condensed with the unsaturated heterocycle. The condensed ring may have a substituent. When the 5- or 6-membered unsaturated heterocycle is a nitrogen-containing heterocycle, the nitrogen atom may be quaternary. The unsaturated heterocycles that can be tautomerized include all tautomers even if only one tautomer is described.

In the case where the dye is water-soluble, the dye preferably has a substituent of an ionic, hydrophilic group. The ionic, hydrophilic group may be a sulfo group, a carboxyl group, a phosphono group, or a quaternary ammonium group, etc.

The unsaturated heterocycle represented by Het(A) or Het(B) is preferably a thiazole ring, an isothiazole ring, a pyrazole ring, a thiadiazole ring, a pyridine ring, or a pyrazine ring, more preferably an isothiazole ring, a pyrazole ring, a thiadiazole ring, or a pyridine ring, most preferably a pyrazole ring, a 1,2,4-thiadiazole ring, or a pyridine ring.

Het(A) and Het(B) may have a substituent. Examples of the substituents include halogen atoms, alkyl groups including cycloalkyl groups, alkenyl groups including cycloalkenyl groups, alkynyl groups, aryl groups, heterocyclic groups, a cyano group, a hydroxyl group, a nitro group, a carboxyl group, alkoxy groups, aryloxy groups, silyloxy groups, heterocyclyloxy groups, acyloxy groups, carbamoyloxy groups, alkoxycarbonyloxy groups, aryloxycarbonyloxy groups, amino groups including anilino groups, acylamino groups, aminocarbonylamino groups, alkoxycarbonylamino groups, aryloxycarbonylamino groups, sulfamoylamino groups, alkyl or aryl sulfonylamino groups, mercapto groups, alkylthio groups, arylthio groups, heterocyclylthio groups, sulfamoyl groups, a sulfo group, alkyl or aryl sulfinyl groups, alkyl or aryl sulfonyl groups, acyl groups, aryloxycarbonyl groups, alkoxycarbonyl groups, carbamoyl groups, aryl or heterocyclyl azo groups, imide groups, phosphino groups, phosphono groups, phosphinyl groups, phosphinyloxy groups, phosphinylamino groups, and silyl groups. In particular, the examples of the substituents include halogen atoms, heterocyclic groups, a cyano group, a nitro group, a carboxyl group, acyloxy groups, carbamoyloxy groups, alkoxycarbonyloxy groups, aryloxycarbonyloxy groups, sulfamoyl groups, a sulfo group, alkyl or aryl sulfinyl groups, alkyl or aryl sulfonyl groups, acyl groups, aryloxycarbonyl groups, alkoxycarbonyl groups, carbamoyl groups, imide groups, phosphoryl groups, phosphono groups, phosphinoyl groups, phosphonyl groups, phosphinoyloxy groups, and phosphinoylamino groups. Among the substituents, electron-withdrawing groups are preferable, and substituents having a Hammett's substituent constant $\sigma_p$ of 0.40 or more are particularly preferable. Examples of the substituents having a Hammett's substituent constant $\sigma_p$ of 0.40 or more include a cyano group, a nitro group, a carboxyl group, sulfamoyl groups, alkyl or aryl sulfinyl groups, alkyl or aryl sulfonyl groups, acyl groups, aryloxycarbonyl groups, alkoxycarbonyl groups, carbamoyl groups, imide groups, phosphono groups, phosphoryl groups, alkyl groups having a substituent of an electron-withdrawing group (e.g. trihalomethyl groups, perfluoroalkyl groups, a dicyanomethyl group, an iminomethyl group), alkenyl groups having a substituent of an electron-withdrawing group (e.g. a tricyanovinyl group), and quaternary salt groups (e.g. sulfonium groups, ammonium groups, phosphonium groups). When the substituent has a hydrogen atom, the hydrogen atom may be substituted by the above substituent. Examples of such substituents include alkylcarbonylaminosulfonyl groups, arylcarbonylaminosulfonyl groups, alkylsulfonylaminocarbonyl groups, and arylsulfonylaminocarbonyl group.

The substituents on the unsaturated heterocycle may bond together to form a condensed ring with the heterocycle, and the condensed ring may further have a substituent.

The magenta dye is preferably represented by the following formula (M-I).

Formula (M-I)

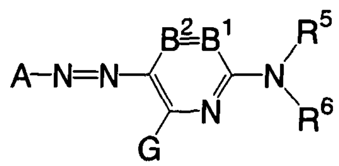

In the formula (M-I), A represents a residue of a 5-membered heterocyclic diazo component A-$NH_2$. $B^1$ and $B^2$ represent -$CR^1$= and -$CR^2$=, or alternatively one of $B^1$ and $B^2$ represents a nitrogen atom and the other represents -$CR^1$= or -$CR^2$=. $R^5$ and $R^6$ each independently represent a hydrogen atom, an aliphatic group, an aromatic group, a heterocyclic group, an acyl group, an alkoxycarbonyl group, an aryloxycarbonyl group, a carbamoyl group, an alkyl or aryl sulfonyl group, or a sulfamoyl group, and the groups may further have a substituent.

G, $R^1$ and $R^2$ each independently represent a hydrogen atom, a halogen atom, an aliphatic group, an aromatic group, a heterocyclic group, a cyano group, a carboxyl group, a carbamoyl group, an alkoxycarbonyl group, an aryloxycarbonyl group, a heterocyclyloxycarbonyl group, an acyl group, a hydroxy group, an alkoxy group, an aryloxy group, a heterocyclyloxy group, a silyloxy group, an acyloxy group, a carbamoyloxy group, an alkoxycarbonyloxy group, an aryloxycarbonyloxy group, an amino group that may be a heterocyclylamino group or an anilino group, an acylamino group, a ureido group, a sulfamoylamino group, an alkoxycarbonylamino group, an aryloxycarbonylamino group, an alkyl or aryl sulfonylamino group, a heterocyclylsulfonylamino group, a nitro group, an alkyl or aryl thio group, an alkyl or aryl sulfonyl group, a heterocyclylsulfonyl group, an alkyl or aryl sulfinyl group, a heterocyclylsulfinyl group, a sulfamoyl group, a sulfo group, or a heterocyclylthio group. The groups may further have a substituent. $R^5$ may be connected to $R^1$ or $R^6$ to form a 5- or 6-membered ring.

In the formula (M-I), A represents a residue of a 5-membered heterocyclic diazo component A-$NH_2$. Examples of heteroatoms in the heterocyclic diazo component include N, O, and S. A is preferably a nitrogen-containing, 5-membered heterocycle, and the heterocycle may form a condensed ring with an aliphatic ring, an aromatic ring, or another heterocycle. Examples of preferred heterocycles represented by A include pyrazole rings, imidazole rings, thiazole rings, isothiazole rings, thiadiazole rings, benzothiazole rings, benzoxazole rings, and benzisothiazole rings. The heterocycles may have a substituent. Among the heterocycles, more preferred are a pyrazole ring, an imidazole ring, an isothiazole ring, thiadiazole rings, and benzothiazole rings, represented by the following formulae (a) to (f).

Formulae

(a)

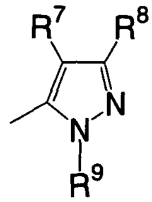

(b)

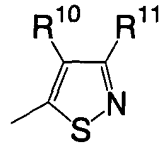

(c)

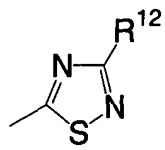

(d)

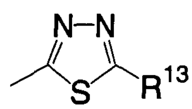

(e)

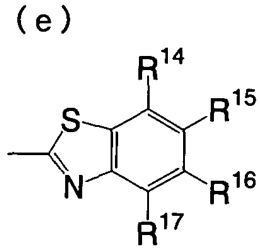

(f)

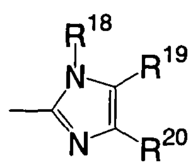

In the formulae (a) to (f), $R^7$ to $R^{20}$ have the same meanings as G, $R^1$ and $R^2$, respectively. Among the heterocycles represented by the formulae (a) to (f), the pyrazole rings and the isothiazole rings represented by the formulae (a) or (b) are preferable, and the pyrazole rings represented by the formula (a) are most preferable.

In the formula (M-I), $B^1$ and $B^2$ may represent $-CR^1=$ and $-CR^2=$, respectively. Alternatively, one of $B^1$ and $B^2$ may represent a nitrogen atom and the other may represent $-CR^1=$ or $-CR^2=$. $B^1$ and $B^2$ preferably represent $-CR^1=$ and $-CR^2=$.

$R^5$ and $R^6$ each independently represent a hydrogen atom, an aliphatic group, an aromatic group, a heterocyclic group, an acyl group, an alkoxycarbonyl group, an aryloxycarbonyl group, a carbamoyl group, an alkyl or aryl sulfonyl group, or a sulfamoyl group, and the groups may further have a substituent. Each of $R^5$ and $R^6$ is preferably a hydrogen atom, an aliphatic group, an aromatic group, a heterocyclic group, an acyl group, or an alkyl or aryl sulfonyl group, more preferably a hydrogen atom, an aromatic group, a heterocyclic group, an acyl group, or an alkyl or aryl sulfonyl group, and most preferably a hydrogen atom, an aryl group, or a heterocyclic group. These groups may have a substituent. It should be noted that at least one of $R^5$ and $R^6$ is not a hydrogen atom.

G, $R^1$ and $R^2$ each independently represent a hydrogen atom, a halogen atom, an aliphatic group, an aromatic group, a heterocyclic group, a cyano group, a carboxyl group, a carbamoyl group, an alkoxycarbonyl group, an aryloxycarbonyl group, a heterocyclyloxycarbonyl group, an acyl group, a hydroxy group, an alkoxy group, an aryloxy group, a heterocyclyloxy group, a silyloxy group, an acyloxy group, a carbamoyloxy group, an alkoxycarbonyloxy group, an aryloxycarbonyloxy group, an amino group that may be a heterocyclylamino group or an anilino group, an acylamino group, a ureido group, a sulfamoylamino group, an alkoxycarbonylamino group, an aryloxycarbonylamino group, an alkyl or aryl sulfonylamino group, a heterocyclylsulfonylamino group, a nitro group, an alkyl or aryl thio group, a heterocyclylthio group, an alkyl or aryl sulfonyl group, a heterocyclylsulfonyl group, an alkyl or aryl sulfinyl group, a heterocyclylsulfinyl group, a sulfamoyl group, or a sulfo group. The groups may have a substituent.

G is preferably a hydrogen atom, a halogen atom, an aliphatic group, an aromatic group, a hydroxy group, an alkoxy group, an aryloxy group, an acyloxy group, a heterocyclyloxy group, an amino group that may be an anilino group or a heterocyclylamino group, an acylamino group, a ureido group, a sulfamoylamino group, an alkoxycarbonylamino group, an aryloxycarbonylamino group, an alkyl or aryl thio group, or a heterocyclylthio group, more preferably a hydrogen atom, a halogen atom, an alkyl group, a hydroxy group, an alkoxy group, an aryloxy group, an acyloxy

group, an amino group that may be an anilino group or a heterocyclylamino group, or an acylamino group, most preferably a hydrogen atom, an anilino group, or an acylamino group. The groups may have a substituent.

Each of $R^1$ and $R^2$ is preferably a hydrogen atom, an alkyl group, a halogen atom, an alkoxycarbonyl group, a carboxyl group, a carbamoyl group, a hydroxy group, an alkoxy group, or a cyano group. The groups may have a substituent. $R^5$ may be connected to $R^1$ or $R^6$ to form a 5- or 6-membered ring.

Examples of the substituents on A, $R^1$, $R^2$, $R^5$, $R^6$, and G may include the above-mentioned groups represented by G, $R^1$ and $R^2$.

In the case where the dye used in the invention is water-soluble, the dye preferably has a substituent of an ionic, hydrophilic group on A, $R^1$, $R^2$, $R^5$, $R^6$, or G. Examples of such ionic, hydrophilic groups include a sulfo group, a carboxyl group, a phosphono group, and quaternary ammonium groups. The ionic, hydrophilic group is preferably a carboxyl group, a phosphono group or a sulfo group, and particularly preferably a carboxyl group or a sulfo group. The carboxyl group, the phosphono group and the sulfo group may form a salt, and examples of counter ions forming the salt include ammonium ions; alkaline metal ions such as a lithium ion, a sodium ion and a potassium ion; and organic cations such as a tetramethylammonium ion, a tetramethylguanidium ion and a tetramethylphosphonium ion.

In the invention, the aliphatic group means an alkyl group, a substituted alkyl group, an alkenyl group, a substituted alkenyl group, an alkynyl group, a substituted alkynyl group, an aralkyl group, or a substituted aralkyl group. The aliphatic group may be branched and may form a ring. The aliphatic group preferably has 1 to 20 carbon atoms, and more preferably has 1 to 16 carbon atoms. Each aryl moiety of the aralkyl group and the substituted aralkyl group is preferably a phenyl or naphtyl moiety, particularly preferably a phenyl moiety. Examples of the aliphatic groups include a methyl group, an ethyl group, a butyl group, an isopropyl group, a t-butyl group, a hydroxyethyl group, a methoxyethyl group, a cyanoethyl group, a trifluoromethyl group, a 3-sulfopropyl group, a 4-sulfobutyl group, a cyclohexyl group, a benzyl group, a 2-phenethyl group, a vinyl group, and an allyl group.

In the invention, the aromatic group means an aryl group or a substituted aryl group. The aryl group is preferably a phenyl group or a naphtyl group, particularly preferably a phenyl group. The aromatic group preferably has 6 to 20 carbon atoms, and more preferably has 6 to 16 carbon atoms. Examples of the aromatic groups include a phenyl group, a p-tolyl group, a p-methoxyphenyl group, an o-chlorophenyl group and a m-(3-sulfopropylamino)phenyl group.

The heterocyclic group may be a substituted heterocyclic group or an unsubstituted heterocyclic group. The heterocycle of the heterocyclic group may form a condensed ring with an aliphatic ring, an aromatic ring, or another heterocycle. The heterocycle of the heterocyclic group is preferably a 5- or 6-membered ring. Examples of substituents of the substituted heterocyclic group include aliphatic groups, halogen atoms, alkyl or aryl sulfonyl groups, acyl groups, acylamino groups, sulfamoyl groups, carbamoyl groups, ionic, hydrophilic groups, etc. Examples of the heterocyclic groups include a 2-pyridyl group, a 2-thienyl group, a 2-thiazolyl group, a 2-benzothiazolyl group, a 2-benzoxazolyl group, and a 2-furyl group.

The alkyl or aryl sulfonyl group may be a substituted alkyl or aryl sulfonyl group or an unsubstituted alkyl or aryl sulfonyl group. Examples of the alkyl or aryl sulfonyl groups include a methylsulfonyl group and a phenylsulfonyl group.

The alkyl or aryl sulfinyl group may be a substituted alkyl or aryl sulfinyl group or an unsubstituted alkyl or aryl sulfinyl group. Examples of the alkyl or aryl sulfinyl groups include a methylsulfinyl group and a phenylsulfinyl group.

The acyl group may be a substituted acyl group or an unsubstituted acyl group. The acyl group preferably has 1 to 20 carbon atoms. Examples of substituents of the substituted acyl group include ionic, hydrophilic groups. Examples of the acyl groups include an acetyl group and a benzoyl group.

Examples of the halogen atoms include a fluorine atom, a chlorine atom, and a bromine atom.

The amino group may have a substituent of an alkyl group, an aryl group, or a heterocyclic group. The alkyl group, the aryl group, and the heterocyclic group may further have a substituent.

The alkylamino group preferably has 1 to 20 carbon atoms. Examples of substituents on the alkylamino group include ionic, hydrophilic groups. Examples of the alkylamino groups include a methylamino group and a diethylamino group.

The arylamino group may be a substituted arylamino group or an unsubstituted arylamino group. The arylamino group preferably has 6 to 20 carbon atoms. Examples of substituents of the substituted arylamino group include halogen atoms, and ionic, hydrophilic groups. Examples of the arylamino groups include a phenylamino group and a 2-chlorophenylamino group.

The heterocyclylamino group may be a substituted heterocyclylamino group or an unsubstituted heterocyclylamino group. The heterocyclylamino group preferably has 2 to 20 carbon atoms. Examples of substituents of the substituted heterocyclylamino group include alkyl groups, halogen atoms, and ionic, hydrophilic groups.

The alkoxy group may be a substituted alkoxy group or an unsubstituted alkoxy group. The alkoxy group preferably has 1 to 20 carbon atoms. Examples of substituents of the substituted alkoxy group include alkoxy groups, a hydroxyl group, and ionic, hydrophilic groups. Examples of the alkoxy groups include a methoxy group, an ethoxy group, an isopropoxy group, a methoxyethoxy group, a hydroxyethoxy group, and a 3-carboxypropoxy group.

The aryloxy group may be a substituted aryloxy group or an unsubstituted aryloxy group. The aryloxy group preferably has 6 to 20 carbon atoms. Examples of substituents of the substituted aryloxy group include alkoxy groups and ionic, hydrophilic groups. Examples of the aryloxy groups include a phenoxy group, a p-methoxyphenoxy group, and an o-methoxyphenoxy group.

The silyloxy group preferably has a substituent of an aliphatic group or an aromatic group having 1 to 20 carbon atoms. Examples of the silyloxy groups include a trimethylsilyloxy group and a diphenylmethylsilyloxy group.

The heterocyclyloxy group may be a substituted heterocyclyloxy group or an unsubstituted heterocyclyloxy group. The heterocyclyloxy group preferably has 2 to 20 carbon atoms. Examples of substituents of the substituted heterocyclyloxy group include alkyl groups, alkoxy groups, and ionic, hydrophilic groups. Examples of the heterocyclyloxy groups include a 3-pyridyloxy group and a 3-thienyloxy group.

The alkoxycarbonyloxy group may be a substituted alkoxycarbonyloxy group or an unsubstituted alkoxycarbonyloxy group. The alkoxycarbonyloxy group preferably has 2 to 20 carbon atoms. Examples of the alkoxycarbonyloxy groups include a methoxycarbonyloxy group and an isopropoxycarbonyloxy group.

The aryloxycarbonyloxy group may be a substituted aryloxycarbonyloxy group or an unsubstituted aryloxycarbonyloxy group. The aryloxycarbonyloxy group preferably has 7 to 20 carbon atoms. Examples of the aryloxycarbonyloxy groups include a phenoxycarbonyloxy group.

The acylamino group may be a substituted acylamino group or an unsubstituted acylamino group. The acylamino group preferably has 2 to 20 carbon atoms. Examples of substituents of the substituted acylamino group include ionic, hydrophilic groups. Examples of the acylamino groups include an acetylamino group, a propionylamino group, a benzoylamino group, an N-phenylacetylamino group and a 3,5-disulfobenzoylamino group.

The ureido group may be a substituted ureido group or an unsubstituted ureido group. The ureido group preferably has 1 to 20 carbon atoms. Examples of substituents of the substituted ureido group include alkyl groups and aryl groups. Examples of the ureido groups include a 3-methylureido group, a 3,3-dimethylureido group and a 3-phenylureido group.

The sulfamoylamino group may be a substituted sulfamoylamino group or an unsubstituted sulfamoylamino group. Examples of substituents of the substituted sulfamoylamino group include alkyl groups. Examples of the sulfamoylamino groups include an N,N-dipropylsulfamoylamino group.

The alkoxycarbonylamino group may be a substituted alkoxycarbonylamino group or an unsubstituted alkoxycarbonylamino group. The alkoxycarbonylamino group preferably has 2 to 20 carbon atoms. Examples of substituents of the substituted alkoxycarbonylamino group include ionic, hydrophilic groups. Examples of the alkoxycarbonylamino groups include an ethoxycarbonylamino group.

The alkyl or aryl sulfonylamino group may be a substituted alkyl or aryl sulfonylamino group or an unsubstituted alkyl or aryl sulfonylamino group. The alkyl or aryl sulfonylamino group preferably has 1 to 20 carbon atoms. Examples of substituents of the substituted alkyl or aryl sulfonylamino group include ionic, hydrophilic groups. Examples of the alkyl or aryl sulfonylamino groups include a methylsulfonylamino group, an N-phenyl-methylsulfonylamino group, a phenylsulfonylamino group, and a 3-carboxyphenylsulfonylamino group.

The carbamoyl group may be a substituted carbamoyl group or an unsubstituted carbamoyl group. Examples of substituents of the substituted carbamoyl group include alkyl groups. Examples of the carbamoyl groups include a methylcarbamoyl group and a dimethylcarbamoyl group.

The sulfamoyl group may be a substituted sulfamoyl group or an unsubstituted sulfamoyl group. Examples of substituents of the substituted sulfamoyl group include alkyl groups. Examples of the sulfamoyl groups include a dimethylsulfamoyl group and a di-(2-hydroxyethyl)sulfamoyl group.

The alkoxycarbonyl group may be a substituted alkoxycarbonyl group or an unsubstituted alkoxycarbonyl group. The alkoxycarbonyl group preferably has 2 to 20 carbon atoms. Examples of substituents of the substituted alkoxycarbonyl group include ionic, hydrophilic groups. Examples of the alkoxycarbonyl groups include a methoxycarbonyl group and an ethoxycarbonyl group.

The acyloxy group may be a substituted acyloxy group or an unsubstituted acyloxy group. The acyloxy group preferably has 1 to 20 carbon atoms. Examples of substituents of the substituted acyloxy group include ionic, hydrophilic groups. Examples of the acyloxy groups include an acetoxy group and a benzoyloxy group.

The carbamoyloxy group may be a substituted carbamoyloxy group or an unsubstituted carbamoyloxy group. Examples of substituents of the substituted carbamoyloxy group include alkyl groups. Examples of the carbamoyloxy groups include an N-methylcarbamoyloxy group.

The aryloxycarbonyl group may be a substituted aryloxycarbonyl group or an unsubstituted aryloxycarbonyl group. The aryloxycarbonyl group preferably has 7 to 20 carbon atoms. Examples of substituents of the substituted aryloxycarbonyl group include ionic, hydrophilic groups. Examples of the aryloxycarbonyl groups include a phenoxycarbonyl group.

The aryloxycarbonylamino group may be a substituted aryloxycarbonylamino group or an unsubstituted aryloxycarbonylamino group. The aryloxycarbonylamino group preferably has 7 to 20 carbon atoms. Examples of substituents of the substituted aryloxycarbonylamino group include ionic, hydrophilic groups. Examples of the aryloxycarbonylamino groups include a phenoxycarbonylamino group.

The alkyl, aryl or heterocyclyl thio group may be a substituted alkyl, aryl or heterocyclyl thio group or an unsubstituted alkyl, aryl or heterocyclyl thio group. The alkyl, aryl or heterocyclyl thio group preferably has 1 to 20 carbon atoms. Examples of substituents of the substituted alkyl, aryl or heterocyclyl thio group include ionic, hydrophilic groups. Examples of the alkyl, aryl or heterocyclyl thio groups include a methylthio group, a phenylthio group, and a 2-pyridylthio group.

The heterocyclyloxycarbonyl group may be a substituted heterocyclyloxycarbonyl group or an unsubstituted heterocyclyloxycarbonyl group. The heterocyclyloxycarbonyl group preferably has 2 to 20 carbon atoms. Examples of substituents of the substituted heterocyclyloxycarbonyl group include ionic, hydrophilic groups. Examples of the heterocyclyloxycarbonyl groups include a 2-pyridyloxycarbonyl group.

The heterocyclylsulfonylamino group may be a substituted heterocyclylsulfonylamino group or an unsubstituted heterocyclylsulfonylamino group. The heterocyclylsulfonylamino group preferably has 1 to 12 carbon atoms. Examples of substituents of the substituted heterocyclylsulfonylamino group include ionic, hydrophilic groups. Examples of the heterocyclylsulfonylamino groups include a 2-thiophenesulfonylamino group and a 3-pyridinesulfonylamino group.

The heterocyclylsulfonyl group may be a substituted heterocyclylsulfonyl group or an unsubstituted heterocyclylsulfonyl group. The heterocyclylsulfonyl group preferably has 1 to 20 carbon atoms. Examples of substituents of the substituted heterocyclylsulfonyl group include ionic, hydrophilic groups. Examples of the heterocyclylsulfonyl groups include a 2-thiophenesulfonyl group and a 3-pyridinesulfonyl group.

The heterocyclylsulfinyl group may be a substituted heterocyclylsulfinyl group or an unsubstituted heterocyclylsulfinyl group. The heterocyclylsulfinyl group preferably has 1 to 20 carbon atoms. Examples of substituents of the substituted heterocyclylsulfinyl group include ionic, hydrophilic groups. Examples of the heterocyclylsulfinyl groups include a 4-pyridinesulfinyl group.

The dye represented by the formula (M-I) is preferably represented by the following formula (M-II).

Formula (M-II)

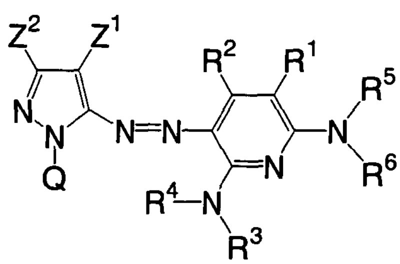

In the formula (M-II), $Z^1$ represents an electron-withdrawing group having a Hammett's substituent constant $\sigma_p$ of 0.20 or more. $Z^1$ is preferably an electron-withdrawing group having a constant $\sigma_p$ of 0.30 or more, more preferably an electron-withdrawing group having a constant $\sigma_p$ of 0.45 or more, and particularly preferably an electron-withdrawing group having a constant $\sigma_p$ of 0.60 or more, though the constant $\sigma_p$ is preferably 1.0 or less. Specific examples of such electron-withdrawing groups are described hereinafter. Preferred as the electron-withdrawing group are acyl groups having 2 to 20 carbon atoms, alkyloxycarbonyl groups having 2 to 20 carbon atoms, a nitro group, a cyano group, alkylsulfonyl groups having 1 to 20 carbon atoms, arylsulfonyl groups having 6 to 20 carbon atoms, carbamoyl groups having 1 to 20 carbon atoms, and halogenated alkyl groups having 1 to 20 carbon atoms, particularly preferred are a cyano group, alkylsulfonyl groups having 1 to 20 carbon atoms, and arylsulfonyl groups having 6 to 20 carbon atoms, and most preferred is a cyano group.

$R^1$, $R^2$, $R^5$, and $R^6$ in the formula (M-II) have the same meanings as those in the formula (M-I), respectively.

$R^3$ and $R^4$ each independently represent a hydrogen atom, an aliphatic group, an aromatic group, a heterocyclic group, an acyl group, an alkoxycarbonyl group, an aryloxycarbonyl group, a carbamoyl group, an alkyl or aryl sulfonyl group, or a sulfamoyl group. $R^3$ and $R^4$ are preferably a hydrogen atom, an aromatic group, a heterocyclic group, an acyl group, or an alkyl or aryl sulfonyl group, particularly preferably a hydrogen atom, an aromatic group, or a heterocyclic group, respectively.

$Z^2$ represents a hydrogen atom, an aliphatic group, an aromatic group, or a heterocyclic group.

Q represents a hydrogen atom, an aliphatic group, an aromatic group, or a heterocyclic group. Q is preferably composed of non-metallic atoms forming a 5- to 8-membered ring. The 5- to 8-membered ring may be substituted, and may be a saturated or unsaturated ring. Q is preferably an aromatic group or a heterocyclic group. Examples of preferred non-metallic atoms include a nitrogen atom, an oxygen atom, a sulfur atom, and a carbon atom. Specific examples of the rings include a benzene ring, a cyclopentane ring, a cyclohexane ring, a cycloheptane ring, a cycloctane ring, a cyclohexene ring, a pyridine ring, a pyrimidine ring, a pyrazine ring, a pyridazine ring, a triazine ring, an imidazole ring, a benzimidazole ring, an oxazole ring, a benzoxazole ring, a thiazole ring, a benzothiazole ring, an oxane ring, a sulfolane ring, and a thiane ring.

The above-described groups in the formula (M-II) may further have a substituent. Examples of the substituents include those described for the formula (M-I), examples of G, $R^1$ and $R^2$, and ionic, hydrophilic groups.

Examples of the electron-withdrawing groups having a Hammett's substituent constant $\sigma_p$ of 0.60 or more include a cyano group; a nitro group; alkylsulfonyl groups such as a methanesulfonyl group; and arylsulfonyl groups such as a benzenesulfonyl group.

Examples of the electron-withdrawing groups having a Hammett's substituent constant $\sigma_p$ of 0.45 or more include, in addition to the above groups, acyl groups such as an acetyl group; alkoxycarbonyl groups such as a dodecyloxycarbonyl group; aryloxycarbonyl groups such as a m-chlorophenoxycarbonyl group; alkylsulfinyl groups such as a n-propylsulfinyl group; arylsulfinyl groups such as a phenylsulfinyl group; sulfamoyl groups such as an N-ethylsulfamoyl group and an N,N-dimethylsulfamoyl group; and halogenated alkyl groups such as a trifluoromethyl group.

Examples of the electron-withdrawing groups having a Hammett's substituent constant $\sigma_p$ of 0.30 or more include, in addition to the above groups, acyloxy groups such as an acetoxy group; carbamoyl groups such as an N-ethylcarbamoyl group and an N,N-dibutylcarbamoyl group; halogenated alkoxy groups such as a trifluoromethyloxy group; halogenated aryloxy groups such as a pentafluorophenyloxy group; sulfonyloxy groups such as a methylsulfonyloxy group; halogenated alkylthio groups such as a difluoromethylthio group; aryl groups substituted with 2 or more electron-withdrawing groups having a constant $\sigma_p$ of 0.15 or more, such as a 2,4-dinitrophenyl group and a pentachlorophenyl group; and heterocyclic groups such as a 2-benzoxazolyl group, a 2-benzothiazolyl group and a 1-phenyl-2-benzimidazolyl group.

Examples of the electron-withdrawing groups having a Hammett's substituent constant $\sigma_p$ of 0.20 or more include halogen atoms in addition to the above groups.

In the azo dye of the formula (M-I) with a particularly preferable combination of the groups, $R^5$ and $R^6$ are preferably a hydrogen atom, an alkyl group, an aryl group, a heterocyclic group, a sulfonyl group, or an acyl group, more preferably a hydrogen atom, an aryl group, a heterocyclic group, or a sulfonyl group, and most preferably a hydrogen atom, an aryl group, or a heterocyclic group, respectively. It should be noted that at least one of $R^5$ and $R^6$ is not a hydrogen atom.

G is preferably a hydrogen atom, a halogen atom, an alkyl group, a hydroxyl group, an amino group, or an acylamino group, more preferably a hydrogen atom, a halogen atom, an amino group, or an acylamino group, and most preferably a hydrogen atom, an amino group, or an acylamino group.

A is preferably a pyrazole ring, an imidazole ring, an isothiazole ring, a thiadiazole ring, or a benzothiazole ring, more preferably a pyrazole ring or an isothiazole ring, and most preferably a pyrazole ring.

$B^1$ and $B^2$ are preferably $=CR^1-$ and $-CR^2=$, and $R^1$ and $R^2$ are preferably a hydrogen atom, an alkyl group, a halogen atom, a cyano group, a carbamoyl group, a carboxyl group, a hydroxyl group, an alkoxy group, or an alkoxycarbonyl group, and more preferably a hydrogen atom, an alkyl group, a carboxyl group, a cyano group, or a carbamoyl group, respectively.

Examples of preferred cyan dyes include the dyes represented by the following formula (C-I).

Formula (C-I)

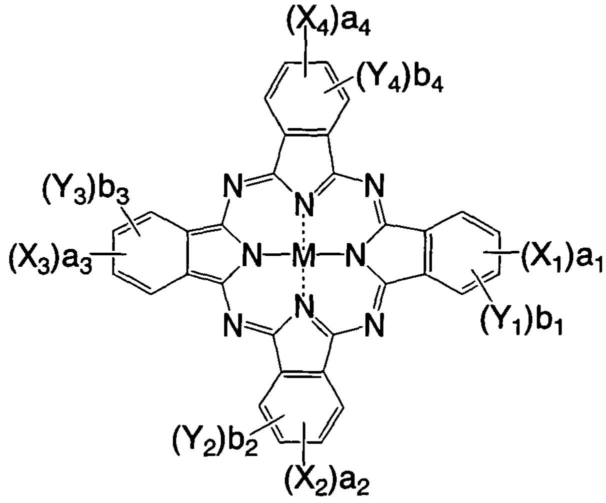

In the formula (C-I), $X_1$, $X_2$, $X_3$ and $X_4$ each independently represent an electron-withdrawing group having a Hammett's substituent constant $\sigma_p$ of 0.40 or more. $Y_1$, $Y_2$, $Y_3$ and $Y_4$ each independently represent a monovalent substituent. M represents a hydrogen atom, a metal atom, an oxide of a metal atom, a hydroxide of a metal atom, or a halide of a metal atom. $a_1$ to $a_4$ and $b_1$ to $b_4$ are the numbers of $X_1$ to $X_4$ and $Y_1$ to $Y_4$, respectively. $a_1$ to $a_4$ each independently represent an integer from 0 to 4, and $b_1$ to $b_4$ each independently represent an integer from 0 to 4. The sum of $a_1$ to $a_4$ is 2 or more, preferably 3 or more, and it is most preferred that $a_1$ to $a_4$ satisfy $a_1=a_2=a_3=a_4=1$. In the case where the cyan dye is water-soluble, the cyan dye preferably has a substituent of an ionic, hydrophilic group on $X_1$, $X_2$, $X_3$, $X_4$, $Y_1$, $Y_2$, $Y_3$, or $Y_4$. The ionic, hydrophilic group may be a sulfo group, a carboxyl group, a phosphono group, a quaternary ammonium group, etc.

The phthalocyanine dye represented by the formula (C-I) is more preferably represented by the following formula (C-II). The phthalocyanine dyes of the formula (C-II) are described in detail below.

Formula (C-II)

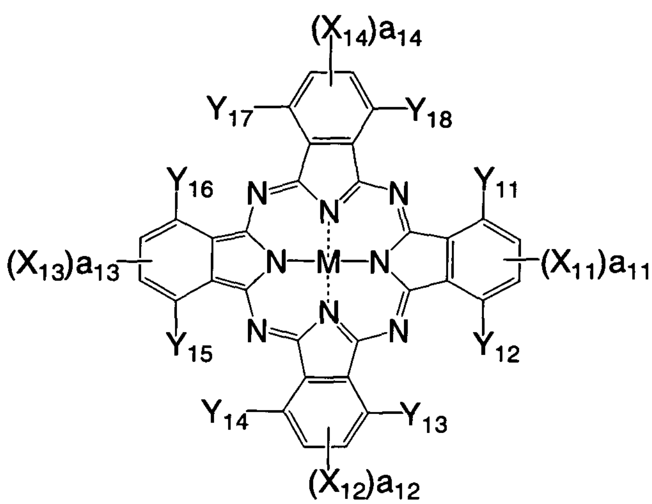

In the formula (C-II), $X_{11}$ to $X_{14}$ each independently represent -SO-Z, $-SO_2$-Z, $-SO_2NR_1R_2$, a sulfo group,

-$CONR_1R_2$, or -$CO_2R_1$. $Y_{11}$ to $Y_{18}$ each independently represent a monovalent substituent. M represents a hydrogen atom, a metal atom, an oxide of a metal atom, a hydroxide of a metal atom or a halide of a metal atom. $a_{11}$ to $a_{14}$ are the numbers of $X_{11}$ to $X_{14}$ respectively, and each independently represent 1 or 2.

Z independently represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. $R_1$ and $R_2$ each independently represent a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group.

In the formula (C-II), $a_{11}$ to $a_{14}$ each independently represent 1 or 2, preferably satisfy $4 \le a_{11}+a_{12}+a_{13}+a_{14} \le 6$, and particularly preferably satisfy $a_{11}=a_{12}=a_{13}=a_{14}=1$.

$X_{11}$, $X_{12}$, $X_{13}$ and $X_{14}$ may be the same groups. $X_{11}$, $X_{12}$, $X_{13}$ and $X_{14}$ may be similar groups having different moieties, for example, $X_{11}$, $X_{12}$, $X_{13}$ and $X_{14}$ may be -$SO_2$-Z groups, Z's being different from each other. Further, $X_{11}$, $X_{12}$, $X_{13}$ and $X_{14}$ may be different groups, and for example, both of -$SO_2$-Z and -$SO_2NR_1R_2$ may be connected to the dye.

Particularly preferred combinations of the groups in the phthalocyanine dye represented by the formula (C-II) are described below.

Each of $X_{11}$ to $X_{14}$ is preferably -SO-Z, -$SO_2$-Z, -$SO_2NR_1R_2$, or $CONR_1R_2$, particularly preferably -$SO_2$-Z or -$SO_2NR_1R_2$, most preferably -$SO_2$-Z.

Each Z is preferably a substituted or unsubstituted alkyl group, a substituted or unsubstituted aryl group, or a substituted or unsubstituted heterocyclic group, and most preferably a substituted alkyl group, a substituted aryl group, or a substituted heterocyclic group. In particular, it is preferred that Z has an asymmetric carbon atom and the dye is used as a racemic body to increase the solubility of the dye or the stability of the ink. Further, Z preferably has a hydroxyl group, an ether group, an ester group, a cyano group, an amide group, or a sulfonamide group, because the groups can increase the association of the dye to improve the fastness.

Each of $R_1$ and $R_2$ is preferably a hydrogen atom, a substituted or unsubstituted alkyl group, a substituted or unsubstituted aryl group, or a substituted or unsubstituted heterocyclic group, most preferably a hydrogen atom, a substituted alkyl group, a substituted aryl group, or a substituted heterocyclic group. Incidentally, it is not preferred that both $R_1$ and $R_2$ are a hydrogen atom. In particular, it is preferred that the substituent thereof has an asymmetric carbon atom and the dye is used as a racemic body from the viewpoint of increasing the solubility of the dye or the stability of the ink. Further, the substituent preferably has a hydroxyl group, an ether group, an ester group, a cyano group, an amide group, or a sulfonamide group, because the groups can increase the association of the dye to improve the fastness.

Each of $Y_{11}$ to $Y_{18}$ is preferably a hydrogen atom, a halogen atom, an alkyl group, an aryl group, a cyano group, an alkoxy group, an amide group, a ureido group, a sulfonamide group, a carbamoyl group, a sulfamoyl group, an alkoxycarbonyl group, a carboxyl group, or a sulfo group, particularly preferably a hydrogen atom, a halogen atom, a cyano group, a carboxyl group, or a sulfo group, most preferably a hydrogen atom. $a_{11}$ to $a_{14}$ each independently represent preferably 1 or 2, and particularly preferably 1. M is a hydrogen atom, a metal atom, or an oxide of a metal atom, a hydroxide of a metal atom or a halide of a metal atom, particularly preferably Cu, Ni, Zn, or Al, and most preferably Cu.

In the case where the phthalocyanine dye represented by the formula (C-I) or (C-II) is water-soluble, the dye preferably has an ionic, hydrophilic group. Examples of the ionic, hydrophilic groups include a sulfo group, a carboxyl group, a phosphono group, quaternary ammonium groups, etc. The ionic, hydrophilic group is preferably a carboxyl group, a phosphono group, or a sulfo group, particularly preferably a carboxyl group or a sulfo group. The carboxyl group, the phosphono group and the sulfo group may form a salt, and examples of counter ions forming the salt include ammonium ions; alkaline metal ions such as a lithium ion, a sodium ion and a potassium ion; and organic cations such as a tetramethylammonium ion, a tetramethylguanidium ion and a tetramethylphosphonium ion. The counter ion is preferably an alkaline metal ion, particularly preferably a lithium ion, because lithium salts can increase the solubility of the dye to improve the stability of the ink.

The phthalocyanine dye preferably contains at least two ionic, hydrophilic groups per one molecule, and particularly preferably contains at least two sulfo and/or carboxyl groups.

In the dye represented by the formula (C-II), it is preferable that at least one of the substituents is the above-mentioned preferred one. It is more preferable that two or more of the substituents are the above-mentioned preferred ones, and it is most preferable that all the substituents are the above-mentioned preferred ones.

The phthalocyanine dye preferably has a chemical structure in which at least one electron-withdrawing group such as a sulfinyl group, a sulfonyl group and a sulfamoyl group is introduced to each of 4 benzene rings of the phthalocyanine structure such that the sum of constants $\sigma_p$ of the substituents on the phthalocyanine structure is 1.6 or more.

In general, the phthalocyanine dyes represented by the formula (C-I) are inevitably obtained as a mixture of

analogues depending on the synthesis method. The analogues have different numbers of the substituents $X_n$ (n = 1 to 4) and $Y_m$ (m = 1 to 4) at different positions. Thus, the phthalocyanine dyes are often represented by a statistical average formula of the analogue mixture. The mixture of the analogues can be classified into the following three types. In the invention, it has been found that particular mixtures of such analogues are preferable. The mixtures of the analogues of the phthalocyanine dyes represented by the formula (C-I) or (C-II) are classified into the following three types.

(1) β-position substitution type mixture: a mixture of phthalocyanine dyes having particular substituents at 2 and/or 3-position, 6 and/or 7-position, 10 and/or 11-position, and 14 and/or 15-position.
(2) α-position substitution type mixture: a mixture of phthalocyanine dyes having particular substituents at 1 and/or 4-position, 5 and/or 8-position, 9 and/or 12-position, and 13 and/or 16-position.
(3) α, β-position random substitution type mixture: a mixture of phthalocyanine dyes having particular substituents at any one or more of 1 to 16-positions without regularity.

In this invention, the mixtures of the phthalocyanine dyes having different structures, particularly different substitution positions, are described using the terms "β-position substitution type mixture", "α-position substitution type mixture", and "α, β-position random substitution type mixture".

The phthalocyanine dyes used in the invention can be synthesized by a combination of methods described or cited in Hiroyoshi Shirai and Nagao Kobayashi, Phthalocyanine *-Kagaku to Kino-,* pages 1 to 62, Industrial Publishing & Consulting, Inc.; C. C. Leznoff and A. B. P. Lever, *Phthalocyanines-Properties and Applications,* pages 1 to 54, VCH; etc., and methods similar thereto.

For example, the phthalocyanine dyes represented by the formula (C-I) may be synthesized by sulfonation of an unsubstituted phthalocyanine compound, and sulfonyl chlorination and amidation, as described in WO 00/17275, WO 00/08103, WO 00/08101, WO 98/41853, JP-A No. 10-36471, etc. In this method, all the positions of the phthalocyanine nucleus can be sulfonated, and the degree of the sulfonation is hardly controlled. In the case where sulfo groups are introduced as above, the positions and the number of the sulfo groups introduced cannot be predetermined, and a mixture of derivatives having different numbers of the sulfo groups at different positions is inevitably obtained as a product. Therefore, when the phthalocyanine dyes are synthesized from the mixture of the derivatives, the α, β-position random substitution type mixture, which contains the phthalocyanine dyes having different numbers of substituents at different positions, is obtained because the number and the positions of sulfamoyl groups on the heterocycle cannot be controlled.

As described above, the oxidation potential of the dye can be increased by introducing a large number of the electron-withdrawing groups such as a sulfamoyl group to the phthalocyanine nucleus to improve the ozone resistance. In the case where the phthalocyanine dyes are synthesized by the above method, the resultant mixture inevitably contains a dye which has a small number of the electron-withdrawing groups and thus has a lower oxidation potential. Thus, the phthalocyanine dyes are preferably synthesized by a method capable of inhibiting the formation of the dye having the lower oxidation potential to increase the ozone resistance.

In contrast, the phthalocyanine dyes represented by the formula (C-II) can be synthesized, for example, by reacting a phthalonitrile derivative (Compound P) and/or a diiminoisoindoline derivative (Compound Q) represented by the following formulae with a metal compound represented by the following formula (C-III). Further, the phthalocyanine compound represented by the formula (C-II) can be derived from a tetrasulfophthalocyanine compound, which can be synthesized by reaction between 4-sulfophthalic acid derivative (Compound R) represented by the following formula and a metal compound represented by the formula (C-III).

Compound P

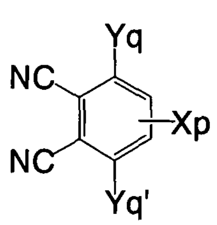

Compound Q

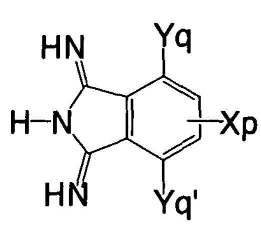

Compound R

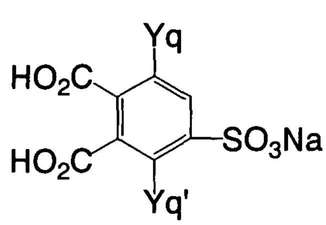

In the formulae, Xp corresponds to $X_1$, $X_2$, $X_3$, or $X_4$ in the formula (C-II). Yq and Yq' corresponds to $Y_{11}$, $Y_{12}$, $Y_{13}$, $Y_{14}$, $Y_{15}$, $Y_{16}$, $Y_{17}$, or $Y_{18}$ in the formula (C-II), respectively.

Formula (C-III): $M\text{-}(Y)_d$

M in the formula (C-III) has the same meanings as M in the formula (C-II). Y represents a monovalent or divalent ligand such as a halogen atom, an acetate anion, an acetylacetonate, and an oxygen atom. d represents an integer from 1 to 4.

A predetermined number of desired substituents can be introduced to the phthalocyanine dye by the synthesis methods. Particularly, in the case where a large number of the electron-withdrawing groups are introduced to increase the oxidation potential, the synthesis methods are remarkably effective as compared with the conventional methods for the dyes of the formula (C-I).

In the above-mentioned synthesis methods, the phthalocyanine dyes represented by the formula (C-II) are generally obtained as a β-position substitution type mixture containing the compounds represented by the following formulae (a)-1 to (a)-4, which are isomers having Xp's at different positions.

Formula (a)-1

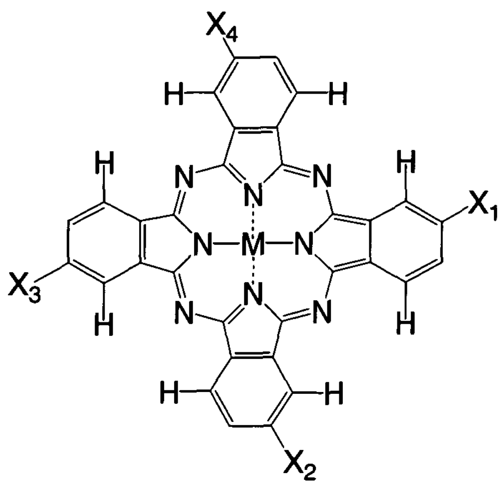

Formula (a)-2

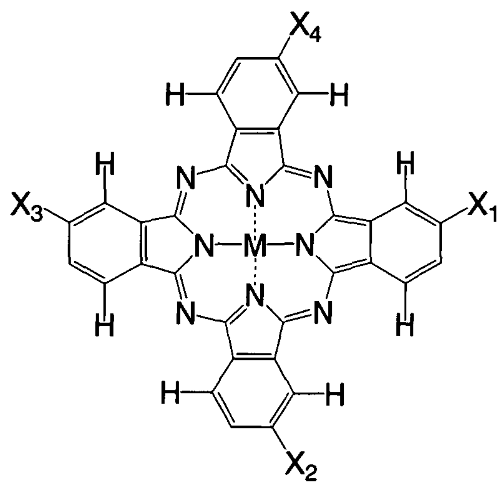

Formula (a)-3

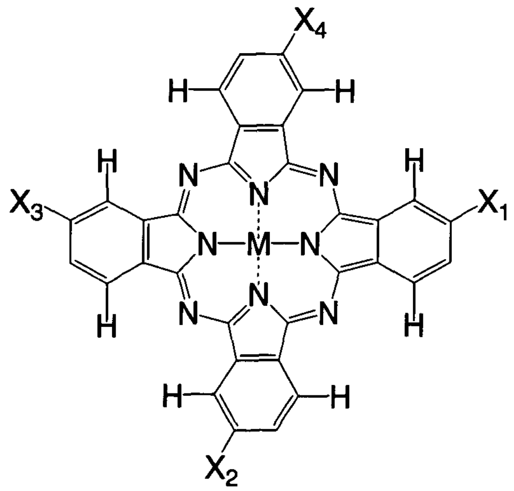

Formula (a)-4

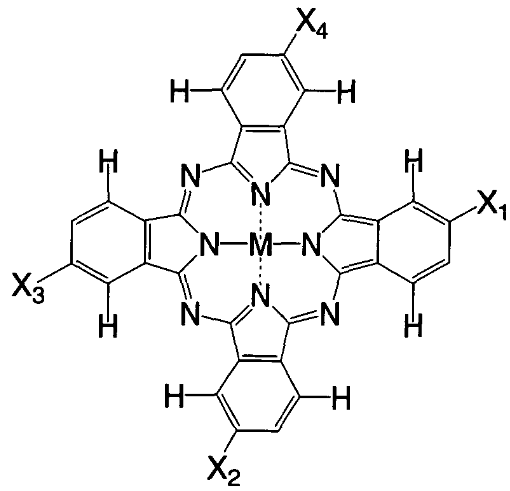

When Xp's are the same groups in the above synthesis methods, the β-position substitution type mixture of the phthalocyanine dyes, whose $X_{11}$, $X_{12}$, $X_{13}$ and $X_{14}$ are the same groups, is obtained. On the other hand, when Xp's are different groups, the phthalocyanine dyes, whose $X_{11}$, $X_{12}$, $X_{13}$ and $X_{14}$ are different groups or similar groups having different moieties, are synthesized. It is particularly preferred that the phthalocyanine dyes represented by the formula (C-II) have different electron-withdrawing groups to control the solubility and the association of the dyes, the temporal stability of the ink, etc.

In the invention, it has been found that the oxidation potential of higher than 0.8 V (vs SCE) is extremely important for increasing the fastness in any substitution type compound. The finding could not be expected from the related art. Further, the β-position substitution type mixtures tended to be more excellent in the color hue, the light fastness, the ozone gas resistance, etc. than the α, β-position random substitution type mixtures, though the cause therefor is still left unknown in detail.

The phthalocyanine dyes represented by the formula (C-I) or (C-II) may be synthesized according to the above-mentioned patent references, and may be synthesized by a method described in JP-A Nos. 2002-302623, 2002-294097, 2002-249677 and 2003-012952. The starting materials, the dye intermediates, and the synthetic pathways for the phthalocyanine dyes are not restricted by the patent references.

The magenta dye used in the invention has the oxidation potential of higher than 0.8 V. The phthalocyanine dye, widely used as a cyan dye, generally forms an association, so that it can keep a sufficient fastness even if the oxidation potential thereof is slightly low. On the other hand, the magenta dye does not form an association, whereby it is preferable that the oxidation potential thereof is made more than that of the cyan dye to increase the fastness.

Examples of preferred dyes for the invention are illustrated below to explain the invention in more detail without intention of restricting the invention. The following values in parentheses each represent an oxidation potential of each dye.

First, specific examples Y-1 to Y-35 of the yellow dyes usable in the invention are illustrated below.

Y-1

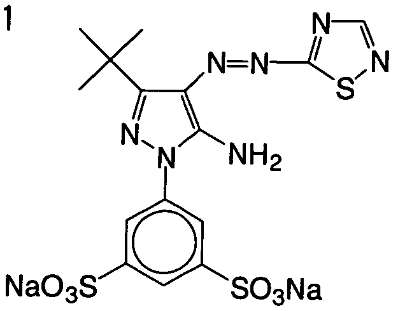

(1. 17)

Y-2

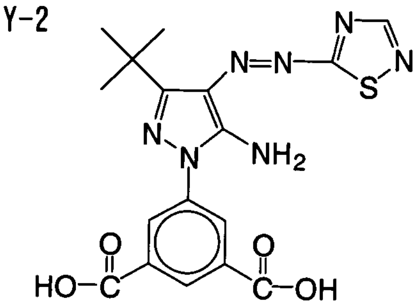

(1. 28)

Y-3

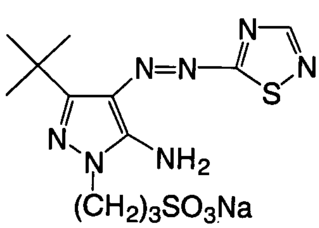

(1. 20)

Y-4

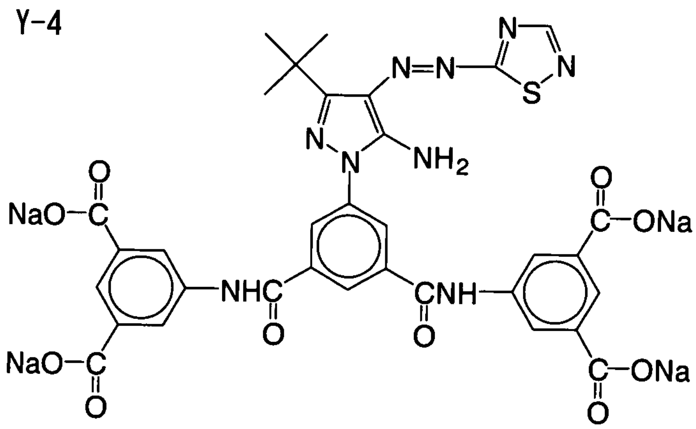

(1. 27)

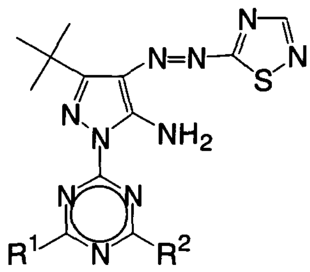

| Compound No. | $R^1$ | $R^2$ | Oxidation Potential (V) |
|---|---|---|---|
| Y-5 | 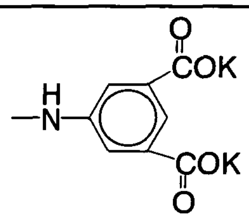 | 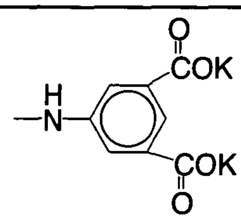 | 1.37 |
| Y-6 | $-NH(CH_2)_2SO_3Li$ | $-NH(CH_2)_2SO_3Li$ | 1.34 |
| Y-7 | 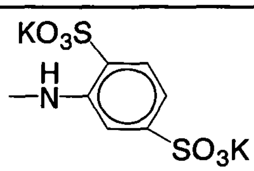 | 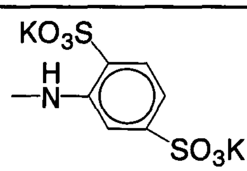 | 1.35 |
| Y-8 | 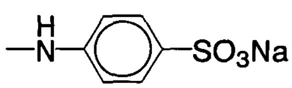 | 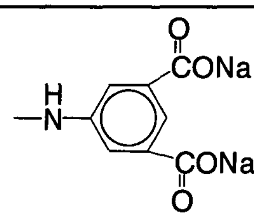 | 1.36 |
| Y-9 | $-NH(CH_2)_2SO_3Li$ | 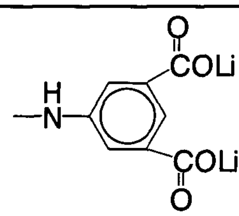 | 1.35 |
| Y-10 | 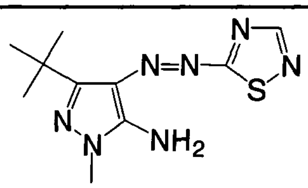 | 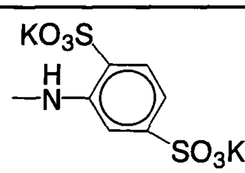 | 1.39 |

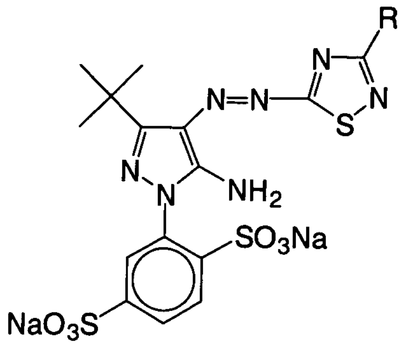

Y-11 R = —S(CH$_2$)$_2$SO$_3$Na (1. 20)

Y-12 R = —Me (1. 19)

Y-13 R = —H (1. 20)

Y-14 R = —Ph (1. 18)

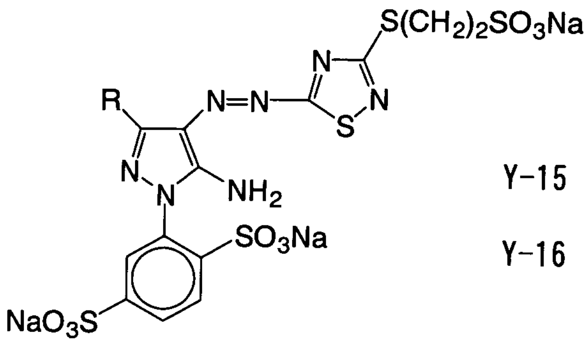

Y-15 R = —Ph (1. 16)

Y-16 R = —OC$_2$H$_5$ (1. 16)

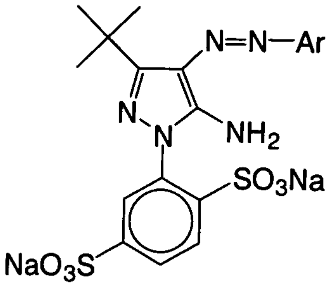

Y-17 Ar = 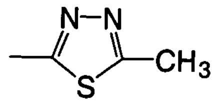 (1. 14)

Y-18 Ar = 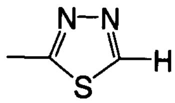 (1. 20)

Y-19 Ar = 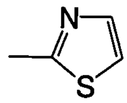 (1. 05)

Y-20 Ar = 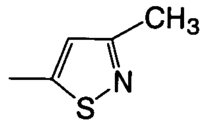 (1. 09)

Y-21 Ar = 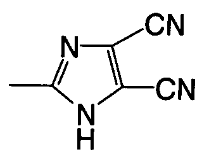 (1. 00)

Y-22 Ar = 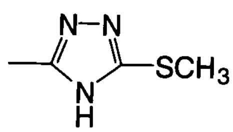 (1. 00)

Y-23

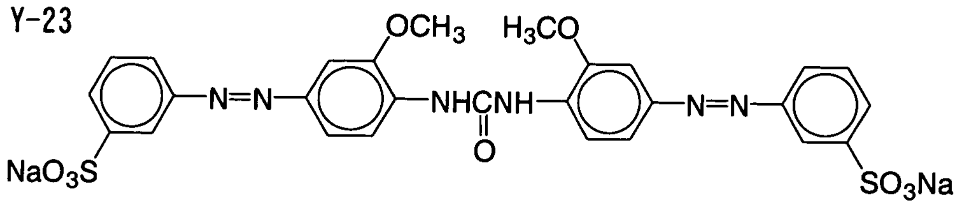

(1. 16)

Y-24

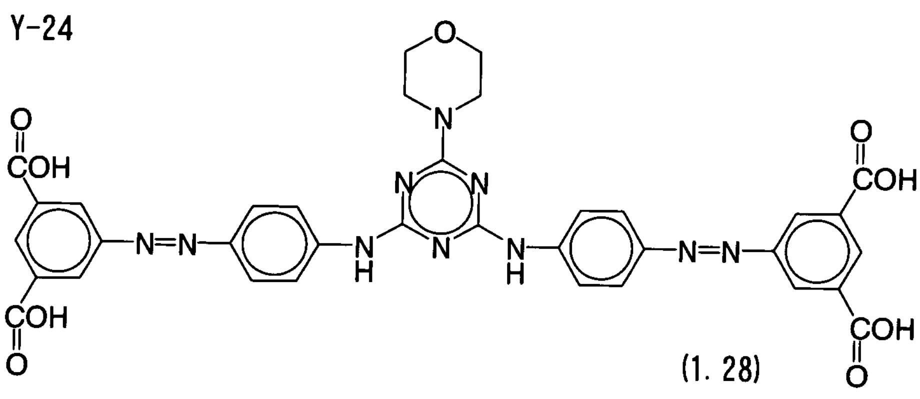

(1. 28)

Y-25

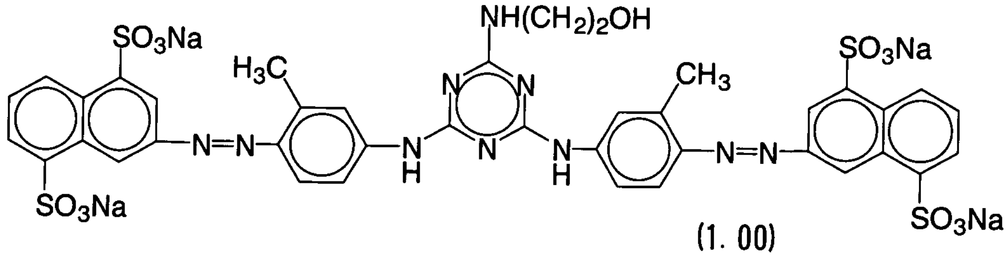

(1. 00)

Y-26

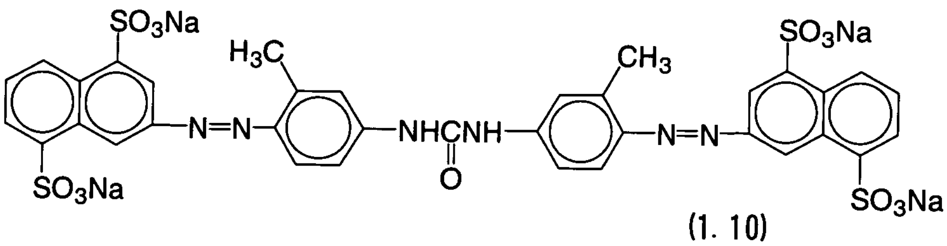

(1. 10)

Y-27

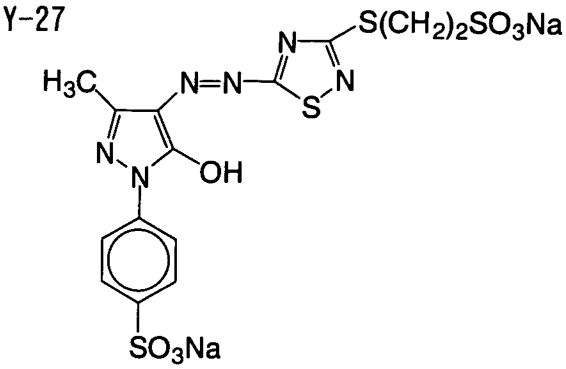

(1. 01)

Y-28

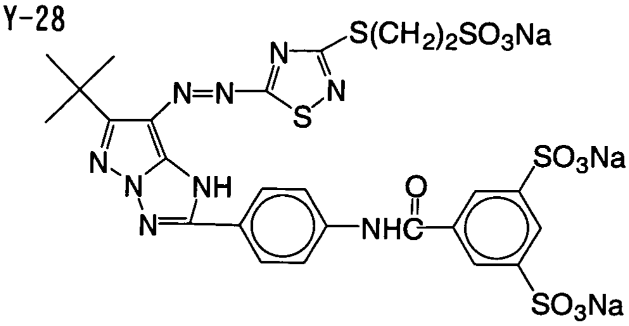

(1. 32)

Y-29

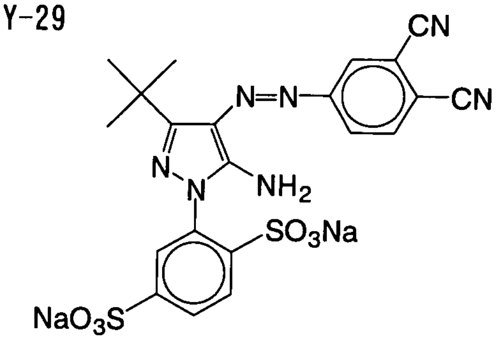

(1. 01)

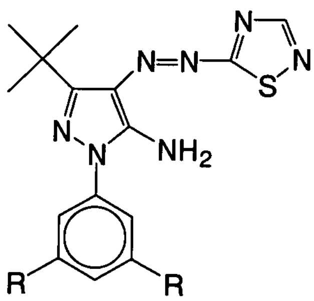

Y-30 R = —CON$(C_4H_9)_2$ (1. 20)

Y-31 R = —$CO_2C_8H_{17}$ (1. 21)

Y-32

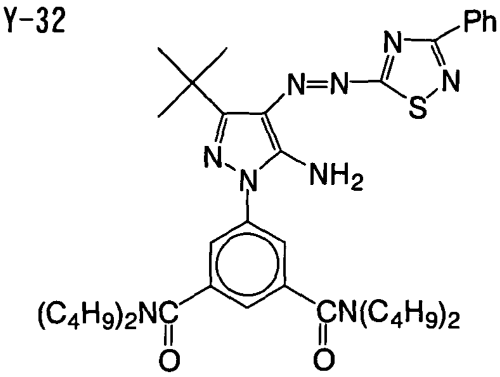

(1. 21)

Y-33

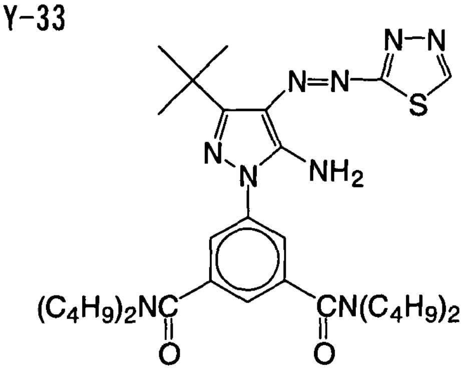

(1. 19)

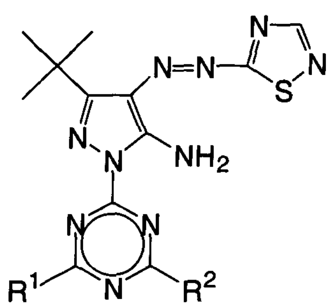

Y-34

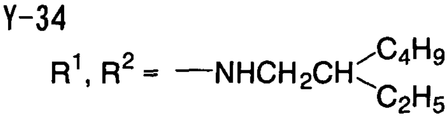

(1. 37)

Y-35

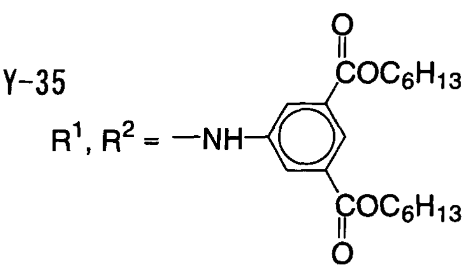

(1. 39)

Then, specific examples M-1 to M-26 of the magenta dyes usable in the invention are illustrated below.

M-1

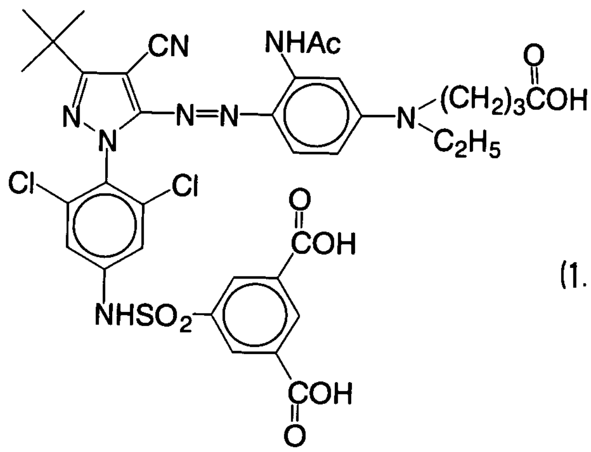

(1. 15)

M-2

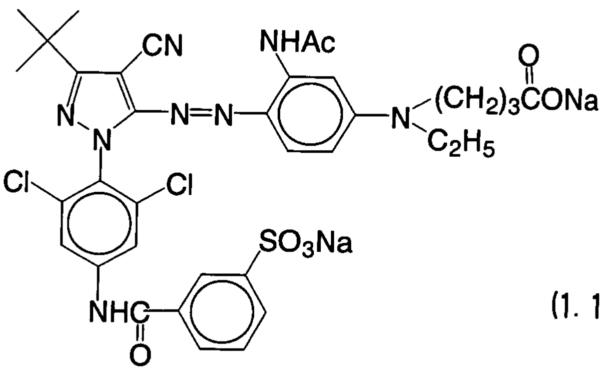

(1. 15)

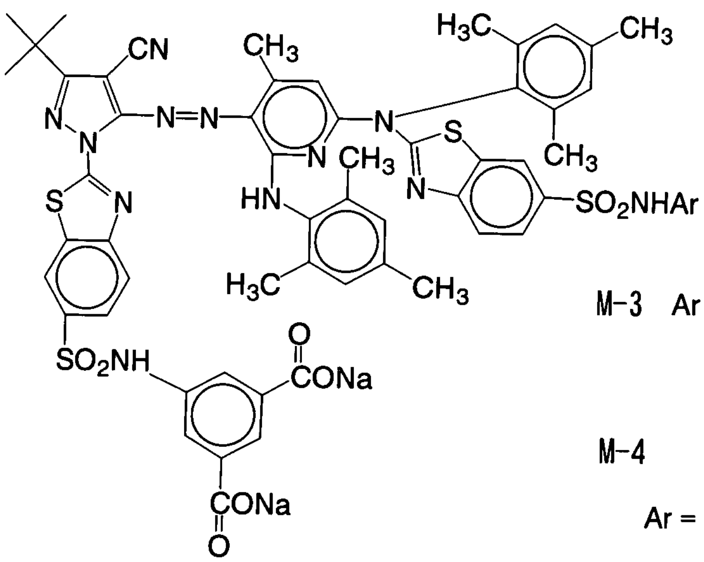

M-3 Ar =

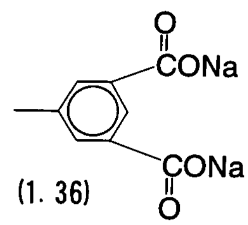

(1. 36)

M-4

Ar =

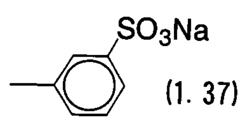

(1. 37)

M-5

Ar =

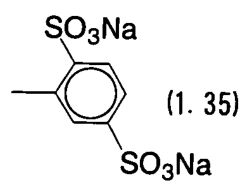

(1. 35)

M-6

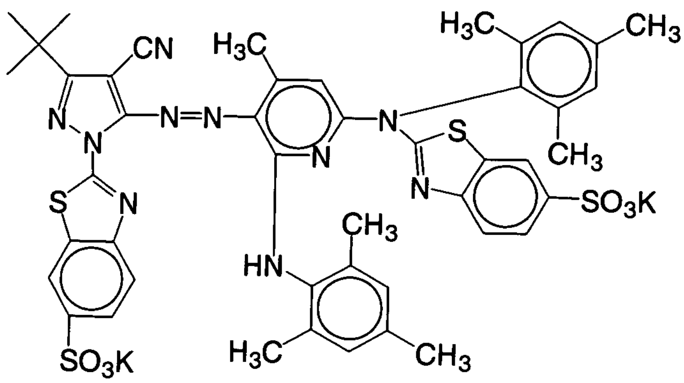

(1. 37)

M-7

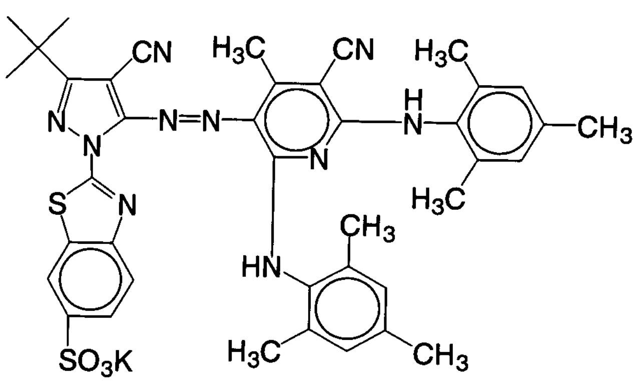

(1. 32)

M-8

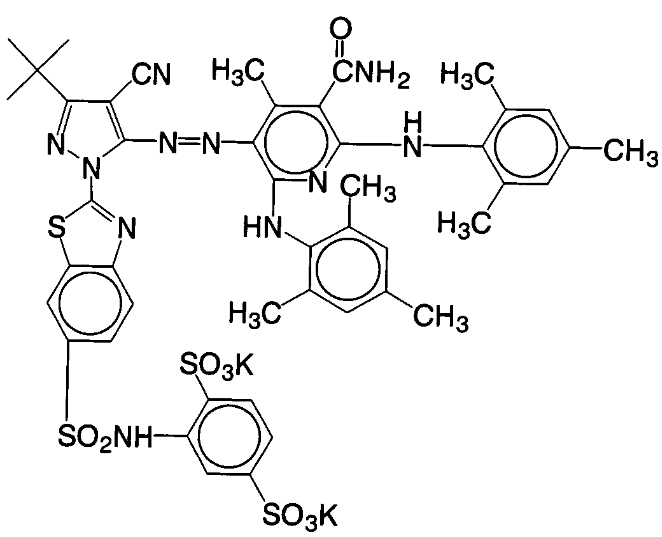

(1. 27)

M-9

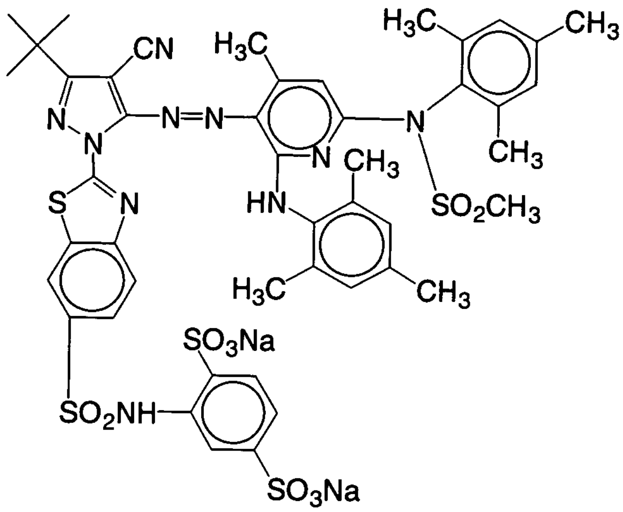

(1. 38)

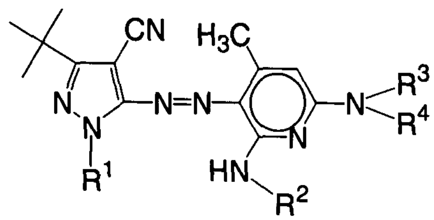

| Compound No. | $R^1$ | $R^2$ | $R^3$ | $R^4$ | Oxidation Potential (V) |
|---|---|---|---|---|---|
| M-10 | 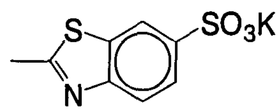 | 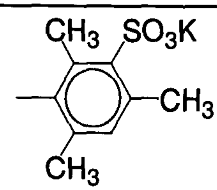 | 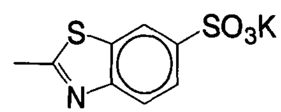 | 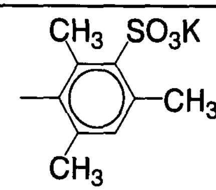 | 1.38 |
| M-11 | 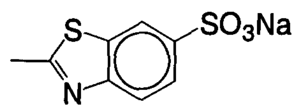 | 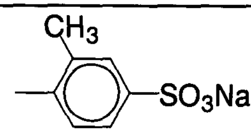 | 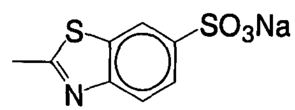 | 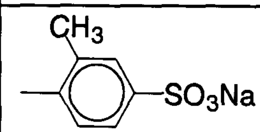 | 1.39 |
| M-12 | 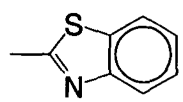 | 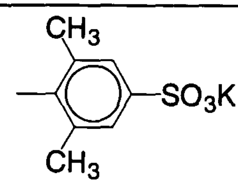 | 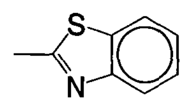 | 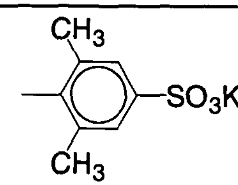 | 1.40 |
| M-13 | 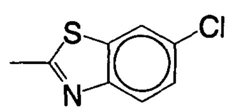 | 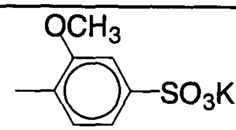 | 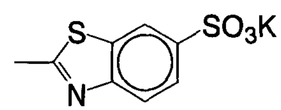 | 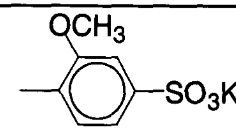 | 1.39 |

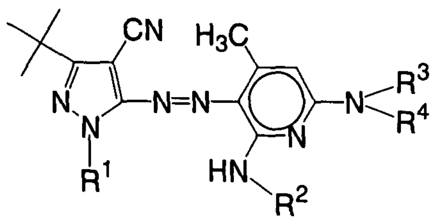

| Compound No. | $R^1$ | $R^2$ | $R^3$ | $R^4$ | Oxidation Potential (V) |
|---|---|---|---|---|---|
| M-14 | 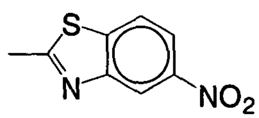 | 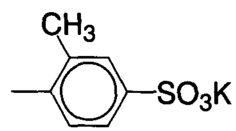 | 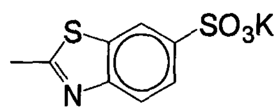 | 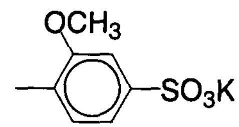 | 1.40 |
| M-15 | 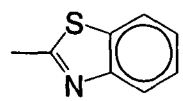 | 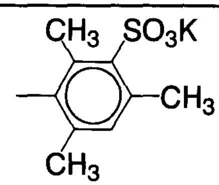 | 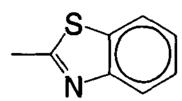 | 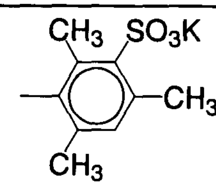 | 1.37 |
| M-16 | 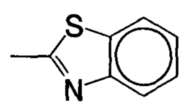 | 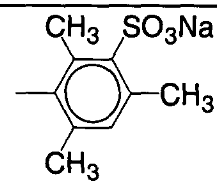 | 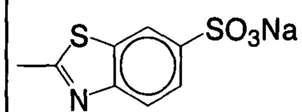 | 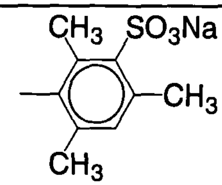 | 1.36 |
| M-17 | 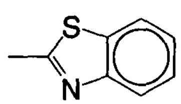 | 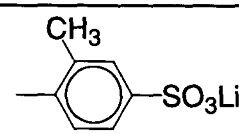 | 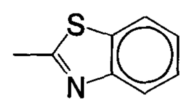 | 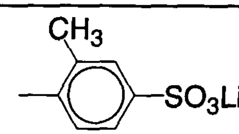 | 1.38 |

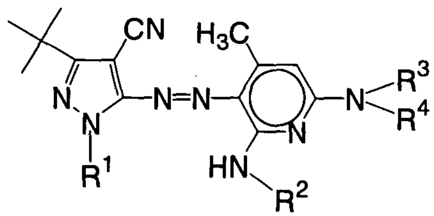

| Compound No. | $R^1$ | $R^2$ | $R^3$ | $R^4$ | Oxidation Potential (V) |
|---|---|---|---|---|---|
| M-18 | 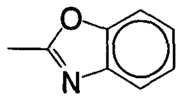 | 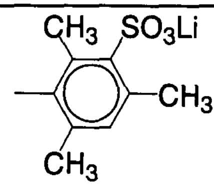 | 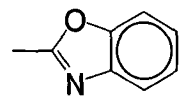 | 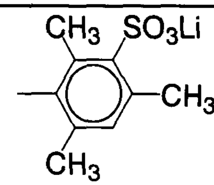 | 1.35 |
| M-19 | 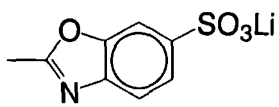 | 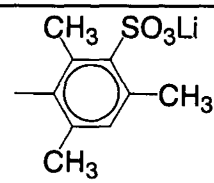 | 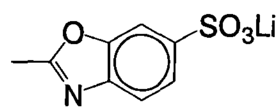 | 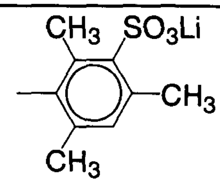 | 1.37 |
| M-20 | 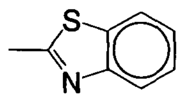 | 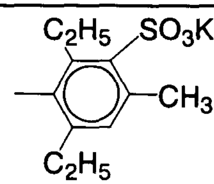 | $-SO_2CH_3$ | 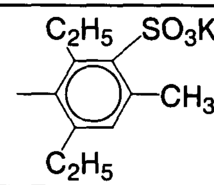 | 1.38 |

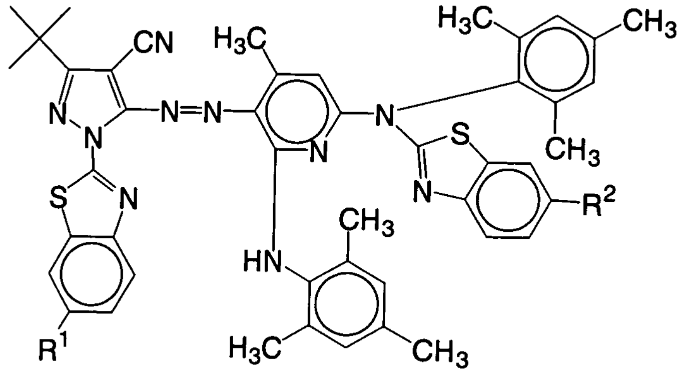

M-21

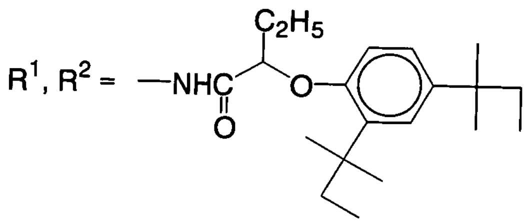

(1. 41)

M-22

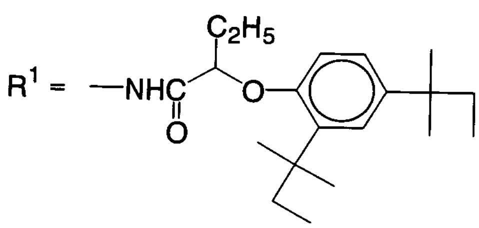

,

$R^2$ = H

(1. 38)

M-23

$R^1$ = H ,

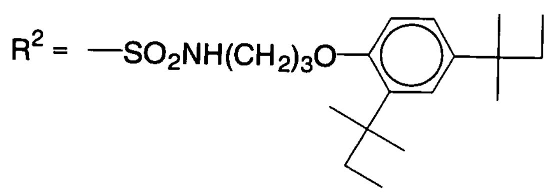

(1. 41)

M-24

$R^1$, $R^2$ = 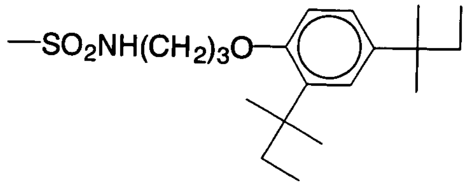

(1. 43)

M-25

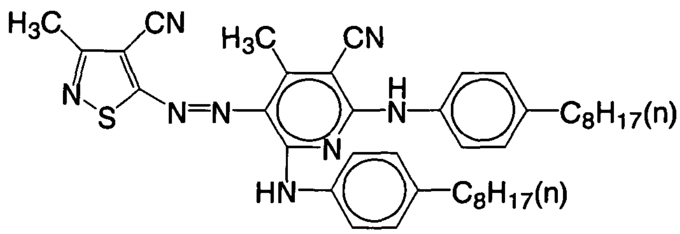

(1. 35)

M-26

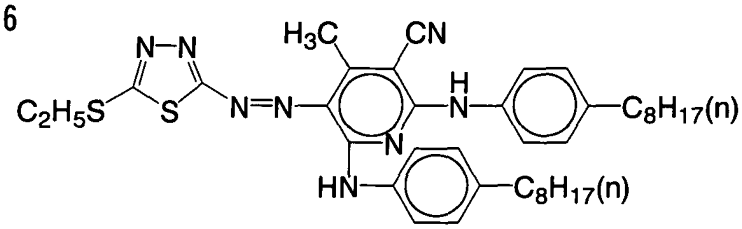

(1. 39)

Specific examples C-1 to C-50 of the cyan dyes usable in the invention are illustrated below.

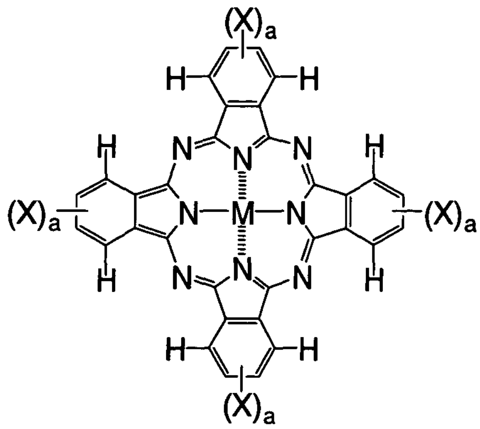

| Compound No. | M | X (σP) | a | Oxidation Potential (V) |
|---|---|---|---|---|
| C-1 | Cu | 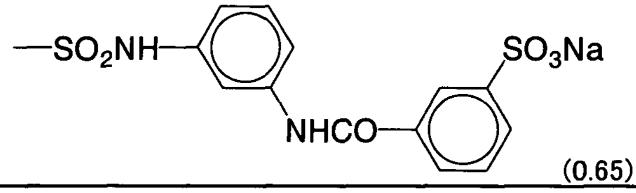 (0.65) | 1 | 1.24 |
| C-2 | Cu | 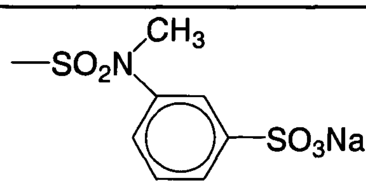 (0.65) | 1 | 1.19 |
| C-3 | Cu | 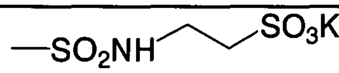 (0.65) | 1 | 1.18 |
| C-4 | Cu | 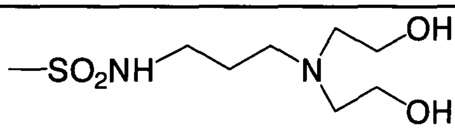 · HCl (0.65) | 1 | 1.29 |
| C-5 | Cu | 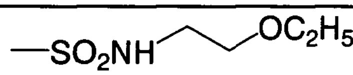 (0.65) | 1 | 1.23 |
| C-6 | Cu | 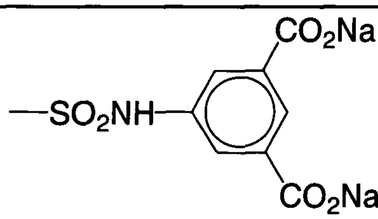 (0.65) | 1 | 1.21 |
| C-7 | Cu | 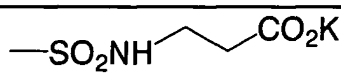 (0.65) | 1 | 1.19 |
| C-8 | Cu | 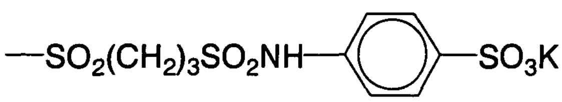 (0.77) | 1 | 1.35 |

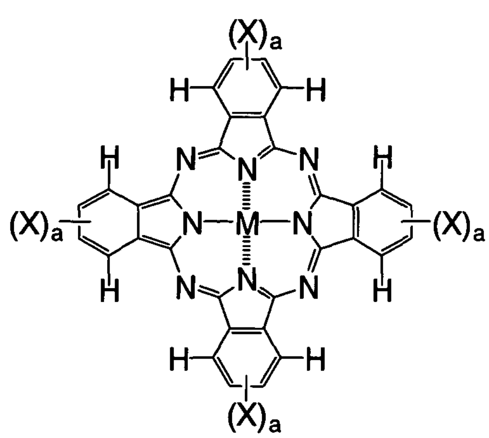

| Compound No. | M | X ($\sigma_p$) | a | Oxidation Potential (V) |
|---|---|---|---|---|
| C-9 | Cu | 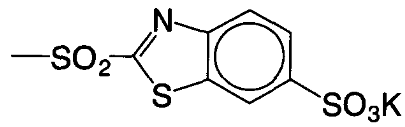 (—) | 1 | 1.36 |
| C-10 | Cu | 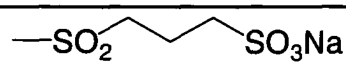 (0.77) | 2 | 1.39 |
| C-11 | Cu | 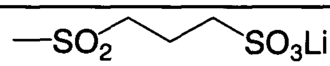 | 1 | 1.29 |
| C-12 | Cu | 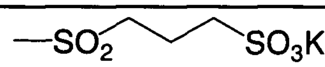 | 1 | 1.29 |
| C-13 | Cu | 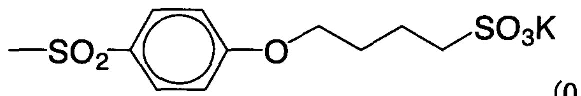 (0.68) | 1 | 1.29 |
| C-14 | Cu | 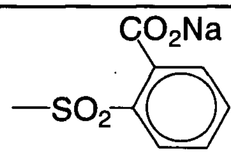 (0.68) | 1 | 1.27 |

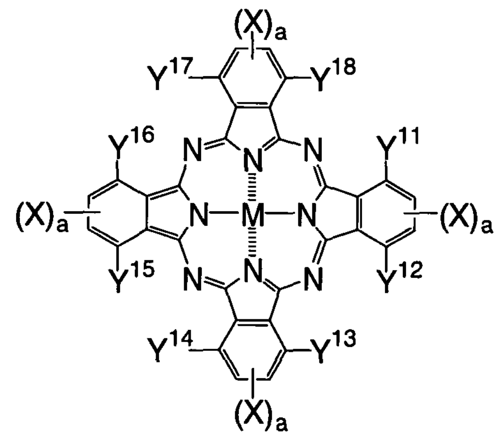

In the table, H and Cl are not in order in each combination of ($Y^{11}$, $Y^{12}$), ($Y^{13}$, $Y^{14}$), ($Y^{15}$, $Y^{16}$), and ($Y^{17}$, $Y^{18}$).

| Compound No. | M | X ($\sigma_p$) | $Y^{11}$, $Y^{12}$ | $Y^{13}$, $Y^{14}$ | $Y^{15}$, $Y^{16}$ | $Y^{17}$, $Y^{18}$ | a | Oxidation Potential (V) |
|---|---|---|---|---|---|---|---|---|
| C-15 | Cu | 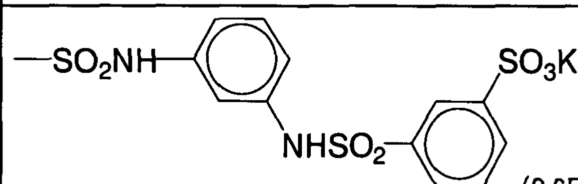 (0.65) | H , Cl | H , Cl | H , Cl | H , Cl | 1 | 1.24 |
| C-16 | Cu | 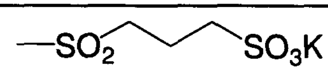 (0.77) | H , Cl | H , Cl | H , Cl | H , Cl | 1 | 1.38 |

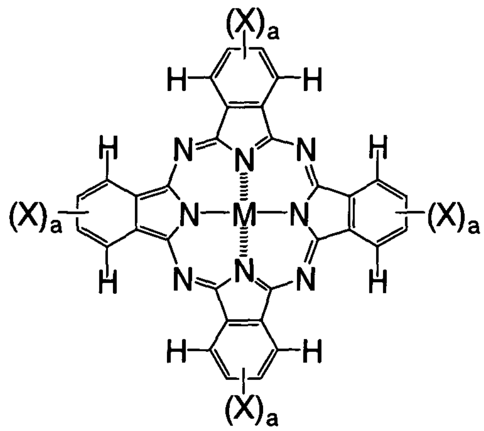

| Compound No. | M | X (σp) | a | Oxidation Potential (V) |
|---|---|---|---|---|
| C-17 | Cu | 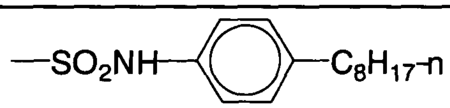 (0.65) | 1 | 1.23 |
| C-18 | Cu | 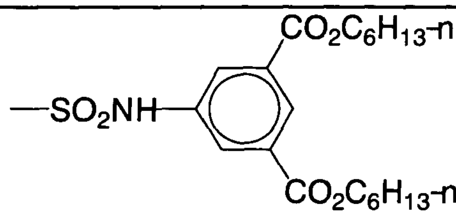 (0.65) | 1 | 1.25 |
| C-19 | Cu | 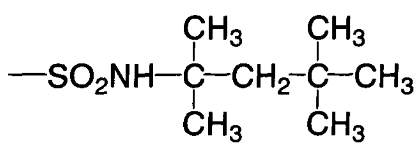 (0.65) | 1 | 1.22 |
| C-20 | Cu | 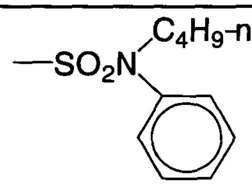 (0.65) | 1 | 1.21 |
| C-21 | Cu | 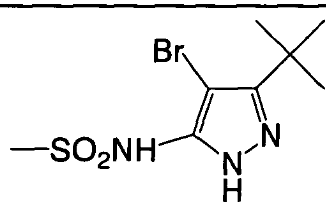 (0.65) | 1 | 1.25 |
| C-22 | Cu | 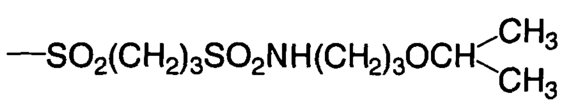 | 1 | 1.27 |

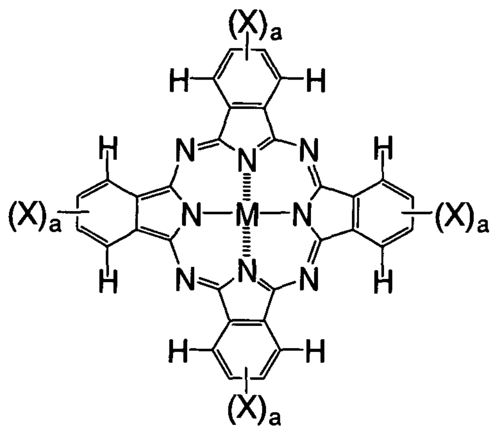

| Compound No. | M | X (σP) | a | Oxidation Potential (V) |
|---|---|---|---|---|
| C-23 | Cu | 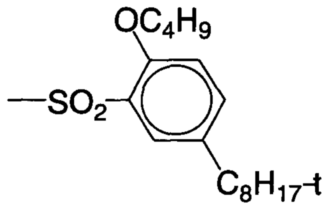 (0.68) | 1 | 1.28 |
| C-24 | Cu | 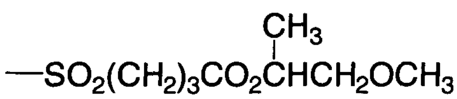 | 1 | 1.29 |
| C-25 | Cu | $-SO_2-C_{12}H_{25}$-n (0.77) | 1 | 1.28 |
| C-26 | Cu | 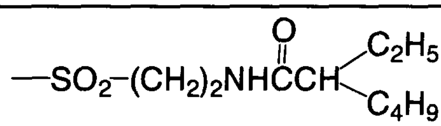 (0.77) | 1 | 1.28 |
| C-27 | Cu | $-SO_2-(CH_2)_2CO_2C_6H_{13}$-n (0.77) | 1 | 1.31 |
| C-28 | Cu | $-SO_2-C_8H_{17}$-n (0.77) | 2 | 1.36 |

$$Cu-Pc-(SO_2R^1)_m\,(SO_2R^2)_n$$

| Compound No. | $R^1$ ($\sigma_P$) | $R^2$ ($\sigma_P$) | m : n | Oxidation Potential (V) |
|---|---|---|---|---|
| C-29 | $-C_{12}H_{25}(n)$ (0.77) | $-C_8H_{17}(n)$ | 1 : 3 | 1.28 |
| C-30 | $-C_8H_{17}(n)$ (0.77) | 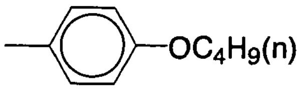 (0.68) | 2 : 2 | 1.29 |
| C-31 | $-(CH_2)_2CO_2C_6H_{13}(n)$ (0.77) | 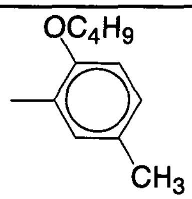 (0.68) | 1 : 3 | 1.30 |
| C-32 | 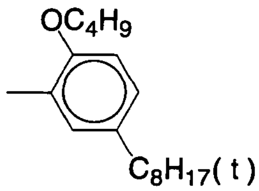 (0.68) | 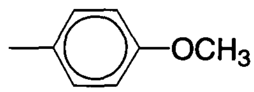 (0.68) | 3 : 1 | 1.32 |
| C-33 | 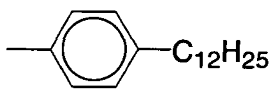 (0.68) | $-C_4H_9(n)$ (0.77) | 2 : 2 | 1.30 |
| C-34 | 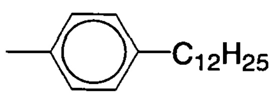 | $-C_4H_9(n)$ | 1 : 3 | 1.30 |

$$Cu-Pc-(SO_2R^1)_m\left(SO_2N\begin{matrix}R^3\\R^4\end{matrix}\right)_n$$

| Compound No. | $R^1$ ($\sigma_P$) | 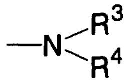 ($\sigma_P$) | m : n | Oxidation Potential (V) |
|---|---|---|---|---|
| C-35 | $-C_8H_{17}(n)$ (0.77) | 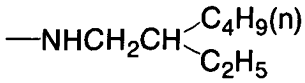 (0.65) | 3 : 1 | 1.29 |
| C-36 | $-C_8H_{17}(n)$ | $-N(C_6H_{13}(n))_2$ (0.65) | 1 : 3 | 1.25 |
| C-37 | $-C_8H_{17}(n)$ | 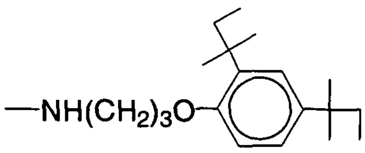 (0.65) | 3 : 1 | 1.28 |
| C-38 | 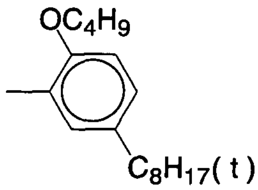 (0.68) | $-NH(CH_2)_2OC_2H_5$ (0.65) | 1 : 3 | 1.26 |
| C-39 | 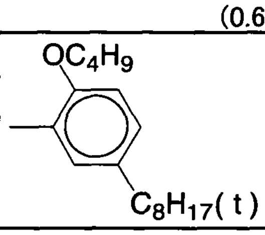 | $-NHCH_2CO_2C_8H_{17}(n)$ (0.65) | 2 : 2 | 1.28 |

$Cu-Pc-(SO_2R^1)_m \quad (SO_2R^2)_n$

| Compound No. | $R^1$ ($\sigma_P$) | $R^2$ ($\sigma_P$) | m : n | Oxidation Potential (V) |
|---|---|---|---|---|
| C-40 | $-(CH_2)_3SO_3Li$ | 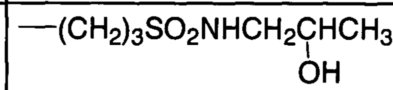 | 3 : 1 | 1.31 |
| C-41 | $-(CH_2)_3SO_3Li$ | 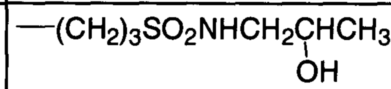 | 2 : 2 | 1.31 |
| C-42 | $-(CH_2)_3SO_2Li$ | $-(CH_2)_3SO_2NH(CH_2)_2O(CH_2)_2OH$ | 2 : 2 | 1.30 |
| C-43 | $-(CH_2)_3SO_3K$ | 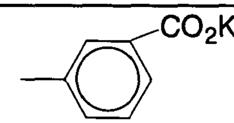 | 1 : 3 | 1.32 |
| C-44 | $-(CH_2)_3SO_3K$ | 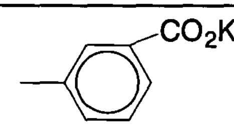 | 3.5 : 0.5 | 1.30 |
| C-45 | $-(CH_2)_2NHCO(CH_2)_2CO_2Na$ (0.77) | $-(CH_2)_3SO_3Na$ (0.77) | 2 : 2 | 1.30 |
| C-46 | $-(CH_2)_2NHCO(CH_2)_2CO_2Na$ | $-(CH_2)_3SO_3Na$ | 1 : 3 | 1.30 |
| C-47 | 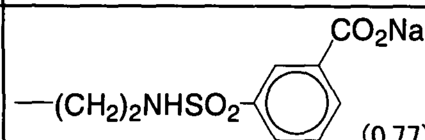 (0.77) | $-(CH_2)_3SO_3Na$ | 1 : 3 | 1.31 |
| C-48 | $-(CH_2)_2N(CH_2CO_2Na)_2$ | $-(CH_2)_3SO_3Na$ | 2 : 2 | 1.32 |

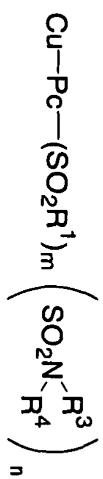

| Compound No. | $R^1$ | $-N<^{R^3}_{R^4}$ ($\sigma_p$) | m : n | Oxidation Potential (V) |
|---|---|---|---|---|
| C-49 | $-(CH_2)_3SO_3K$ | $-NH(CH_2)_2SO_3K$ (0.65) | 3 : 1 | 1.29 |
| C-50 | $-(CH_2)_3SO_3K$ | $-NH(CH_2)_2SO_3K$ | 2 : 2 | 1.28 |

Examples of the compounds usable in the invention further include compounds described in JP-A Nos. 2002-294097, 2002-302623, 2002-249677, 2002-256167, 2002-275386, 2003-012952, 2001-279145, 2002-371214 and 2002-309116 though the invention is not restricted by these compounds. The above compounds can be easily synthesized by a method described in the patent references.

The ink set for the ink-jet recording of the invention may comprise a black ink containing at least one black dye.

The black dye preferably has a maximum absorption wavelength within a range of 500 to 700 nm, and preferably exhibits a half band width of 100 nm or more in an absorption spectrum in a dilute solution of the dye having a standard absorbancy of 1.0.

Further, the black dye preferably has an oxidation potential of higher than 0.8 V (vs SCE). The oxidation potential is more preferably more than 1.0 V, and further preferably more than 1.1 V.

It is particularly preferable that the magenta dye, the cyan dye and the black dye that have an oxidation potential of higher than 0.8 V (vs SCE) are used in combination to keep gray balance during fading of the image.

- Ink for ink-jet recording-

The ink set for ink-jet recording of the invention comprises a yellow ink containing at least one yellow dye, a magenta ink containing at least one magenta dye, and a cyan ink containing at least one cyan dye, as essential components. Each of the inks contains the above-mentioned dye. The inks can be generally prepared by dissolving and/or dispersing a dye in a lipophilic or aqueous medium, preferably in an aqueous medium.

Additives may be added to the inks if necessary, as long as they do not ruin the effects of the invention. Examples of such additives include known anti-drying agents (wetting agents), anti-fading agents, emulsification-stabilizing agents, penetration-accelerating agents, ultraviolet absorbers, antiseptic agents, antimolds, pH-adjusting agents, surface tension-controlling agents, antifoaming agents, viscosity-controlling agents, dispersing agents, dispersion stabilizers, corrosion inhibitors, chelating agents, etc. When the dye used is water-soluble, the additives may be directly added to the ink liquid. When the dye is oil-soluble and the ink is used as a dispersion, the additives are generally added to the dye dispersion after the preparation of the dispersion. Alternatively, the additives may be added to the oil phase or the water phase of the dispersion during the preparation.

The anti-drying agent is preferably used for preventing the clogging that is caused by drying of the ink for ink-jet recording at a jet orifice of a nozzle of an ink-jet recording system.

The anti-drying agent is preferably a water-soluble organic solvent having a vapor pressure lower than that of water. Specific examples thereof include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols such as ethylene glycol monomethyl (or monoethyl) ether, diethylene glycol monomethyl (or monoethyl) ether, and triethylene glycol monomethyl (or monobutyl) ether; heterocyclic compounds such as 2-pyrrolidone, N-methyl-2-pyrrolidone, 1,3-dimethyl-2-imidazolidinone, and N-ethylmorpholine; sulfur-containing compounds such as sulfolane, dimethylsulfoxide, and 3-sulfolene; multifunctional compounds such as diacetone alcohol and diethanolamine; and urea derivatives. Among them, polyhydric alcohols such as glycerin and diethylene glycol are more preferred. The anti-drying agents may be used alone or in combination with each other. The weight ratio of the anti-drying agent to the ink is preferably 10 to 50% by weight.

The penetration-accelerating agent is preferably used for effectively allowing the inks for ink-jet recording to penetrate paper. Examples of the penetration-accelerating agents include alcohols such as ethanol, isopropanol, butanol, di- or tri-ethylene glycol monobutyl ether, and 1,2-hexanediol; sodium laurylsulfate; sodium oleate; nonionic surfactants; etc. The penetration-accelerating agent provides sufficient effects when the amount thereof is 5 to 30% by weight of the ink, generally. The amount is preferably selected such that blurs of the printed image and print-through are not caused.

The ultraviolet absorbers are used for increasing the image storability. Examples of the ultraviolet absorbers include benzotriazole compounds described in JP-A Nos. 58-185677, 61-190537, 2-782, 5-197075, 9-34057, etc.; benzophenone compounds described in JP-A Nos. 46-2784 and 5-194483, USP No. 3,214,463, etc.; cinnamic acid

compounds described in JP-B Nos. 48-30492 and 56-21141, JP-A No. 10-88106, etc.; triazine compounds described in JP-A Nos. 4-298503, 8-53427, 8-239368, and 10-182621, JP-W No. 8-501291, etc.; and so-called fluorescent whitening agents, which absorb ultraviolet rays to emit fluorescence, such as compounds described in *Research Disclosure,* No. 24239, stilbene compounds and benzoxazole compounds.

The anti-fading agents are used for increasing the image storability. The anti-fading agent may be selected from various organic anti-fading agents and anti-fading metal complex agents. Examples of the organic anti-fading agents include hydroquinone compounds, alkoxyphenol compounds, dialkoxyphenol compounds, phenol compounds, aniline compounds, amine compounds, indan compounds, chroman compounds, alkoxyaniline compounds, thioether compounds, thiourea compounds, heterocyclic compounds, etc., which are described in JP-A Nos. 2002-36717, 2002-86904, etc. Examples of the anti-fading metal complex agents include nickel complexes and zinc complexes. More specific examples thereof include compounds described in patent documents cited in *Research Disclosure,* No. 17643, Items VII-I to J, *ibid.,* No. 15162, ibid., No. 18716, page 650, left column, ibid., No. 36544, page 527, ibid., No. 307105, page 872, and ibid., No. 15162; and compounds of formulae and compound examples described in JP-A No. 62-215272, pages 127 to 137.

Examples of the antimolds include sodium dehydroacetate, sodium benzoate, sodium pyridinethione-1-oxide, ethyl p-hydroxybenzoate, 1,2-benzisothiazoline-3-one and salts thereof, etc. The amount of the antimold is preferably 0.02 to 1.00% by weight of the ink.

The pH-adjusting agent may be a neutralizer such as an organic base and an inorganic alkali compound. The pH-adjusting agent is preferably used for adjusting the pH value of the ink for ink-jet recording to improve the storage stability, and the pH value is adjusted preferably to 6 to 10, and more preferably to 7 to 10.

The surface tension-controlling agent may be a nonionic, cationic, or anionic surfactant. The surface tension of the ink for ink-jet recording used in the invention is preferably 25 to 70 mN/m, and more preferably 25 to 60 mN/m. The viscosity of the ink for ink-jet recording used in the invention is preferably 30 mPa·s or less, and more preferably 20 mPa·s or less. Preferred examples of the surfactants include anionic surfactants such as fatty acid salts, alkyl sulfate ester salts, alkylbenzenesulfonate salts, alkylnaphthalenesulfonate salts, dialkylsulfosuccinate salts, alkylphosphate salts, naphthalenesulfonic acid-formalin condensates, and polyoxyethylenealkylsulfate salts; and nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkylamines, glycerin fatty acid esters, and oxyethylene-oxypropylene block copolymers. The preferred examples further include an acetylene-based polyoxyethylene oxide surfactant of SURFYNOLS (Air Products and Chemicals, Inc.); amineoxide surfactants such as N,N-dimethyl-N-alkyl-amineoxide; and quaternary ammonium salt-containing, betaine-based, ampholytic surfactants such as N,N-dimethyl-N-lauryl-carbomethylammonium. Further, surfactants described in JP-A No. 59-157636, pages (37) to (38), and *Research Disclosure,* No. 308119 (1989) may be used in the invention.

A fluorine compound, a silicone compound, or a chelating agent such as EDTA may be used as the antifoaming agent if necessary.

In the case of using an oil-soluble dye, the dye is preferably dispersed in an aqueous medium such that fine coloring particles containing the dye and an oil-soluble polymer are dispersed in the aqueous medium as described in JP-A Nos. 11-286637, 2001-240763, 2001-262039, and 2001-247788, or such that the dye is dissolved in an organic high boiling point solvent and the resultant solution is dispersed in the aqueous medium as described in JP-A Nos. 2001-262018, 2001-240763, 2001-335734 and 2002-080772. The specific procedures, the oil-soluble polymer, the organic high boiling point solvent, additives, and the amounts thereof in the methods for dispersing the oil-soluble dye in the aqueous medium are described in the patent documents. The dye in the solid state may be dispersed as fine particles. A dispersing agent or a surfactant may be used in the dispersing process. A dispersing apparatus used in the invention may be a simple stirrer; an impeller stirring apparatus; an in-line stirring apparatus; a mill such as a colloid mill, a ball mill, a sand mill, an atoliter, a roll mill, and an agitator mill; an ultrasonic wave apparatus; or a high-pressure emulsifying apparatus such as a high-pressure homogenizer, examples of commercially-available, high-pressure homogenizers including Gaulin Homogenizer, Microfluidizer, DeBEE2000, etc. A methods for preparing an ink for ink-jet recording is described in detail in JP-A Nos. 5-148436, 5-295312, 7-97541, 7-82515, 7-118584, 11-286637 and 2001-271003 in addition to the above-mentioned patent documents, and the methods may be used in the invention.

The aqueous medium contains water as a main component, and may contain a water-miscible organic solvent if necessary. Examples of the water-miscible organic solvents include alcohols such as methanol, ethanol, propanol, isopropanol, butanol, isobutanol, sec-butanol, t-butanol, pentanol, hexanol, cyclohexanol and benzyl alcohol; polyhydric alcohols such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol; glycol derivatives such as ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene

glycol monoethyl ether, and ethylene glycol monophenyl ether; amines such as ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine and tetramethylpropylenediamine; and other polar solvents such as formamide, N,N-dimethylformamide, N,N-dimethylacetamide, dimethylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone. The water-miscible organic solvents may be used in combination with each other.

In each of the inks used for the ink set in the invention, the weight ratio of the dye is preferably 0.1 to 20 parts by weight per 100 parts by weight of the ink. The yellow ink and the cyan ink may contain a plurality of dyes. The magenta ink may contain a plurality of dyes as long as the dyes have an oxidation potential of higher than 0.8 V. In the case of a plurality of dyes are used for an ink, the total amount of the dyes is preferably within the above range of the weight ratio.

In recent years, 2 or more inks having different dye concentrations are often used for each color of yellow, magenta and cyan to improve the image quality. In the invention, the dyes in the 2 or more inks preferably have an oxidation potential of higher than 0.8 V.

In the case of using the 2 or more inks for one color hue, the dye concentration of one ink is preferably 0.05 to 0.5 times as large as that of the other ink.

The ink set used in the invention may further comprise a black ink to control the color tone, though the ink set is for forming a full-color image. Examples of black color materials for the black ink include bisazo dyes, trisazo dyes, tetrazo dyes, and carbon black dispersions.

<Ink-jet recording medium>

The ink-jet recording medium used in the invention comprises a support and an ink-receiving layer disposed on the support, and the ink-receiving layer contains a sulfur-containing compound.

Sulfur-containing compound

The sulfur-containing compound is not particularly limited in the invention. The sulfur-containing compound is preferably selected from the group consisting of thioether compounds, thiourea compounds, sulfoxide compounds, thiocyanic acid compounds, sulfinic acid compounds, disulfide compounds, and sulfur-containing heterocyclic compounds, and the compounds may be used in combination.

Thioether compound

The thioether compound may be water-soluble or oil-soluble. The thioether compound may be a low molecular weight compound or a high molecular weight compound as long as the compound has at least one thioether group.

The thioether compound preferably has 2 or more carbon atoms, and more preferably has 4 or more carbon atoms.

The thioether compound preferably contains an atom having a lone electron pair such as an oxygen atom, a sulfur atom, a nitrogen atom, and a phosphorus atom, in addition to a sulfur atom, a carbon atom, and a hydrogen atom.

Examples of the thioether compounds include compounds represented by the following formula (1).

$$R_1\text{-}(S\text{-}R_3)_m\text{-}S\text{-}R_2 \qquad \text{Formula (1)}$$

In the formula (1), $R_1$ and $R_2$ each independently represent a hydrogen atom, a substituted or unsubstituted alkyl group, a substituted or unsubstituted aryl group, or a group containing the alkyl or aryl group. $R_1$ and $R_2$ may be the same or different, and may bond together to form a ring. It should be noted that at least one of $R_1$ and $R_{\square}$ is an alkyl group having a hydrophilic group or a group with a basic nitrogen atom as a substituent, or a group containing this alkyl group, and for example, the alkyl group may be connected to a sulfur atom of a thioether moiety through a divalent linking group such as a carbamoyl group, a carbonyl group and a carbonyloxy group. The hydrophilic group may be a hydroxy group, a sulfo group, a carboxy group, or a (poly)ethyleneoxy group, and the group with a basic nitrogen atom may be an amino group, an amide group, an ammonium group, a nitrogen-containing heterocyclic group, an aminocarbonyl group, or an aminosulfonyl group. $R_3$ represents an alkylene group, which may be substituted and may have an oxygen atom. m represents an integer from 0 to 10. When m is 1 or more, at least one sulfur atom connecting to $R_3$ may form a sulfoxide group or a sulfonyl group. Further, $R_1$ and $R_2$ may be a residue of a polymer, respectively.

It is particularly preferred that at least one of $R_1$ and $R_2$ in the formula (1) contains an alkyl group having a hydroxy group, a carboxy group, an amino group, or an ammonium group. The amino group on the alkyl group may be an unsubstituted amino group; a monoalkyl-substituted amino group, whose alkyl group preferably has 1 to 5 carbon atoms; a dialkyl-substituted amino group, whose alkyl groups preferably has 1 to 5 carbon atoms respectively; or a nitrogen-containing heterocyclic group. Specific examples of the thioether compounds represented by the formula (1) are illustrated below without intention of restricting the invention.

(1) $HO(CH_2)_3S(CH_2)_3OH$

(2) 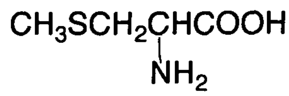

(3) 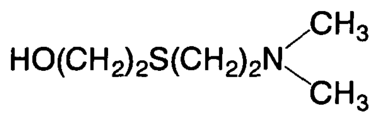

(4) $HO(CH_2)_2S(CH_2)_2OH$

(5) $CH_3S(CH_2)_2CH(NH_2)COOH$

(6) $HO(CH_2)_2SCH_2S(CH_2)_2OH$

(7) $HO(CH_2)_2S(CH_2)_2S(CH_2)_2OH$

(8) $HO(CH_2)_2S(CH_2)_3S(CH_2)_2OH$

(9) $C_2H_5S(CH_2)_2SCH_2CHOHCH_2OH$

(10) $HOOCCH_2SCH_2SCH_2COOH$

(11) 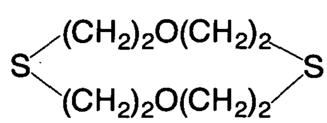

(12) $HO(CH_2)_2S(CH_2)_2SO_2(CH_2)_2S(CH_2)_2OH$

(13) $HO(CH_2)_3S(CH_2)_2S(CH_2)_3OH$

(14) $HOOCCH_2SCH_2COOH$

(15) $HOOCCH_2S(CH_2)_3SCH_2COOH$

(16) $HOOCCH_2S(CH_2)_2SCH_2COOH$

(17) $HO(CH_2)_2S(CH_2)_4S(CH_2)_2OH$

(18) $HO(CH_2)_2S(CH_2)_2S(CH_2)_2S(CH_2)_2OH$

(19) $HOOC(CH_2)_2S(CH_2)_2S(CH_2)_2COOH$

(20) $HOOC(CH_2)_2S(CH_2)S(CH_2)_2COOH$

(21) $(HO(CH_2)_2S(CH_2)_2)_2O$

(22) $H_2NCO(CH_2)_2S(CH_2)_2S(CH_2)_2CONH_2$

(23) $HOOC(CH_2)_2S(CH_2)_2COOH$

(24) $(HOCH_2CHOHCH_2SCH_2)_2$

(25) $HOOC(CH_2)_2S(CH_2)_3S(CH_2)_2COOH$

(26) $C_2H_5S(CH_2)_2S(CH_2)_2NHCO(CH_2)_2COOH$

(27) $HO(CH_2)_3S(CH_2)_2O(CH_2)_3O(CH_2)_2S(CH_2)_2OH$

(28) $HO(CH_2)_5S(CH_2)_5S(CH_2)_5OH$

(29)

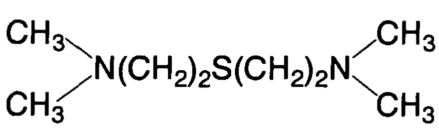

(30)

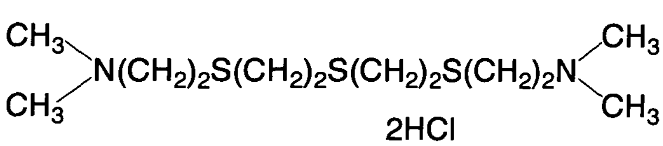

(31) 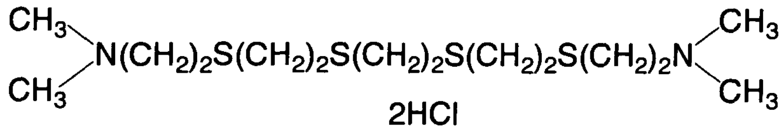

2HCl

(32) 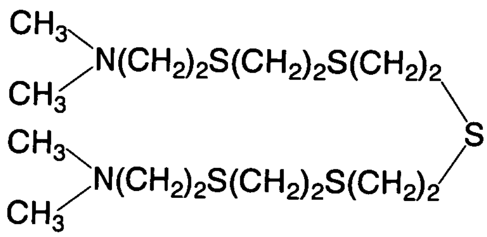

(33) 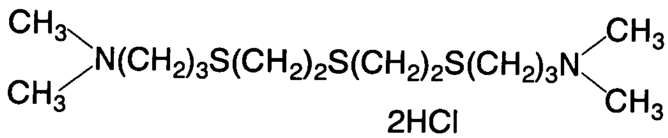

2HCl

(34) $H_2N(CH_2)_3S(CH_2)_2S(CH_2)_2S(CH_2)_3NH_2$

2HCl

(35) 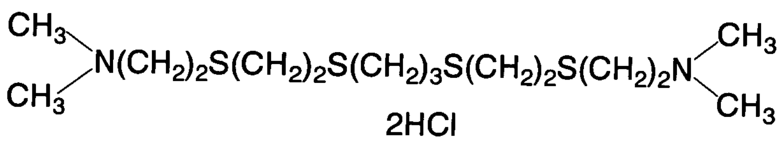

2HCl

(36) 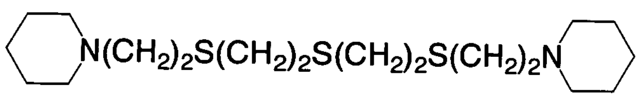

2HCl

(37) 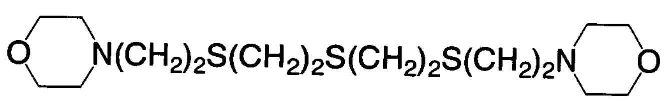

2HCl

(38) 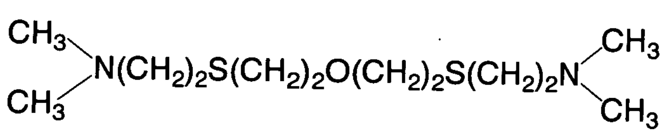

(39) 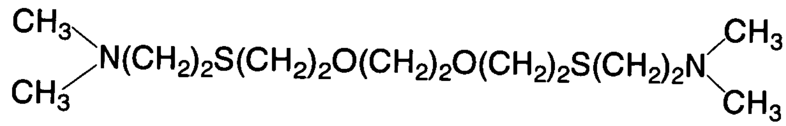

(40) 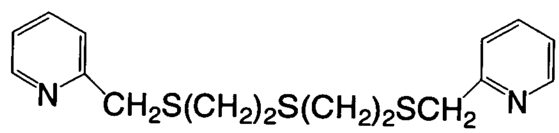 $2(CO_2H)_2$

(41) 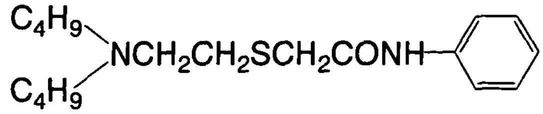

(42) 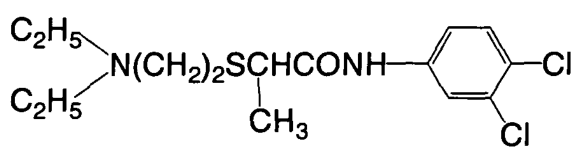

(43) $(CH_3)_3N^+(CH_2)_2S(CH_2)_2N^+(CH_3)_3 \cdot 2\ CH_3SO_3^-$

(44)

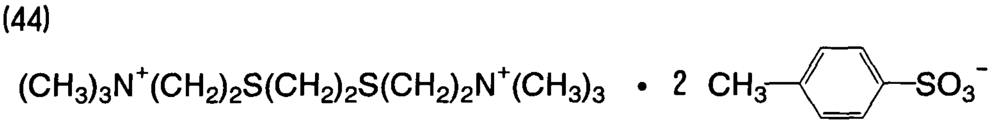

(45)

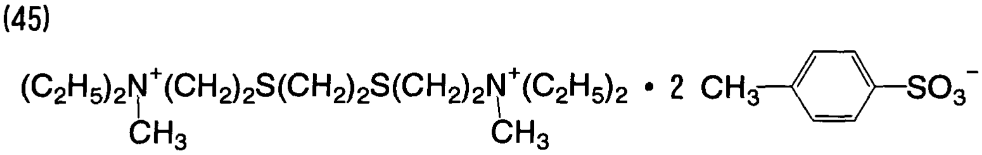

(46)

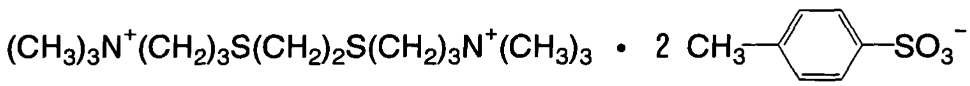

(47)

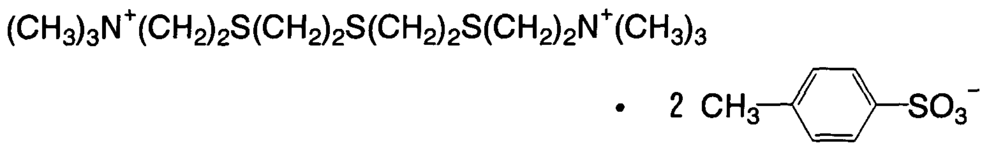

Thiourea compound

The thiourea compound may be water-soluble or oil-soluble, and may be a low molecular weight compound or a high molecular weight compound. The thiourea compound may be a compound having at least one >N-C(=S)-N< group.

Examples of such thiourea compounds include thiourea, N-methylthiourea, N-acetylthiourea, 1,3-diphenylthiourea, tetramethylthiourea, guanylthiourea, 4-methylthiosemicarbazide, 1,3-bis(hydroxymethyl)-2(3H)-benzimidazolethione, 6-hydroxy-1-phenyl-3,4-dihydropyrimidine-2(1H)-thione, 1-allyl-2-thiourea, 1,3-dimethyl-2-thiourea, 1,3-diethyl-2-thiourea, ethylenethiourea, trimethylthiourea, 1-carboxymethyl-2-thiohydantoin, thiosemicarbazide, etc.

Disulfide compound

The disulfide compound may be water-soluble or oil-soluble, and may be a low molecular weight compound or a high molecular weight compound. The disulfide compound is preferably represented by the following formula: $R_1$-S-S-$R_2$. The disulfide compound is particularly preferably DL-$\alpha$-lipoic acid, 4,4'-dithiodimorpholine, or 4,4'-dithiodibutanoic acid.

In the formula, $R_1$ and $R_2$ represent an organic group containing a carbon or nitrogen atom connecting to a sulfur atom of the disulfide moiety, respectively. The organic group may be a substituted or unsubstituted aliphatic group, a substituted or unsubstituted aromatic group, or a substituted or unsubstituted heterocyclic group, containing the carbon or nitrogen atom. Further, the organic group may be such that a substituted or unsubstituted aliphatic group, a substituted or unsubstituted aromatic group, a substituted or unsubstituted heterocyclic group, a substituted or unsubstituted amino group, an imino group, an oxygen atom, or a sulfur atom, etc. is connected to the carbon or nitrogen atom. $R_1$ and $R_2$ may be the same or different group, and may bond together to form a ring. Examples of the substituents of the organic groups include alkyl groups, aryl groups, heterocyclic groups, amino groups, amide groups, imino groups, ammonium groups, a hydroxy group, a sulfo group, a carboxy group, aminocarbonyl groups, aminosulfonyl groups, halogen atoms, etc.

Sulfinic acid compound

The sulfinic acid compound may be water-soluble or oil-soluble and may be a low molecular weight compound or a high molecular weight compound, as long as the compound has at least one sulfinic acid group.

The sulfinic acid compound is preferably represented by the following formula: R-$SO_2$M.

In the formula, R represents a substituted or unsubstituted alkyl group, which preferably has 6 to 30 carbon atoms; a substituted or unsubstituted aryl group such as a phenyl group and a naphthyl group, which preferably has 6 to 30 carbon atoms; or a polymer residue. M represents a hydrogen atom, an alkaline metal atom, or an ammonium group.

Examples of the substituents on the group of R include straight, branched or cyclic alkyl groups, which preferably have 1 to 20 carbon atoms; aralkyl groups, which preferably have a monocyclic or bicyclic structure, the alkyl moiety thereof preferably having 1 to 3 carbon atoms; alkoxy groups, which preferably have 1 to 20 carbon atoms;

mono- or di-substituted amino groups, whose substituents are preferably an alkyl, acyl, alkylsulfonyl or arylsulfonyl group having 1 to 20 carbon atoms, the total number of carbon atoms included in the substituents of the di-substituted amino group being preferably 20 or less; mono- to tri-substituted or unsubstituted ureido groups, which preferably have 1 to 20 carbon atoms; substituted or unsubstituted aryl groups, which preferably have 6 to 29 carbon atoms and preferably have a monocyclic or bicyclic structure; substituted or unsubstituted arylthio groups, which preferably have 6 to 29 carbon atoms; substituted or unsubstituted alkylthio groups, which preferably have 1 to 29 carbon atoms; substituted or unsubstituted alkylsulfoxy groups, which preferably have 1 to 29 carbon atoms; substituted or unsubstituted arylsulfoxy groups, which preferably have 6 to 29 carbon atoms and preferably have a monocyclic or bicyclic structure; substituted or unsubstituted alkylsulfonyl groups, which preferably have 1 to 29 carbon atoms; substituted or unsubstituted arylsulfonyl groups, which preferably have 6 to 29 carbon atoms and preferably have a monocyclic or bicyclic structure; aryloxy groups, which preferably have 6 to 29 carbon atoms and preferably have a monocyclic or bicyclic structure; carbamoyl groups, which preferably have 1 to 29 carbon atoms; sulfamoyl groups, which preferably have 1 to 29 carbon atoms; a hydroxy group; halogen atoms such as a fluorine atom, a chlorine atom, a bromine atom, and an iodine atom; sulfonic acid groups; and carboxylic acid groups.

These substituents may further have a substituent such as an alkyl group, an aryl group, an alkoxy group, an aryloxy group, an alkylthio group, an arylthio group, an alkylsulfonyl group, an arylsulfonyl group, a carbonamide group, a sulfonamide group, a carbamoyl group, a sulfamoyl group, an alkylsulfoxy group, an arylsulfoxy group, an ester group, a hydroxy group, a carboxy group, a sulfo group, and a halogen atom. These groups may bond together to form a ring. Further, these groups may be contained in a homo- or copolymer chain.

Specific examples of the sulfinic acid compounds are illustrated below.

(A-1)

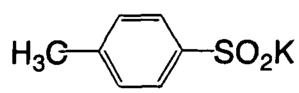

(A-2)

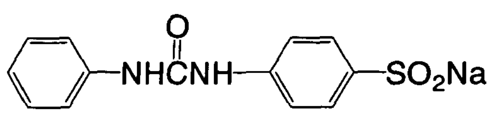

(A-3)

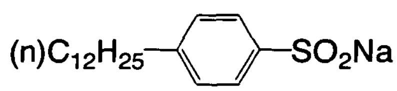

(A-4)

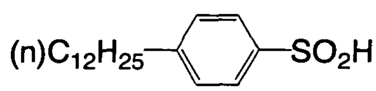

(A-5)

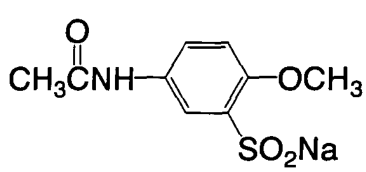

(A-6)

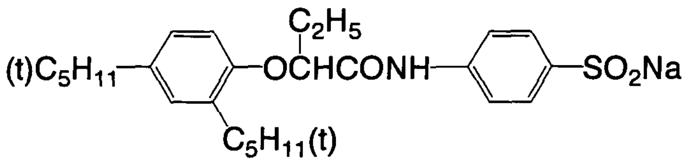

(A-7)

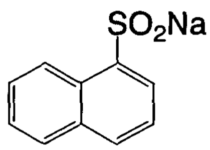

(A-8)

$(n)C_8H_{17}SO_2Na$

(A-9)

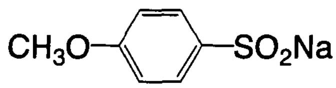

(A-10)

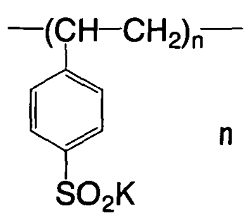

n = 6000

Thiocyanic acid compound

Examples of the thiocyanic acid compounds include methyl thiocyanate, ethyl thiocyanate, sodium thiocyanate, potassium thiocyanate, calcium thiocyanate, etc.

Sulfur-containing heterocyclic compound

Examples of the sulfur-containing heterocyclic compounds include compounds containing a sulfur atom as one of the atoms forming the heterocycle; and heterocyclic mercapto compounds, whose mercapto group may have a substituent of an alkyl group, an aryl group, an acyl group, a sulfonyl group, etc. Preferred among them are compounds represented by the following formula.

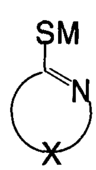

In the above formula, X represents a non-metallic atomic group forming a 5- to 7-membered ring. The non-metallic atomic group may have a substituent, and examples of the substituents include alkyl groups, alkenyl groups, aryl groups, alkoxy groups, aryloxy groups, alkylthio groups, arylthio groups, a hydroxyl group, amino groups, a mercapto group, a carboxyl group, acyl groups, carbamoyl groups, sulfamoyl groups, halogen atoms, and a cyano group. These groups may further have a substituent. M represents a hydrogen atom, an ammonium ion, or a metal atom. The 5- to 7-membered ring containing X may form a condensed ring with another moiety.

Specific examples of the heterocyclic mercapto compound include Compounds 1-1 to 1-32 described in JP-A No. 2000-94829, paragraphs [0027] to [0032], etc.

Sulfoxide compound

The sulfoxide compound may be water-soluble or oil-soluble and may be a low molecular weight compound or a high molecular weight compound, as long as the compound has at least one sulfoxide group.
The sulfoxide compound preferably has 2 or more carbon atoms, and more preferably has 4 or more carbon atoms.
The sulfoxide compound preferably contains an atom having a lone electron pair such as an oxygen atom, a sulfur atom, a nitrogen atom, and a phosphorus atom, in addition to a sulfoxide group, a carbon atom, and a hydrogen atom.
Specific examples of the sulfoxide compounds are illustrated below.

$$(CH_3)_2NCH_2CH_2SOCH_2CH_2N(CH_3)_2$$

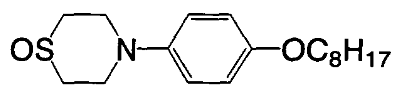

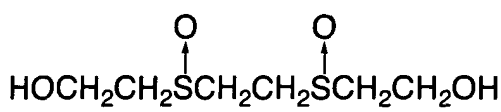

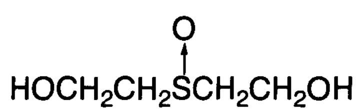

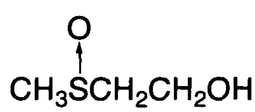

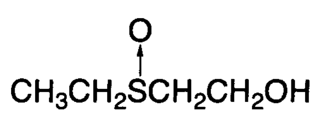

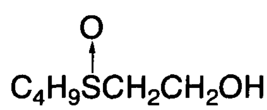

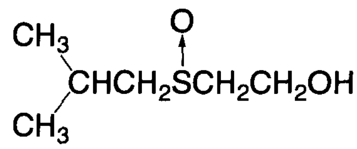

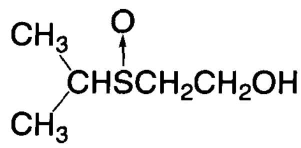

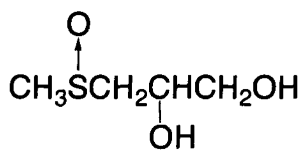

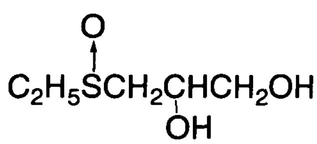

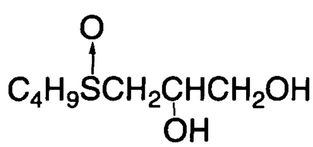

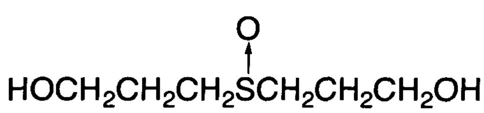

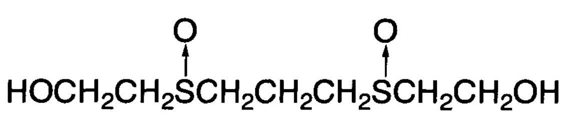

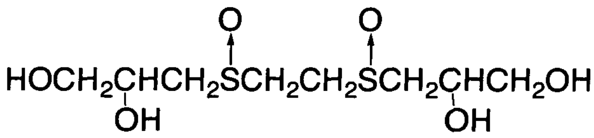

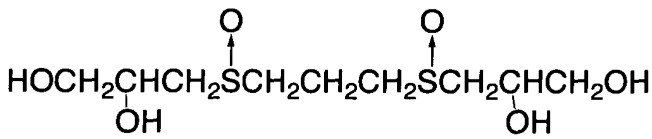

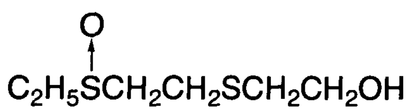

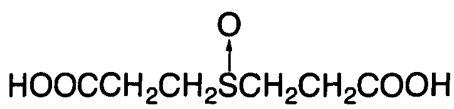

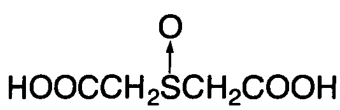

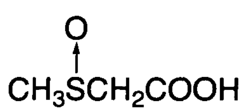

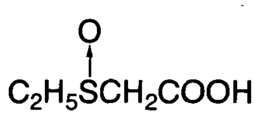

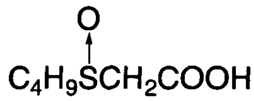

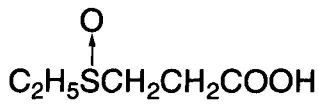

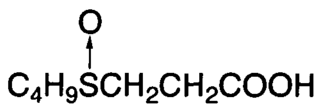

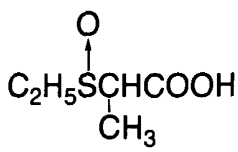

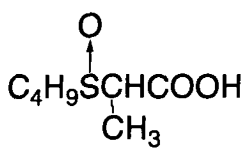

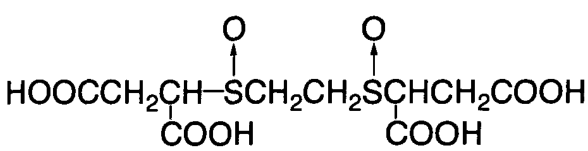

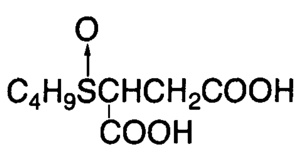

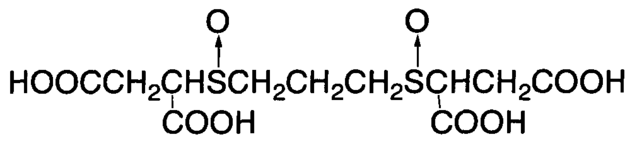

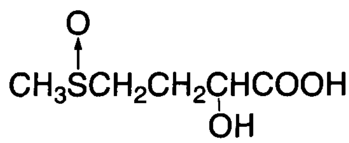

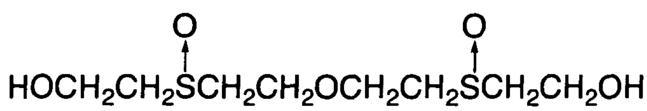

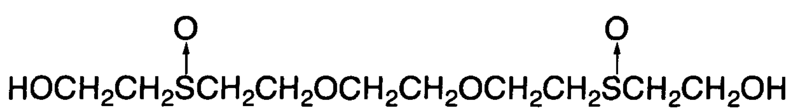

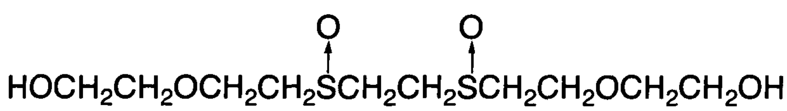

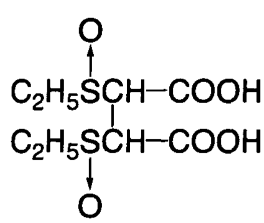

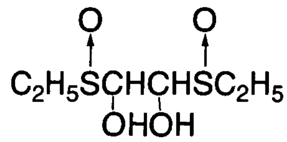

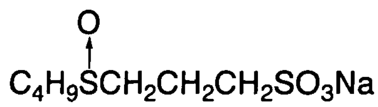

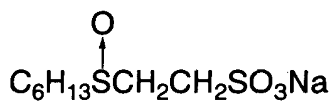

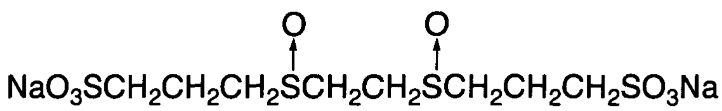

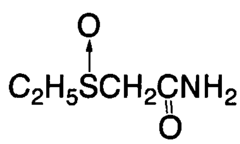

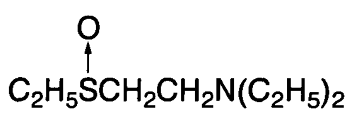

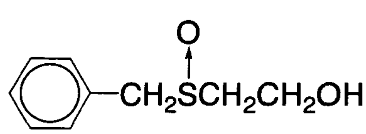

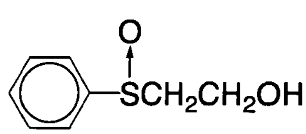

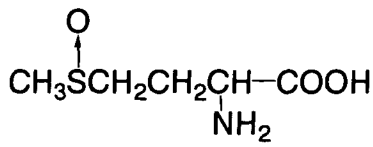

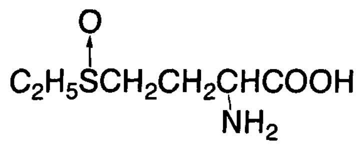

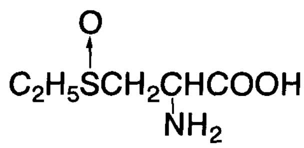

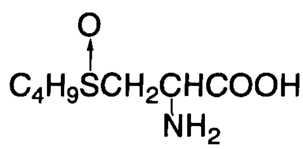

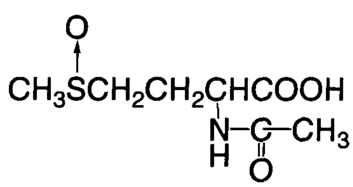

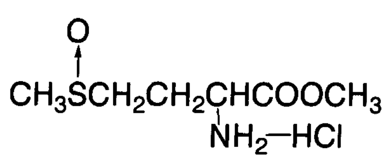

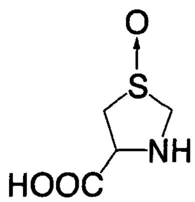

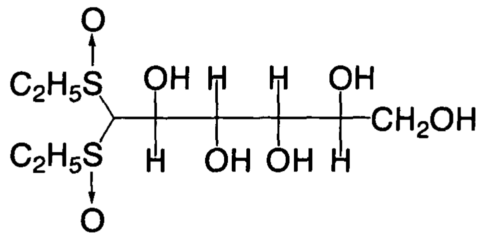

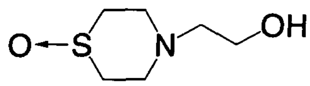

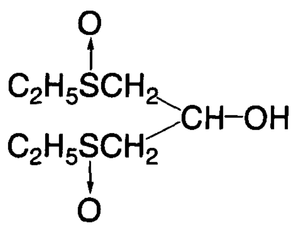

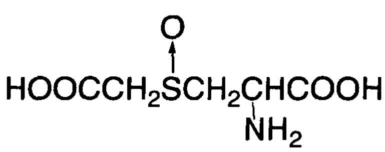

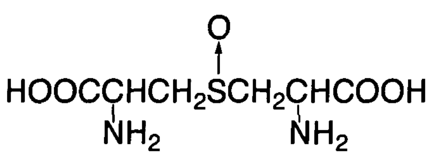

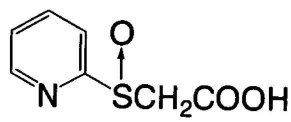

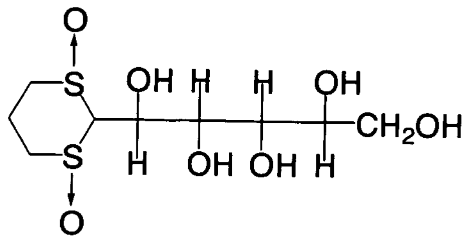

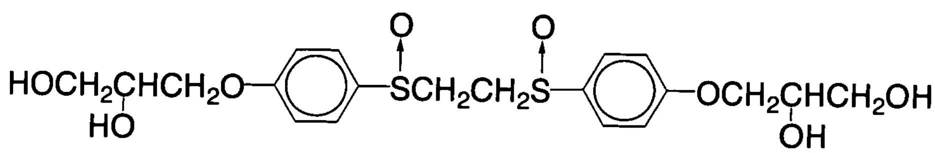

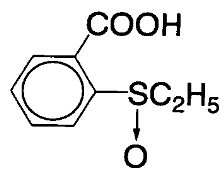

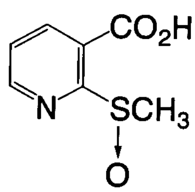

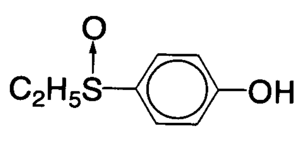

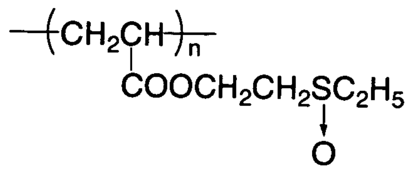

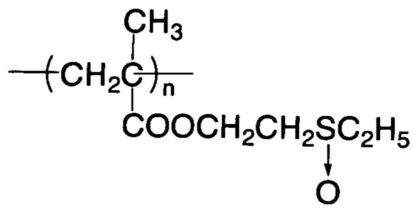

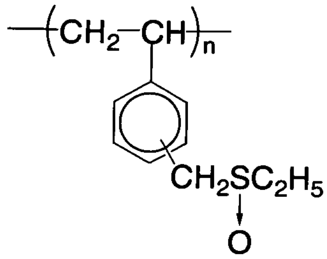

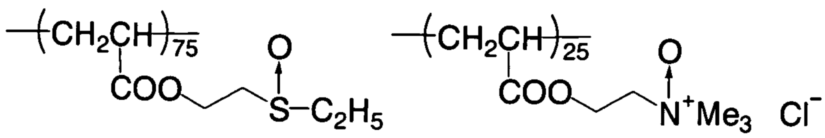

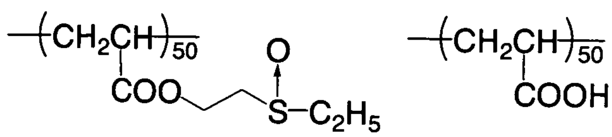

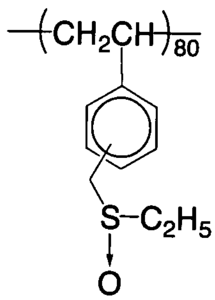

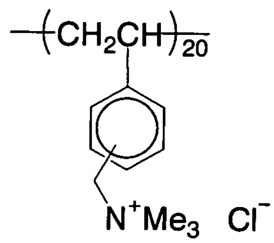

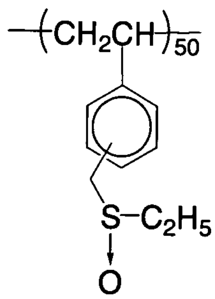

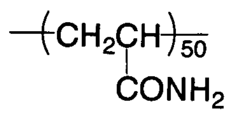

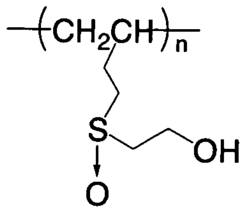

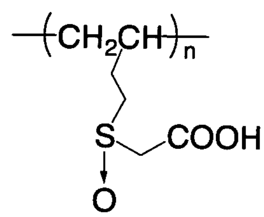

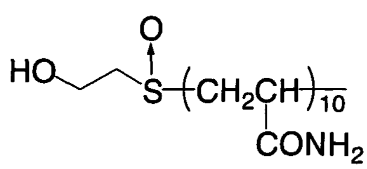

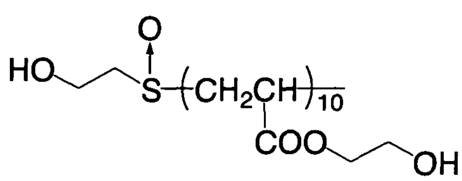

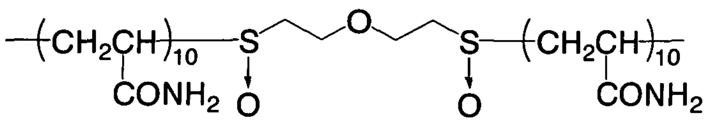

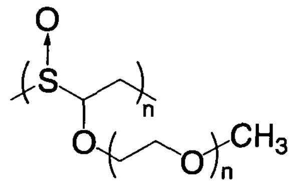

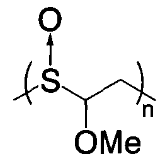

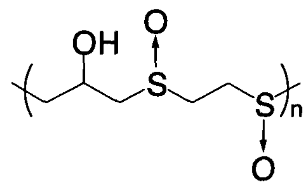

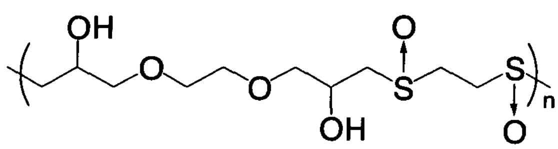

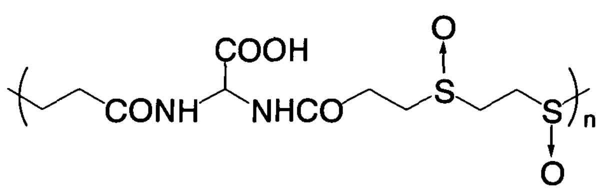

Examples of the sulfur-containing compounds usable in the invention further include sulfone compounds, sulfonamide compounds, thioester compounds, thioamide compounds, sulfonic acid compounds, thiosulfonic acid compounds, thiosulfinic acid compounds, sulfamine compounds, thiocarbamic acid compounds, and sulfurous acid compounds.

The sulfur-containing compound may be a polymer. The sulfur-containing polymer may be synthesized by polycondensation, addition polymerization, polyaddition, addition condensation, ring-opening polymerization, or a synthesis method using a polymer reaction. The polymer is preferably synthesized by an addition reaction. The addition reaction may be a nucleophilic addition reaction to a carbon-carbon double bond compound, such as Michael addition; a nucleophilic addition reaction to a cumulative double bond compound such as an isocyanate compound; a ring-opening addition reaction; or a radical addition reaction.

Examples of the polymers of the polyaddition products include polyurethanes such as products of polyaddition between an organic isocyanate compound having a di- or multi-valent isocyanate group (e.g. 2,4-tolylene diisocyanate,

2,6-tolylene diisocyanate, m-phenylene diisocyanate, 4,4'-diphenylmethane diisocyanate, hexamethylene diisocyanate, octamethylene diisocyanate, 1,4-cyclohexylene diisocyanate, isophorone diisocyanate, 1,3-bis(isocyanatemethyl)-cyclohexane, 1,5-diisocyanate-2-methylpentane, hydrogenated xylylene diisocyanate, hydrogenated 4,4'-diphenylmethane diisocyanate, etc.) and a polyol compound having an alkylthio group, an arylthio group, a thiocarbonyl group, or a thiocyanate group (e.g. 2,2'-thiodiethanol, 3,6-dithia-1,8-octanediol, 1,4-dithiane-2,5-diol, 3,3'-thiodipropanol, 3-methylthio-1,2-propanediol, 1,5,9,13-tetrathiacyclohexadecane-3,11-diol, etc.); polythiourethanes such as products of polyaddition between an organic isothiocyanate compound having a di- or multi-valent isothiocyanate group (e.g. p-phenylene diisothiocyanate, 4,4'-methylene diphenylisothiocyanate, isophthaloyl diisothiocyanate, hexamethylene diisothiocyanate, octamethylene diisothiocyanate, etc.) and a polyol compound (e.g. ethylene glycol, 1,3-propanediol, 1,2-propanediol, 2-methyl-1,3-propanediol, neopentyl glycol, 2,2-diethyl-1,3-propanediol, 1,4-butanediol, 1,2-butanediol, 1,6-hexanediol, etc.); polythioureas such as products of polyaddition between the organic isothiocyanate compound and a polyamine having an active hydrogen atom (e.g. ethylenediamine, 1,3-diaminopropane, 1,2-diaminopropane, 1,4-diaminobutane, hexamethylenediamine, 2,2-dimethyl-1,3-propanediamine, etc.); polysulfides such as products of ring-opening polymerization of a cyclic sulfide compound (e.g. ethylene sulfide, propylene sulfide, trimethylene sulfide, 3-methoxythietane, etc.); poly amide-sulfides such as products of Michael addition between methylene bisacrylamide and a dithiol compound (e.g. 1,2-ethanedithiol, 1,3-propanedithiol, 1,4-butanedithiol, 2,3-butanedithiol, 1,6-hexanedithiol, 1,8-octanedithiol, 2,3-dimercapto-1-propanol, dithiothreitol, dithioerythritol, 2-mercaptoethyl ether, etc.); poly ether-sulfides such as products of ring-opening polyaddition between a bisepoxy compound (e.g. ethylene glycol diglycidyl ether, neopentyl glycol diglycidyl ether, 1,4-butanediol diglycidyl ether, polyethylene glycol diglycidyl ether, 1,2,5,6-diepoxycyclooctane, 4-vinyl-1-cyclohexene diepoxide, etc.) and the dithiol compound; and poly sulfone-sulfides such as products of polyaddition between divinylsulfone and the dithiol compound.

Examples of the polymers of the addition polymerization products include polymers and copolymers of vinyl monomers having an alkylthio group, an arylthio group, a thiocarbonyl group, or a thiocyanate group, such as 2-methylthioethyl (meth)acrylate, 2-ethylthioethyl (meth)acrylate, 2-(hydroxyethylthio)ethyl (meth)acrylate, 4-vinylbenzylmethyl sulfide, 4-vinylbenzyl thioacetate, 2-thiocyanatoethyl vinyl ether, and vinyl thiocyanatoacetate. The polymers may be prepared by telomerization of a conjugated vinyl monomer, using a chain transfer agent of a mercapto compound such as 2-mercaptoethanol, ethanethiol, methyl thioglycolate, thioglycerol, 2-aminoethanethiol, mercaptoacetic acid, 1,2-ethanedithiol, 1,3-propanedithiol, 1,4-butanedithiol, 2,3-butanedithiol, 1,6-hexanedithiol, 1,8-octanedithiol, 2,3-dimercapto-1-propanol, dithiothreitol, dithioerythritol, 2-mercaptoethyl ether, trimethylolpropane tris(2-mercaptoacetate), and pentaerythritol tetrakis(2-mercaptoacetate).

Further, the polymer may be synthesized by the polymer reaction. Examples of such polymers include products of radical addition of a mercapto compound (e.g. 2-mercaptoethanol, thioglycerol, mercaptoacetic acid, mercaptopropionic acid, 2-aminoethanethiol, a 2-dimethylaminoethanethiol hydrochloride salt, a 2-diethylaminoethanethiol hydrochloride salt, 3-mercaptopropane sulfonic acid, etc.) to a polymer having an unsaturated double bond (e.g. polybutadiene, polyisoprene, etc.); and products of addition of an isothiocyanate compound (e.g. methyl isothiocyanate, ethyl isothiocyanate, butyl isothiocyanate, allyl isothiocyanate, cyclohexyl isothiocyanate, ethoxycarbonyl isothiocyanate, etc.) to a polyamine (e.g. polyallylamine, polyvinylamine, polyethylene imine, etc.).

The polymer used in the invention preferably has an alkylthio group, particularly preferably has a hydrophilic group such as a hydroxy group, a carboxy group, a sulfo group, a carbamoyl group, a sulfamoyl group, an amino group, an ammonio group, and an amidino group.

Further, the polymer is more preferably a polyurethane resin having an alkylthio group, and particularly preferably a cationic polyurethane resin synthesized by copolymerization with a tertiary amine compound having a hydroxyl group and by treating the resultant copolymer with a quaternarizing agent. Examples of the tertiary amines include N, N-dimethylethanolamine, N,N-diethylethanolamine, 3-dimethylamino-1-propanol, 1-dimethylamino-2-propanol, 2-dimethylamino-2-methyl-1-propanol, N-methyldiethanolamine, N-ethyldiethanolamine, N-butyldiethanolamine, triethanolamine, triisopropanolamine, 3-(dimethylamino)-1,2-propanediol, 2-{[2-(dimethylamino)ethyl]-methylamino}ethanol, 1,3-bis(dimethylamino)-2-propanol, N,N,N',N'-tetrakis(2-hydroxypropyl)-ethylenediamine, etc. Examples of the quaternarizing agents include dimethyl sulfate, diethyl sulfate, methyl p-toluenesulfonate, ethyl p-toluenesulfonate, halides such as methyl chloride, methyl bromide, methyl iodide, benzyl chloride, and benzyl bromide, etc.

The weight average molecular weight of the polymer is preferably 1,000 to 1,000,000, and more preferably 2,000 to 100,000. When the weight average molecular weight is less than 1,000, the polymer cannot exhibit the sufficient effects of improving waterproofness or preventing blurs of the ink. When the weight average molecular weight is more than 1,000,000, the polymer is often poor in handling.

It is preferable that the polymer is soluble in water or a water-miscible organic solvent, or stable in an aqueous emulsified dispersion. In the invention, the water-soluble polymer is a polymer compound having a solubility of 0.1% by mass or more in water at 25°C. The solubility is preferably 0.5% by mass or more, particularly preferably 1% by mass or more.

The polymer may have self-emulsifiability, and the self-emulsifiable polymer is a polymer compound that

stably exhibits the self-emulsifiability in an aqueous dispersion medium at 25°C under a condition of a concentration of 0.5% by mass or more, preferably 1% by mass or more, and particularly preferably 3% by mass or more.

The sulfur-containing polymer preferably contains a moiety represented by the following formula.

P-Y-S-

In the formula, P represents a residue of a polymer or oligomer containing repeating units. Y represents a single bond or a divalent linking group. Examples of the preferred divalent linking groups include an ether bond; an ester bond; a thioester bond; a carbonic ester bond; carbamoyl groups; alkylene groups such as a methylene group, an ethylene group, a propylene group, a trimethylene group, a tetramethylene group, a hexamethylene group, and an octamethylene group; arylene groups such as a phenylene group; and combinations thereof.

The sulfur-containing polymer more preferably contains a repeating unit represented by the following formula.

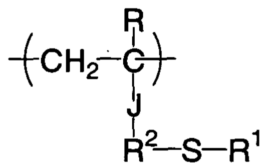

In the formula, R represents a hydrogen atom or a methyl group. J represents a single bond or a divalent linking group such as -O-, -COO-, -OCO-, and -CONR'-. $R^1$ represents an aliphatic group or an aromatic group. The aliphatic group is preferably an alkyl group such as a methyl group, an ethyl group, a n-propyl group, an isopropyl group, a n-hexyl group, a cyclohexyl group, a n-octyl group, a 2-ethylhexyl group, a decyl group, and a dodecyl group. The alkyl group may have a substituent such as a hydroxy group, a carboxy group, a sulfo group, an alkyloxycarbonyl group, a carbamoyl group, a sulfamoyl group, a cyano group, an amino group, an ammonio group, and an alkoxy group. The aromatic group may be an aryl group such as a phenyl group and a naphthyl group; an aralkyl group such as a benzyl group; or a pyridyl group. $R^1$ is preferably a substituted or unsubstituted alkyl group having 1 to 12 carbon atoms such as a methyl group, an ethyl group, a hydroxyethyl group, a 2,3-dihydroxypropyl group, a 2-carboxyethyl group, a 3-carboxypropyl group, a 3-sulfoxypropyl group, a 2-aminoethyl group, an N,N-dimethylaminoethyl group, and a trimethylammonioethyl group. $R^2$ represents an alkylene group such as a methylene group, an ethylene group, a propylene group, a trimethylene group, a tetramethylene group, a hexamethylene group and an octamethylene group, or an arylene group such as a phenylene group, which may have a substituent. $R^2$ is preferably a substituted or unsubstituted alkylene group having 1 to 8 carbon atoms.

The polymer used in the invention preferably has a hydrophilic group. Examples of the hydrophilic groups include a hydroxy group, a carboxy group, a sulfo group, carbamoyl groups, sulfamoyl groups, amino groups, ammonio groups, and amidino groups. The hydrophilic group is particularly preferably a hydroxy group, an ammonio group, an amino group, or a carbamoyl group.

The polymer is preferably water-soluble or stable in an aqueous emulsified dispersion. In the invention, the water-soluble polymer means a polymer compound having a solubility of 0.1% by mass or more in water at 25°C. The solubility is preferably 0.5% by mass or more, particularly preferably 1% by mass or more.

The polymer may have self-emulsifiability, and the self-emulsifiable polymer is a polymer compound that stably exhibits the self-emulsifiability in an aqueous dispersion medium at 25°C under a condition of a concentration of 0.5% by mass or more, preferably 1% by mass or more, and particularly preferably 3% by mass or more.

The weight average molecular weight of the polymer is preferably 1,000 to 1,000,000, and more preferably 1,000 to 100,000. When the weight average molecular weight is less than 1,000, the polymer cannot exhibit the sufficient effects of improving the waterproofness or preventing blurs of the ink. When the weight average molecular weight is more than 1,000,000, the polymer is often poor in handling characteristics.

The polymer may be synthesized by polycondensation, addition polymerization, polyaddition, addition condensation, ring-opening polymerization, or a synthesis method using a polymer reaction. The polymer is preferably synthesized by an addition reaction. For example, the polymer is preferably synthesized by addition polymerization (e.g. radical polymerization of a vinyl monomer having a thioether bond, polymerization of a vinyl monomer using a mercapto compound as a chain transfer agent, etc.), or a polymer reaction (e.g. a nucleophilic addition reaction to a polymer side chain having a reactive group, a radical addition reaction, etc.).

Specific examples of the preferred polymers are illustrated below.

P-1

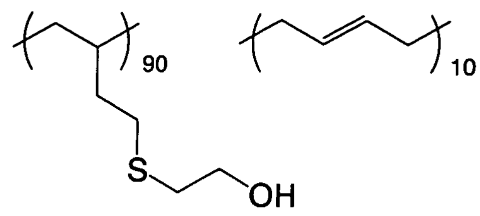

P-2

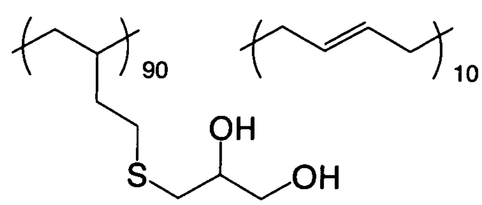

P-3

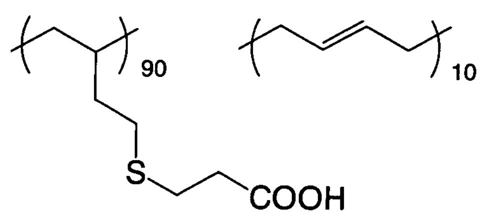

P-4

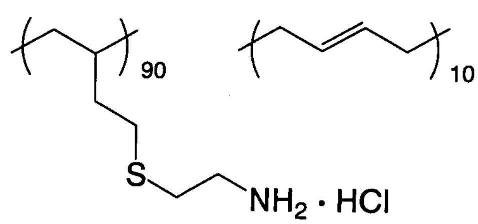

P-5

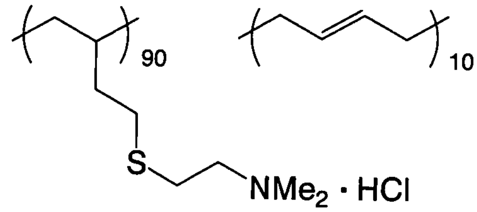

P-6

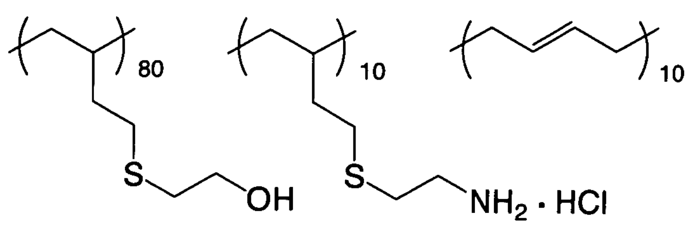

P-7

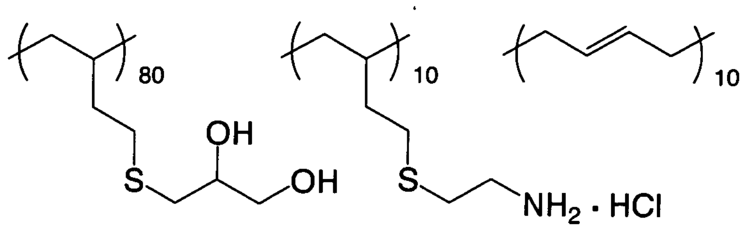

P-8

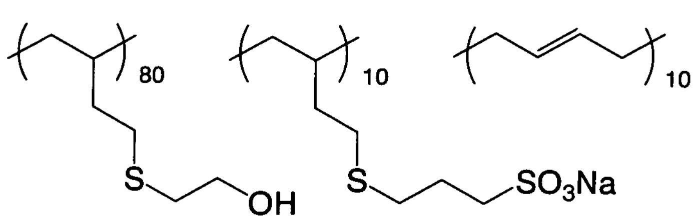

P-9

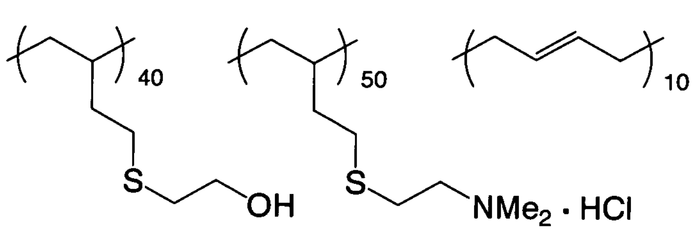

P-10

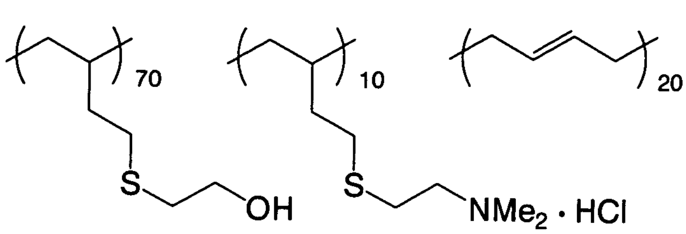

P-11

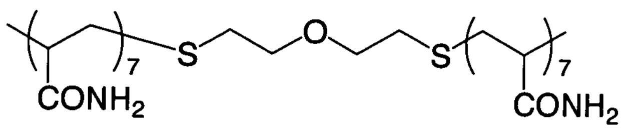

P-12

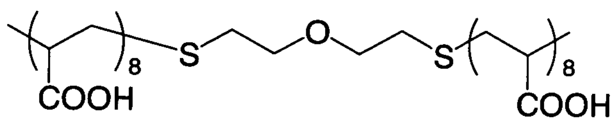

P-13

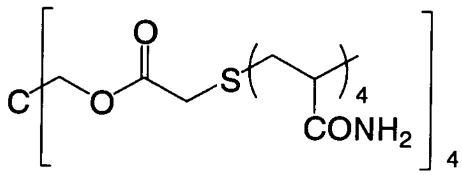

P-14

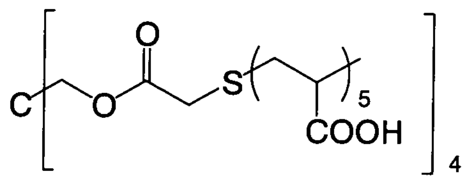

P-15

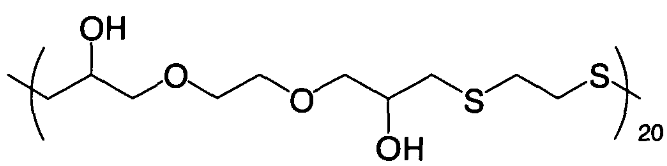

P-16

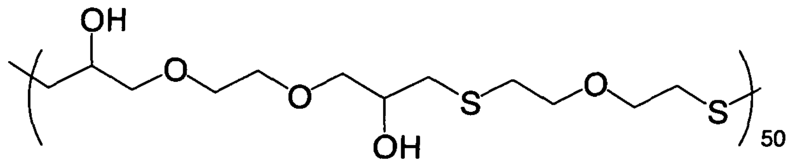

P-17

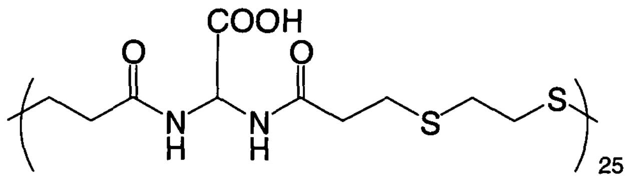

P-18

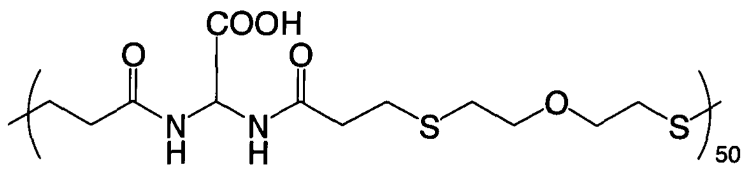

P-19

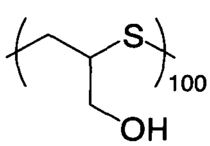

P-20

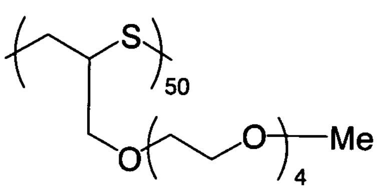

P-21

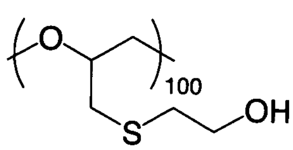

P-22 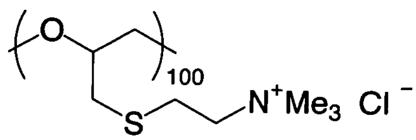

P-23 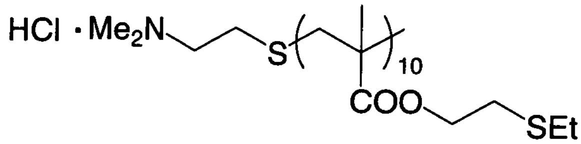

P-24 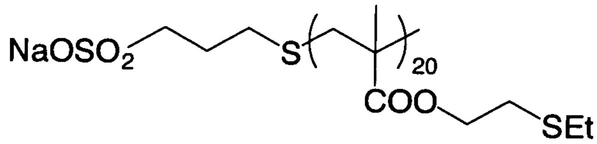

P-25 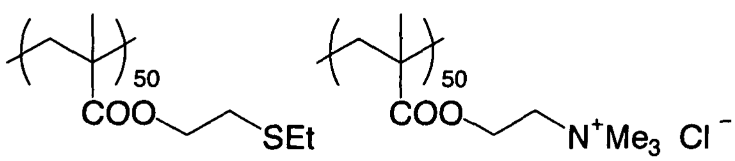

P-26 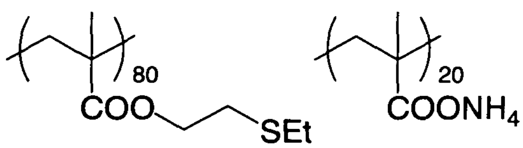

P-27 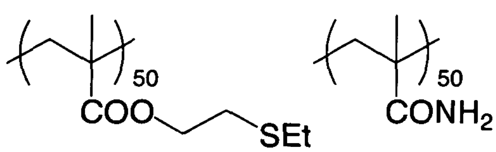

It is preferred that the polymer used in the invention is soluble in water or a water-miscible organic solvent from the viewpoint of application to the support. Further, the polymer may be used as an aqueous dispersion latex, so that the polymer is not particularly restricted.

Among the above-mentioned sulfur-containing compounds, the thioether compounds, the thiourea compounds, the sulfoxide compounds, the heterocyclic mercapto compounds, and the sulfur-containing heterocyclic compounds are preferable.

The sulfur-containing compound may be a low molecular weight compound or a high molecular weight compound, and may be water-soluble or oil-soluble. The sulfur-containing compound may be applied as an emulsion. Particularly preferred sulfur-containing compounds are the thioether compounds, the thiourea compounds, and the sulfoxide compounds.

The amount of the sulfur-containing compound is preferably 0.1 to 5 $g/m^2$, particularly preferably 0.3 to 3 $g/m^2$ in the ink-receiving layer.

In the invention, the ink-receiving layer of the ink-jet recording medium may be such that the inks are absorbed into spaces between fine particles contained in the layer, or such that the inks are absorbed into water-soluble resin contained in the layer. The former type ink-receiving layer is mainly described below.

In the ink-jet recording medium having the former type ink-receiving layer disposed on the support, the ink-receiving layer contains at least the fine particles and a water-soluble resin in addition to the sulfur-containing compound. The ink-receiving layer containing the fine particles has a porous structure to exhibit an improved ink absorption property. The amount of the solid fine particles in the ink-receiving layer is preferably 50% by mass or more, and more preferably 60% by mass or more. The ink-receiving layer containing this amount of the fine particles has a higher porosity, thereby providing the ink-jet recording medium with sufficient ink absorbency. It should be noted that the amount of the solid fine particles is a mass ratio of the solid fine particles to the total mass of components other than water of a composition for the ink-receiving layer.

(Fine particles)

It is preferred that the fine particles used in the invention comprise inorganic fine particles from the viewpoint of the ink absorbency and the image stability, though the fine particles may comprise organic fine particles.

The organic fine particles are preferably fine polymer particles obtained by emulsion polymerization, microemulsion polymerization, soap-free polymerization, seed polymerization, dispersion polymerization, suspension polymerization, etc. Specifically, powders, latexes, and emulsions of a polyethylene, a polypropylene, a polystyrene, a polyacrylate, a polyamide, a silicon resin, a phenol resin, a natural polymer, etc. may be used as the fine polymer particles.

The inorganic fine particles may comprise a silica (e.g. a precipitated silica, a colloidal silica, a silica gel, a silica sol, a pyrolytic silica, etc.), a cation-modified silica (e.g. an alumina-treated silica, in an exemplary and non-limiting embodiment), a cationic polymeric binder-treated silica, aluminum oxide, magnesium oxide, magnesium carbonate, calcium carbonate, a pseudo-boehmite, barium sulfate, a clay, titanium dioxide, a gypsum, calcium silicate, a zeolite, a kaolinite, a halloysite, a mica, a talc, calcium sulfate, zinc oxide, zinc hydroxide, aluminum silicate, magnesium silicate, zirconium oxide, zirconium hydroxide, cerium oxide, lanthanum oxide, yttrium oxide, etc. The inorganic fine particles preferably comprise fine silica particles, a colloidal silica, fine alumina particles, or a pseudo-boehmite, to form an excellent porous structure. The fine particles may be used as primary particles or secondary particles. The average primary particle size of the fine particles is preferably 2 μm or less, and more preferably 200 nm or less.

The inorganic fine particles more preferably comprise fine silica particles having an average primary particle size of 30 nm or less, a colloidal silica having an average primary particle size of 30 nm or less, fine alumina particles having an average primary particle size of 20 nm or less, or a pseudo-boehmite having an average pore radius of 2 to 15 nm, and further preferably comprise the fine silica particles, the fine alumina particles, or the pseudo-boehmite.

The silicas for the fine silica particles are generally classified into wet-method silicas and dry-method silicas (fumed silicas) depending on the preparation method such as a wet method and a dry method (gas phase method). In the wet method, the wet-method silica is generally prepared by the steps of acid-decomposing a silicate salt, polymerizing the resulting active silica moderately, and aggregating and precipitating the polymer to obtain a hydrated silica. In the gas phase method, the fumed silica is generally prepared as an anhydrous silica by a flame hydrolysis method where a silicon halide is subjected to gas phase high temperature hydrolysis, or by an arc method where a silica sand and a coke are heat-reduced and vaporized by an arc in an electric furnace, and oxidized by air. The term "fumed silica" means the anhydrous silica obtained by the gas phase method. The fine silica particles used in the invention is most preferably the fine particles of the fumed silica.

The fumed silica is different from the hydrated silica in properties, because they are different in density of surface silanol groups, presence of pores, etc. The fumed silica has a high porosity, thereby suitable for forming a three-dimensional structure. Though the reason for the high porosity is not clear, it is presumed that the fumed silica has a low surface silanol group density of 2 to 3 $groups/nm^2$ to form a thin flocculate, and as a result, has the high porosity. The hydrated silica has a high surface silanol group density of 5 to 8 $groups/nm^2$, to easily form a thick aggregation of the particles.

The fumed silica has a particularly large specific surface area, to be excellent in the absorbency and retention

of the inks. Further, the fumed silica exhibits a low refractive index, thereby being advantageous in that a transparent ink-receiving layer, which can form an image with a high color density and excellent hue, can be obtained by dispersing the fumed silica into a suitable particle size. The ink-receiving layer is preferably transparent when used not only for OHP, etc. needing the transparency but also for a recording sheet such as gloss photo paper. The transparent ink-receiving layer can form an image with a high color density, excellent hue and glossiness.

The average primary particle size of the fumed silica particles is preferably 30 nm or less, more preferably 20 nm or less, particularly preferably 10 nm or less, and most preferably 3 to 10 nm. The fine particles of the fumed silica are easily adhered to each other due to hydrogen bonds between the silanol groups. Thus, when the average primary particle size is 30 nm or less, the porosity of the fumed silica is increased to effectively improve the ink absorption of the ink-receiving layer.

The fine silica particles may be used with the above-mentioned other fine particles. In the case of using the fumed silica particles with the other fine particles, the mass ratio of the fumed silica particles to all the fine particles is preferably 30% by mass or more, and more preferably 50% by mass or more.

The fine alumina particles, the hydrated alumina particles, mixtures thereof, and composites thereof are also preferably used as the inorganic fine particles in the invention. The hydrated aluminas can efficiently absorb and fix the inks, and among them, the pseudo-boehmites ($Al_2O_3 \cdot nH_2O$) are particularly preferable. Various hydrated alumina particles may be used in the invention, and the hydrated alumina particles prepared from a boehmite sol are preferably used to form a smooth ink-receiving layer.

In the pore structure of the pseudo-boehmite, the average pore radius of the pseudo-boehmite is preferably 1 to 30 nm, and more preferably 2 to 15 nm. The pore volume of the pseudo-boehmite is preferably 0.3 to 2.0 mL/g, and more preferably 0.5 to 1.5 mL/g. The pore radius and the pore volume are measured by a nitrogen adsorption/desorption method, using a gas adsorption/desorption analyzer such as OMNISORP 369 (trade name) available from Coulter Corporation, etc.

The fine alumina particles are preferably prepared by a gas phase method to increase the specific surface area. The average primary particle size of the fine alumina particles prepared by a gas phase method is preferably 30 nm or less, and more preferably 20 nm or less.

The above-described fine particles may be used for the ink-receiving layer of the ink-jet recording medium according to an embodiment disclosed in JP-A Nos. 10-81064, 10-119423, 10-157277, 10-217601, 11-348409, 2001-138621, 2000-43401, 2000-211235, 2000-309157, 2001-96897, 2001-138627, 11-91242, 8-2087, 8-2090, 8-2091, 8-2093, 8-174992, 11-192777, 2001-301314, etc., preferably.

(Water-soluble resin)

In the ink-jet recording medium for the invention, the ink-receiving layer preferably contains the water-soluble resin with the fine particles.

Examples of the water-soluble resins include polyvinyl alcohol-based resins having a hydroxyl group as a hydrophilic moiety, such as polyvinyl alcohol (PVA), acetoacetyl-modified PVA, cation-modified PVA, anion-modified PVA, silanol-modified PVA, and polyvinyl acetal; cellulose-based resin such as methylcellulose (MC), ethylcellulose (EC), hydroxyethylcellulose (HEC), carboxymethylcellulose (CMC), hydroxypropylcellulose (HPC), hydroxyethylmethylcellulose, and hydroxypropylmethylcellulose; chitin resins; chitosan resins; starches; ether bond-containing resins such as polyethylene oxide (PEO), polypropylene oxide (PPO), polyethylene glycol (PEG), and polyvinyl ether (PVE); and carbamoyl group-containing resins such as polyacrylamide (PAAM), polyvinylpyrrolidone (PVP), and polyacrylic hydrazide.

Polyacrylate salts, maleic acid resins, alginate salts, gelatins, etc., which have a carboxy group as a dissociative group, may also be used as the water-soluble resin.

Among the resins, the polyvinyl alcohol-based resins (PVA) are particularly preferred. Examples of the polyvinyl alcohol-based resins are described in JP-B Nos. 4-52786, 5-67432, and 7-29479, Japanese Patent No. 2537827, JP-B No. 7-57553, Japanese Patent Nos. 2502998 and 3053231, JP-A No. 63-176173, Japanese Patent No. 2604367, JP-A Nos. 7-276787, 9-207425, 11-58941, 2000-135858, 2001-205924, 2001-287444, 62-278080, and 9-39373, Japanese Patent No. 2750433, JP-A Nos. 2000-158801, 2001-213045, 2001-328345, 8-324105, 11-348417, 58-181687, 10-259213, 2001-72711, 2002-103805, 2000-63427, 2002-308928, 2001-205919, 2002-264489, etc.

Examples of the water-soluble resins other than the polyvinyl alcohol-based resins further include compounds described in JP-A Nos. 2001-205919 and 2002-264489, and compounds described in JP-A No. 11-165461, paragraphs [0011] to [0014], etc.

The water-soluble resins may be used alone or in combination. In the ink-jet recording medium for the invention, the mass ratio of the water-soluble resins to the total mass of solid contents in the ink-receiving layer is preferably 9 to 40% by mass, and more preferably 12 to 33% by mass.

The polyvinyl alcohol-based resin may be used in combination with the other water-soluble resin, and in this

case, the mass ratio of the polyvinyl alcohol-based resin to all the water-soluble resins is preferably 50% by mass or more, and more preferably 70% by mass or more.

The water-soluble resins and the fine particles, which are main components of the ink-receiving layer, may be used singly or as a mixture of a plurality of materials, respectively.

The type of the water-soluble resin combined with the fine particles, particularly the fine silica particles, is important from the viewpoint of the transparency. In the case of using the fumed silica, the water-soluble resin is preferably a polyvinyl alcohol-based resin, more preferably a polyvinyl alcohol-based resin having a saponification degree of 20 to 100%, particularly preferably a polyvinyl alcohol-based resin having a saponification degree of 30 to 99.5%.

The polyvinyl alcohol-based resin has a hydroxyl group. The hydroxyl group can form a hydrogen bond with a surface silanol group on the fine silica particles, to easily provide a three-dimensional network structure containing the secondary particles of the fine silica particles as network units. It is considered that the ink-receiving layer has a high porosity and a sufficient strength due to the formation of the three-dimensional network structure.

In the ink-jet recording method of the invention, the porous ink-receiving layer formed as above can rapidly absorb the inks with the capillarity. This ink-receiving layer can form a dot with a high circularity without ink blurs.

(Mass ratio between fine particles and water-soluble resin)

In the ink-jet recording medium, the mass ratio of the fine particles (x) to the water-soluble resin (y) in the ink-receiving layer (PB ratio x/y) remarkably affects the structure and the strength of the ink-receiving layer. Specifically, when the mass ratio (the PB ratio) is increased, the porosity, the pore volume, and the surface area per a unit mass of the ink-receiving layer are increased, and the density and the strength are decreased.

In the invention, the mass ratio (the PB ratio x/y) is preferably 1.5 to 10. When the PB ratio is excessively large, there is a case where the layer strength is reduced or the layer is cracked during a drying process. On the other hand, when the PB ratio is too small, the pores of the ink-receiving layer are easily clogged by the resin to reduce the porosity, so that the ink absorbency of the layer is lowered.

When the ink-jet recording medium is passed through a feed system of an ink-jet printer, a stress is occasionally applied to the recording medium. Thus, the ink-receiving layer needs to have a sufficient layer strength. Further, the sufficient layer strength is needed also from the viewpoint of preventing the cracking and peeling of the ink-receiving layer while cutting the ink-jet recording medium into a sheet. Considering these cases, the PB ratio x/y is more preferably 5 or less. Further, the PB ratio x/y is more preferably 2 or more from the view of securing a high-speed ink absorbency in an ink-jet printer.

Specifically, for example, in the case where the fumed silica fine particles having an average primary particle size of 20 nm or less and the water-soluble resin are completely dispersed in an aqueous solution at the PB ratio x/y of 2 to 5 to obtain a coating liquid, and the coating liquid is applied to the support and dried, a light-transmittable, porous, ink-receiving layer, which has a three-dimensional network structure using the secondary particles of the silica as the network chain units, can be easily formed with an average pore diameter of 30 nm or less, a porosity of 50 to 80%, a specific pore volume of 0.5 ml/g or more, and a specific surface area of 100 $m^2/g$ or more.

(Crosslinking agent)

In the ink-jet recording medium according to the invention, the ink-receiving layer containing the water-soluble resin preferably contains a crosslinking agent that can cross-link the water-soluble resin. The ink-receiving layer is particularly preferably a porous layer, which uses the combination of the fine particles and the water-soluble resin, and is hardened by a crosslinking reaction between the crosslinking agent and the water-soluble resin.

A boron compound is preferably used for cross-linking the water-soluble resin, particularly a polyvinyl alcohol. Examples of the boron compounds include borax; boric acid; borates such as orthoborates, $InBO_3$, $ScBO_3$, $YBO_3$, $LaBO_3$, $Mg_{\square}(BO_3)_2$, and Co3(B03)2; diborates such as $Mg_2B_2O_5$ and $CO_2B_2O_5$; metaborates such as $LiBO_2$, $Ca(BO_2)_2$, $NaBO_2$, and $KBO_2$; tetraborates such as $Na_2B_4O_7 \cdot 10H_2O$; and pentaborates such as $KB_5O_8 \cdot 4H_2O$, $Ca_2B_6O_{11} \cdot 7H_2O$, and $CsB_5O_5$. Among the boron compounds, preferred are borax, boric acid and borates, which can rapidly cross-link the water-soluble resin, and particularly preferred are boric acid.

The crosslinking agent may be a compound other than the boron compounds. Examples of the crosslinking agents include aldehyde compounds such as formaldehyde, glyoxal, succinaldehyde, glutaraldehyde, dialdehyde starch, and dialdehyde derivatives of plant gum; ketone compounds such as diacetyl, 1,2-cyclopentanedione, and 3-hexene-2,5-dione; activated halogen compounds such as bis(2-chloroethyl)urea, bis(2-chloroethyl)sulfone, and 2,4-dichloro-6-hydroxy-s-triazine sodium salt; activated vinyl compounds such as divinylsulfone, 1,3-bis(vinylsulfonyl)-2-propanol, N,N'-ethylenebis(vinylsulfonylacetamide), divinyl ketone, 1,3-bis(acryloyl)urea, and 1,3,5-triacryloyl-hexahydro-s-triazine; N-methylol compounds such as dimethylolurea and methyloldimethylhydantoin; melamine compounds such as trimethylolmelamine, alkylated methylolmelamine, melamine, benzoguanamine, and melamine resins; epoxy compounds such as ethylene glycol diglycidyl ether, propylene glycol diglycidyl ether, polyethylene glycol diglycidyl ether, diglycerin polyglycidyl ether, spiroglycol diglycidyl ether, and phenol resin polyglycidyl ether; isocyanate compounds such as 1,6-hexamethylene diisocyanate and xylylene diisocyanate; aziridine compounds described in USP Nos. 3,017,280 and 2,983,611, etc.; carboxyimide compounds described in USP No. 3,100,704, etc.; ethyleneimine compounds such as 1,6-hexamethylene-N,N'-bisethylene urea; halogenated carboxyaldehyde compounds such as mucochloric acid and mucophenoxychloric acid; dioxane compounds such as 2,3-dihydroxydioxane; metal-containing compounds such as titanium lactate, aluminium sulfate, chrome alum, potassium alum, zirconyl acetate, and chromium acetate; polyamine compounds such as tetraethylene pentamine; hydrazide compounds such as adipic dihydrazide; low molecular compounds and polymers having 2 or more oxazoline groups; polyacid anhydrides, acid chlorides, and bissulfonate compounds described in USP Nos. 2,725,294, 2,725,295, 2,726,162, 3,834,902, etc.; and active ester compounds described in USP Nos. 3,542,558, 3,251,972, etc.

The crosslinking agents may be used singly or in combination with each other.

In the invention, the crosslinking and hardening is preferably achieved such that the crosslinking agent is added to a coating liquid containing the fine particles and the water-soluble resin, etc. (hereinafter referred to as the coating liquid A) and/or a basic solution having a pH value of 8 or more (hereinafter referred to as the coating liquid B), the coating liquid A is applied and dried to form a coating layer, and the basic solution is added to the coating liquid A (1) at the same time the coating liquid A is applied or (2) in the process of drying the applied coating liquid A before the applied liquid shows a falling drying rate.

Usable as a base contained in the basic solution having a pH value of 8 or more (the coating liquid B) are polymer mordants having a primary to tertiary amino group to be hereinafter described; organic or inorganic compounds with basicity, including metal complexes and organic acid salts; base precursors; etc. Examples of the bases include ammonium salts; low-molecular compounds and oligomer compounds having a primary to tertiary amino group; hydroxides of quaternary ammonium salts; nitrogen-containing heterocyclic compounds; hydroxides of alkaline or alkaline earth metals; and acid salts.

Specific examples of the bases include aqueous ammonia, ammonium carbonate, ammonium acetate, ammonium zirconium carbonate, ammonium chloride, ammonium sulfate, ammonium toluenesulfonate, polymers having an acidic group, ammonium salts of latexes, triethanolamine, triethylamine, butylamine, diallylamine, piperidine, 2-methylpiperidine, dimethylpiperidine, imidazole, tetramethylammonium hydroxide, sodium acetate, guanidine, etc.

At least one base in the coating liquid B is preferably an ammonium salt compound in the view of controlling the surface pH of the ink-jet recording medium.

The crosslinking agent of the boron compound is preferably added as follows. In the case of forming the ink-receiving layer by applying the coating liquid containing the fine particles and the water-soluble resin such as the polyvinyl alcohol (the coating liquid A) and by cross-linking and hardening thus-obtained coating layer, the cross-linking and hardening is preferably achieved by adding the basic solution having a pH value of 8 or more (the coating liquid B) to the coating liquid A, (1) at the same time the coating liquid A is applied or (2) in the process of drying the applied coating liquid A before the applied liquid shows a falling drying rate. The crosslinking agent of the boron compound may be added to one or both of the coating liquid A and the coating liquid B.

In the ink-receiving layer for the invention, the mass ratio of the crosslinking agent to the water-soluble resin is preferably 1 to 50% by mass, and more preferably 5 to 40% by mass.

(Mordant)

In the ink-jet recording medium for the invention, it is preferred that the ink-receiving layer contains a mordant to improve the waterproofness of an image and the resistance to blurs with time.

Preferred as the mordant are organic mordants of cationic polymers (cationic mordants) and inorganic mordants. In the ink-receiving layer, the mordant interacts with a liquid ink containing an anionic dye as a coloring agent to stabilize the coloring agent, and thereby improve the waterproofness and the resistance to blurs. The organic or inorganic mordants may be used singly, and the organic mordant and the inorganic mordant may be used in combination.

The mordant may be added to the coating liquid A containing the fine particles and the water-soluble resin. When it is feared that the mordant may form an aggregation with the fine particles, the mordant may be added to the coating liquid B.

As the cationic mordant, polymer mordants having a cationic group of a primary to tertiary amino group or a quaternary ammonium base are preferably used, though cationic non-polymer mordants may be used in the invention. The mordant preferably has a mass-average molecular weight of 500 to 100,000 to improve the ink absorbency of the ink-receiving layer.

Examples of preferred polymer mordants include homopolymers of a mordant monomer having a primary to

tertiary amino group or a salt thereof, or a quaternary ammonium base group; and copolymers and condensation polymers of the mordant monomer and another monomer (hereinafter referred to as a non-mordant monomer). The polymer mordant may be a water-soluble polymer or a water-dispersable latex particle.

Examples of the mordant monomers include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride; trimethyl-p-vinylbenzylammonium bromide, trimethyl-m-vinylbenzylammonium bromide, trimethyl-p-vinylbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-methyl-N-2-(4-vinylphenyl)ethylammonium chloride, N,N-diethyl-N-methyl-N-2-(4-vinylphenyl)ethylammonium acetate; products of quaternarizing N,N-dimethylaminoethyl (meth)acrylate, N,N-diethylaminoethyl (meth)acrylate, N,N-dimethylaminopropyl (meth)acrylate, N,N-diethylaminopropyl (meth)acrylate, N,N-dimethylaminoethyl (meth)acrylamide, N,N-diethylaminoethyl (meth)acrylamide, N,N-dimethylaminopropyl (meth)acrylamide, or N,N-diethylaminopropyl (meth)acrylamide, by methyl chloride, ethyl chloride, methyl bromide, ethyl bromide, methyl iodide, or ethyl iodide; and sulfonate salts, alkyl sulfonate salts, acetate salts, and alkylcarboxylate salts, obtained by substituting anions of the quaternarized products.

Specific examples thereof include monomethyl-diallylammonium chloride, trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, trimethyl-3-(methacryloyloxy)propylammonium chloride, triethyl-3-(methacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride; and N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, and trimethyl-3-(acryloylamino)propylammonium acetate.

The examples further include N-vinylimidazole, N-vinyl-2-methylimidazole, etc. as a copolymerizable monomer.

Further, allylamine, diallylamine, and derivatives and salts thereof may be used in the invention. Examples of such compounds include allylamine; allylamine hydrochloride; allylamine acetate; allylamine sulfate; diallylamine; diallylamine hydrochloride; diallylamine acetate; diallylamine sulfate; diallylmethylamine and salts thereof such as a hydrochloride salt, an acetate salt, and a sulfate salt; diallylethylamine and salts thereof such as a hydrochloride salt, an acetate salt, and a sulfate salt; and diallyldimethylammonium salts, a counter anion thereof being a chloride ion, an acetate ion, a sulfate ion, etc. The derivatives of allylamine or diallylamine are poor in polymerization activity. Thus, in general, the derivative is converted into a salt and polymerized in the salt state, and then, the ammonium salt group is converted into the amino group if necessary.

Vinylamine polymers and salts thereof, which are obtained by polymerizing a monomer such as N-vinylacetamide and N-vinylformamide and by hydrolyzing the resultant polymer, may be used in the invention.

The non-mordant monomer is a monomer, which has no basic or cationic moiety such as a primary to tertiary amino group or a salt thereof, and a quaternary ammonium group, thereby having no or substantially small activity for interacting with a dye in an ink for ink-jet recording.

Examples of the non-mordant monomers include alkyl (meth)acrylates; cycloalkyl (meth)acrylate such as cyclohexyl (meth)acrylate; aryl (meth)acrylate such as phenyl (meth)acrylate; aralkyl (meth)acrylate such as benzyl (meth)acrylate; aromatic vinyl compounds such as styrene, vinyltoluene, and $\alpha$-methylstyrene; vinyl esters such as vinyl acetate and vinyl propionate; allyl esters such as allyl acetate; halogen-containing monomers such as vinylidene chloride and vinyl chloride; vinyl cyanides such as (meth)acrylonitrile; and olefin compounds such as ethylene and propylene.

The alkyl group of the alkyl (meth)acrylate preferably has 1 to 18 carbon atoms. Examples of such alkyl (meth) acrylates include methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate, and stearyl (meth)acrylate.

Among them, methyl acrylate, ethyl acrylate, methyl methacrylate, ethyl methacrylate, and hydroxyethyl methacrylate are preferred examples.

The non-mordant monomers may be used alone or in combination.

Examples of the preferred polymer mordants further include cyclic amine resins and derivatives thereof including copolymers, such as polydiallyldimethylammonium chloride, copolymers of diallyldimethylammonium chloride and another monomer (the mordant monomer or the non-mordant monomer), copolymers of diallyldimethylammonium chloride and $SO_2$, polydiallylmethylamine hydrochloride, and polydiallylamine hydrochloride; polymers and copolymers of a secondary amino-, tertiary amino-, or quaternary ammonium salt-substituted alkyl (meth)acrylate, such as polydiethylmethacryloyloxyethylamine, polytrimethylmethacryloyloxyethylammonium chloride, polydimethylbenzylmethacryloyloxyethylammonium chloride, and polydimethylhydroxyethylacryloyloxyethylammonium chloride; polyamine resins such as polyethylene imines and derivatives thereof, polyallylamine and derivatives thereof, and polyvinylamine and derivatives thereof; polyamide resins such as polyamide-polyamine resins and polyamide epichlorohydrin resins; polysaccharides such as cationized starchs, and chitosans and derivatives thereof; dicyandiamide derivatives such as dicyandiamideformalin polycondensation products and dicyandiamide diethylenetriamine polycondensation products; polyamidines and derivatives thereof; dialkylamine epichlorohydrin addition polymerization products and derivatives thereof, such as dimethylamine epichlorohydrin addition polymerization products; and polymers and copolymers of styrene compounds having a quaternary ammonium salt-substituted alkyl group.

Specific examples of the polymer mordants include compounds described in JP-A Nos. 48-28325, 54-74430, 54-124726, 55-22766, 55-142339, 60-23850, 60-23851, 60-23852, 60-23853, 60-57836, 60-60643, 60-118834, 60-122940, 60-122941, 60-122942, 60-235134 and 1-161236; USP Nos. 2,484,430, 2,548,564, 3,148,061, 3,309,690, 4,115,124, 4,124,386, 4,193,800, 4,273,853, 4,282,305 and 4,450,224; JP-A Nos. 1-161236, 10-81064, 10-157277, 10-217601, 2001-138621, 2000-211235, 2001-138627 and 8-174992; JP-B Nos. 5-35162, 5-35163, 5-35164 and 5-88846; and Japanese Patent Nos. 2648847 and 2661677.

The inorganic mordants may be used in the invention. Examples of the inorganic mordants include water-soluble polyvalent metal salts, hydrophobic metal salts, etc.

The inorganic mordant may be a salt or a complex of metal selected from the group consisting of magnesium, aluminum, calcium, scandium, titanium, vanadium, manganese, iron, nickel, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten, and bismuth.

Specific examples of the inorganic mordants include calcium acetate, calcium chloride, calcium formate, calcium sulfate, barium acetate, barium sulfate, barium phosphate, manganese chloride, manganese acetate, manganese formate dihydrate, ammonium manganese sulfate hexahydrate, copper (II) chloride, copper (II) ammonium chloride dihydrate, copper sulfate, cobalt chloride, cobalt thiocyanate, cobalt sulfate, nickel sulfate hexahydrate, nickel chloride hexahydrate, nickel acetate tetrahydrate, nickel ammonium sulfate hexahydrate, nickel amidosulfate tetrahydrate, aluminum sulfate, aluminum alum, aluminum sulfite, aluminum thiosulfate, polyaluminum chloride, aluminum nitrate nonahydrate, aluminum chloride hexahydrate, ferrous bromide, ferrous chloride, ferric chloride, ferrous sulfate, ferric sulfate, zinc phenolsulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconyl acetate, zirconyl sulfate, ammonium zirconium carbonate, zirconyl stearate, zirconyl octanoate, zirconyl nitrate, zirconium oxychloride, zirconium hydroxychloride, chromium acetate, chromium sulfate, magnesium sulfate, magnesium chloride hexahydrate, magnesium citrate nonahydrate, sodium phosphotungstate, tungsten sodium citrate, 12-tungstophosphoric acid n-hydrate, 12-tungstosilicic acid 26-hydrate, molybdenum chloride, 12-molybdophosphoric acid n-hydrate, gallium nitrate, germanium nitrate, strontium nitrate, yttrium acetate, yttrium chloride, yttrium nitrate, indium nitrate, lanthanum nitrate, lanthanum chloride, lanthanum acetate, lanthanum benzoate, cerium chloride, cerium sulfate, cerium octanoate, praseodymium nitrate, neodymium nitrate, samarium nitrate, europium nitrate, gadolinium nitrate, dysprosium nitrate, erbium nitrate, ytterbium nitrate, hafnium chloride, bismuth nitrate, etc.

The inorganic mordant used in the invention is preferably an aluminum-containing compound, a titanium-containing compound, a zirconium-containing compound, a compound, salt or complex containing a metal of Group IIIB of the Periodic Table of Elements.

The amount of the mordant is preferably 0.01 to 10 $g/m^2$, and more preferably 0.1 to 5 $g/m^2$, per a unit area of the ink-receiving layer.

(Other components)

The ink-jet recording medium used in the invention may further contain a known additive such as an acid, an ultraviolet absorber, an antioxidant, a fluorescent whitening agent, a monomer, a polymerization initiator, a polymerization inhibitor, an anti-blur, an antiseptic agent, a viscosity stabilizer, an antifoaming agent, a surfactant, a antistatic agent, a matting agent, an anti-curling agent, and a water resistance-imparting agent, if necessary.

In the invention, the ink-receiving layer may contain an acid. The surface pH of the ink-receiving layer is preferably controlled by adding the acid to increase the yellowing resistance of the white background portions, and the surface pH is preferably 3 to 8, and more preferably 4 to 7. In the invention, the surface pH is measured by the A

method (the application method) established by Japan Technical Association of the Pulp and Paper Industry (J. TAPPI). For example, the surface pH may be measured by using a pH indicator set MPC for paper surface manufactured by Kyoritsu Chemical-Check Lab., Corp. according to the A method.

Specific examples of the acids include formic acid, acetic acid, glycolic acid, oxalic acid, propionic acid, malonic acid, succinic acid, adipic acid, maleic acid, malic acid, tartaric acid, citric acid, benzoic acid, phthalic acid, isophthalic acid, glutaric acid, gluconic acid, lactic acid, aspartic acid, glutamic acid, salicylic acid, metal salicylates (salts of Zn, Al, Ca, Mg, etc.), methanesulfonic acid, itaconic acid, benzenesulfonic acid, toluenesulfonic acid, trifluoromethanesulfonic acid, styrenesulfonic acid, trifluoroacetic acid, barbituric acid, acrylic acid, methacrylic acid, cinnamic acid, 4-hydroxybenzoic acid, aminobenzoic acid, naphthalenedisulfonic acid, hydroxybenzenesulfonic acid, toluenesulfinic acid, benzenesulfinic acid, sulfanilic acid, sulfamic acid, α-resorcinic acid, β-resorcinic acid, γ-resorcinic acid, gallic acid, fluoroglycine, sulfosalicylic acid, ascorbic acid, erythorbic acid, bisphenolic acid, hydrochloric acid, nitric acid, sulfuric acid, phosphoric acid, polyphosphoric acid, boric acid, boronic acid, and acidic compounds among the above-described mordants. The amount of the acid added may be determined such that the surface pH of the ink-receiving layer is adjusted to 3 to 8, particularly 4 to 7.

The acid may be converted to a salt of a metal such as sodium, potassium, calcium, cesium, zinc, copper, iron, aluminum, zirconium, lanthanum, yttrium, magnesium, strontium and cerium; or an amine salt of ammonia, triethylamine, tributylamine, piperazine, 2-methylpiperazine, polyallylamine, etc.

The ink-receiving layer preferably contains an agent for increasing the storability, such as an ultraviolet absorber, an antioxidant, and an anti-blur.

Examples of the ultraviolet absorbers, the antioxidants and the anti-blurs include alkylated phenol compounds including hindered phenol compounds, alkylthiomethylphenol compounds, hydroquinone compounds, alkylated hydroquinone compounds, tocopherol compounds, thiodiphenylether compounds, compounds having a thioether bond, bisphenol compounds, O-, N-, or S-benzyl compounds, hydroxybenzyl compounds, triazine compounds, phosphnate compounds, acylaminophenol compounds, ester compounds, amide compounds, ascorbic acid, amine-based antioxidants, 2-(2-hydroxyphenyl)benzotriazole compounds, 2-hydroxybenzophenone compounds, acrylates, water-soluble or hydrophobic metal salts, organic metal compounds, metal complexes, hindered amine compounds including so-called TEMPO compounds, 2-(2-hydroxyphenyl)-1,3,5-triazine compounds, metal inactivators, phosphite compounds, phosphonite compounds, hydroxyamine compounds, nitrone compounds, peroxide scavengers, polyamide stabilizers, polyether compounds, basic auxiliary stabilizers, nucleus agents, benzofuranone compounds, indolinone compounds, phosphine compounds, polyamine compounds, thiourea compounds, urea compounds, hydrazide compounds, amidine compounds, sugar compounds, hydroxybenzoic acid compounds, dihydroxybenzoic acid compounds, trihydroxybenzoic acid compounds, etc.

Among them, alkylated phenol compounds, compounds having a thioether bond, bisphenol compounds, ascorbic acid, amine antioxidants, water-soluble or hydrophobic metal salts, organic metal compounds, metal complexes, hindered amine compounds, hydroxyamine compounds, polyamine compounds, thiourea compounds, urea compounds, hydrazide compounds, hydroxybenzoic acid compounds, dihydroxybenzoic acid compounds, and trihydroxybenzoic acid compounds are preferred.

Specific examples thereof include compounds described in JP-A Nos. 2002-240421, 2002-307822, 10-182621 and 2001-260519; JP-B Nos. 4-34953 and 4-34513; JP-A No. 11-170686; JP-B No. 4-34512; EP No. 1138509; JP-A Nos. 60-67190, 7-276808, 2001-94829, 47-10537, 58-111942, 58-212844, 59-19945, 59-46646, 59-109055, and 63-53544; JP-B Nos. 36-10466, 42-26187, 48-30492, 48-31255, 48-41572, 48-54965, and 50-10726; USP Nos. 2,719,086, 3,707,375, 3,754,919, and 4,220,711; JP-B Nos. 45-4699 and 54-5324; EP-A Nos. 223739, 309401, 309402, 310551, 310552, and 459416; GP-A No. 3435443; JP-A Nos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 63-88381, and 63-113536; JP-A Nos. 63-163351, 63-203372, 63-224989, 63-251282, 63-267594, 63-182484, 1-239282, 2-262654, 2-71262, 3-121449, 6-135154, 6-135153, 5-61166, 5-119449, 7-17138, 7-17145, and 7-25162; JP-B Nos. 48-43295 and 48-33212; USP Nos. 4,814,262 and 4,980,275; etc.

The other components may be used singly or in combination of 2 or more components. The components may be added in a state of an aqueous solution, a dispersion, a polymer dispersion, an emulsion, or an oil droplet. The components may be enclosed in microcapsules. In the ink-jet recording medium used in the invention, the amount of the other components is preferably 0.01 to 10 $g/m^2$.

To improve the dispersibility of the inorganic fine particles, the surface of the inorganic particles may be treated with a silane coupling agent, etc. The silane coupling agent preferably has, in addition to the moiety having activity for the coupling treatment, an organic functional group such as a vinyl group, an amino group (a primary to tertiary amino group, a quaternary ammonium salt group, etc.), an epoxy group, a mercapto group, a chloro group, an alkyl group, a phenyl group, and an ester group.

The coating liquids for the ink-receiving layer preferably contain a surfactant. The surfactant may be a cationic,

anionic, nonionic, ampholytic, fluorine-based, or silicon-based, surfactant.

Examples of the nonionic surfactants include polyoxyalkylene alkyl ethers and polyoxyalkylene alkyl phenyl ethers, such as diethylene glycol monoethyl ether, diethylene glycol diethyl ether, polyoxyethylene lauryl ether, polyoxyethylene stearyl ether, and polyoxyethylene nonyl phenyl ether; oxyethylene-oxypropylene block copolymers; sorbitan fatty acid esters such as sorbitan monolaurate, sorbitan monooleate, and sorbitan trioleate; polyoxyethylene sorbitan fatty acid esters such as polyoxyethylene sorbitan monolaurate, polyoxyethylene sorbitan monooleate, and polyoxyethylene sorbitan trioleate; polyoxyethylene sorbitol fatty acid esters such as tetraoleic acid polyoxyethylene sorbit; glycerin fatty acid esters such as glycerol monooleate; polyoxyethylene glycerin fatty acid esters such as polyoxyethylene glycerin monostearate and polyoxyethylene glycerin monooleate; polyoxyethylene fatty acid esters such as polyethylene glycol monolaurate and polyethylene glycol monooleate; polyoxyethylene alkylamines; acetylene glycols such as 2,4,7,9-tetramethyl-5-decyne-4,7-diol, ethylene oxide adducts thereof, and propylene oxide adducts thereof. The nonionic surfactant is preferably a polyoxyalkylene alkyl ether. The nonionic surfactant may be used in the coating liquid (A) and the coating liquid (B) to be hereinafter described. The nonionic surfactants may be used singly or in combination with each other.

Examples of the ampholytic surfactants include amino acid-based surfactants, carboxy ammonium betaine-based surfactants, sulfone ammonium betaine-based surfactants, ammonium sulfate betaine-based surfactants, imidazolium betaine-based surfactants, etc. For example, the surfactants described in USP No. 3,843,368, JP-A Nos. 59-49535, 63-236546, 5-303205, 8-262742, and 10-282619, Japanese Patent Nos. 2514194 and 2759795, and JP-A No. 2000-351269 may be used in the invention preferably. Among the above ampholytic surfactants, the amino acid-based surfactants, the carboxy ammonium betaine-based surfactants, and the sulfone ammonium betaine-based surfactants are preferred. The ampholytic surfactants may be used alone or in combination of 2 or more surfactants.

Examples of the preferred anionic surfactants include fatty acid salts such as sodium stearate and potassium oleate; alkylsulfate salts such as sodium laurylsulfate and triethanolamine laurylsulfate; sulfonate salts such as sodium dodecylbenzenesulfonate; alkyl sulfosuccinate salts such as sodium dioctyl sulfosuccinate; alkyldiphenyl ether disulfonate salts; and alkyl phosphate salts.

Examples of the cationic surfactants include alkylamine salts, quaternary ammonium salts, pyridinium salts, and imidazolium salts.

The fluorine-based surfactant may be a compound derived by electrolytic fluorination, telomerization, oligomerization, etc. via an intermediate having a perfluoroalkyl group. Examples of the fluorine-based surfactants include perfluoroalkyl sulfonate salts, perfluoroalkyl carboxylate salts, perfluoroalkyl ethylene oxide adducts, perfluoroalkyltrialkylammonium salts, perfluoroalkyl-containing oligomers, and perfluoroalkyl phosphate esters.

The silicon-based surfactant is preferably a silicon oil modified with an organic functional group. The silicon-based surfactant may have a structure where a side chain, both ends, or one end of the siloxane chain is modified with the organic functional group such as an amino group, a polyether group, an epoxy group, a carboxyl group, a carbinol group, an alkyl group, an aralkyl group, a phenol group, and a fluorine atom.

The amount of the surfactant is preferably 0.001 to 2.0%, and more preferably 0.01 to 1.0%, of the coating liquid for the ink-receiving layer. In the case of applying two or more coating liquids for forming the ink-receiving layer, the surfactant is preferably added to each coating liquid.

In the invention, the ink-receiving layer preferably contains an organic high boiling point solvent to prevent curling. The organic high boiling point solvent is a water-soluble or hydrophobic, organic compound that has a boiling point of 150°C or more under the atmospheric pressure. The organic high boiling point solvent may be in a state of liquid or solid at the room temperature, and may be a low molecular weight compound or a high molecular weight compound.

Specific examples of the organic high boiling point solvents include aromatic carboxylate esters such as dibutyl phthalate, diphenyl phthalate, and phenyl benzoate; aliphatic carboxylate esters such as dioctyl adipate, dibutyl sebacate, methyl stearate, dibutyl maleate, dibutyl fumarate, and triethyl acetylcitrate; phosphate esters such as trioctyl phosphate and tricrezyl phosphate; epoxy compounds such as epoxidized soybean oils and epoxidized fatty acid methyl esters; alcohol compounds such as stearyl alcohol, ethylene glycol, propylene glycol, diethylene glycol, triethylene glycol, glycerin, diethylene glycol monobutyl ether (DEGMBE), triethylene glycol monobutyl ether, glycerin monomethyl ether, 1,2,3-butanetriol, 1,2,4-butanetriol, 1,2,4-pentanetriol, 1,2,6-hexanetriol, thiodiglycol, triethanolamine, and polyethylene glycol; vegetable oils such as soybean oils and sunflower oils; and higher fatty acids such as linolic acid and oleic acid.

(Support)

The support used in the invention may be a transparent support comprising a transparent material such as plastic, or an opaque support comprising opaque material such as paper. To utilize the transparency of the ink-receiving layer, the support is preferably a transparent support or a high-glossy opaque support. A read-only optical disk such

as CD-ROM and DVD-ROM, a recordable optical disk such as CD-R and DVD-R, or a re-writable optical disk may be used as the support, the ink-receiving layer being formed on the label side.

The material for the transparent support is preferably transparent and resistant to radiation heat of an OHP device, a backlight display device, etc. Examples of the materials include polyesters such as polyethylene terephthalate (PET), polysulfones, polyphenylene oxides, polyimides, polycarbonates, and polyamides. The material is preferably a polyester, particularly preferably polyethylene terephthalate (PET).

The transparent support preferably has a thickness of 50 to 200 μm in view of handling, though the thickness is not particularly restricted.

The high-glossy opaque support is preferably such that the ink-receiving layer side surface thereof has a glossiness of 40% or more.

The glossiness is a value obtained according to JIS P-8142 (Test method for glossiness of 75 degree-mirror surface of paper and paper board) in the invention.

Specifically, examples of such high-glossy opaque supports include high-glossy paper supports composed of art paper, coat paper, cast-coated paper, baryta paper used for supports of silver salt photographs; high-glossy films obtained by adding a white pigment, etc. to a plastic film to make the film opaque, which may be subjected to a surface calendering treatment, the plastic film being composed of a polyester (e.g. polyethylene terephthalate (PET), etc.), a cellulose ester (e.g. nitrocellulose, cellulose acetate, cellulose acetate butyrate, etc.), a polysulfone, a polyphenylene oxide, a polyimide, a polycarbonate, a polyamide, etc.; and supports obtained by covering the paper support, the transparent support, or the high-glossy film containing the white pigment, etc. with a polyolefin layer that may or may not contain a white pigment.

Further, white pigment-containing, foamed polyester films (e.g. foamed PET containing fine polyolefin particles and having pores formed by drawing) are preferred as the high-glossy opaque support. Resin-coat paper used as photographic paper for silver salt photographs is also preferred.

The opaque support preferably has a thickness of 50 to 300 μm in view of handling, though the thickness is not particularly restricted.

The surface of the support is preferably subjected to a corona discharge treatment, a glow discharge treatment, a flame treatment, an ultraviolet irradiation treatment, etc. to improve the wetting characteristic and the adhesiveness.

Then, base paper for the resin-coat paper is described below in detail.

The base paper comprises wood pulp as a main material. Synthetic pulp such as polypropylene, or a synthetic fiber such as nylon and polyester may be added to the wood pulp if necessary. The wood pulp may be LBKP, LBSP, NBKP, NBSP, LDP, NDP, LUKP, or NUKP. The wood pulp preferably contains more LBKP, NBSP, LBSP, NDP, or LDP, having a more short fiber content.

It should be noted that the content of LBSP and/or LDP is preferably 10 to 70% by mass.

Preferred as the pulp are chemical pulp having a high purity (e.g. sulfate pulp, sulfurous acid pulp, etc.), and pulp having a high whiteness increased by a bleaching treatment. A sizing agent such as a higher fatty acid and an alkyl ketene dimmer; a white pigment such as calcium carbonate, talc, and titanium oxide; a paper-reinforcing agent such as starch, polyacrylamide, and polyvinyl alcohol; a fluorescent whitening agent; a water retention agent such as a polyethylene glycol compound; a dispersing agent; a softening agent such as a quaternary ammonium; etc. may be added to the base paper.

The freeness of the pulp, obtained according to CSF, is preferably 200 to 500 ml. Further, it is preferred that the fiber length after the beating is such that the total mass ratio of the 24 mesh residue and the 42 mesh residue, stipulated in JIS P-8207, is 30 to 70% by mass. The mass ratio of the 4 mesh residue is preferably 20% by mass or less.

The basis weight of the base paper is preferably 30 to 250 g, particularly preferably 50 to 200 g. The thickness of the base paper is preferably 40 to 250 μm. The base paper may be subjected to a calendering treatment to improve the smoothness in or after the papermaking. The density of the base paper, measured according to JIS P-8118, is generally 0.7 to 1.2 $g/m^2$.

The stiffness of the base paper is preferably 20 to 200 g under the condition of JIS P-8143.

The base paper may be coated with a surface sizing agent, which may be the same as the sizing agent to be added into the base paper.

The pH value of the base paper, measured by the hot water extraction method according to JIS P-8113, is preferably 5 to 9.

The right surface and the back surface of the base paper may be covered with polyethylenes, generally with a low-density polyethylene (LDPE) and/or a high-density polyethylene (HDPE). LLDPE, polypropylene, etc. may be used in addition to the polyethylenes.

Particularly, the polyethylene layer on the ink-receiving layer side preferably contains a rutile or anatase type titanium oxide, a fluorescent whitening agent, an ultramarine pigment, etc. in addition to the polyethylenes to improve the opacity, the whiteness, and the hue, as is often the case with photographic paper, etc. The mass ratio of the titanium

oxide to the polyethylenes is preferably 3 to 20% by mass, and more preferably 4 to 13% by mass. The thicknesses of the polyethylene layers on the right and back surfaces are preferably 10 to 50 μm, though the thicknesses are not particularly limited. An undercoat layer may be formed on the polyethylene layers to increase the adhesion to the ink-receiving layer. The undercoat layer preferably comprises an aqueous polyester, gelatin, or PVA. The thickness of the undercoat layer is preferably 0.01 to 5 μm.

The paper covered with the polyethylenes may be used as glossy paper, and may be such that the base paper is subjected to a so-called printing treatment in the process of extruding a molten polyethylene onto the surface of the base paper to coat the surface, to form a mat surface or a fine grain surface as common photographic paper.

A back coat layer may be formed on the support. The back coat layer may comprise a white pigment, a water-soluble binder, etc.

Examples of the white pigment contained in the back coat layer include inorganic pigments such as precipitated calcium carbonate, heavy calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudo-boehmite, aluminum hydroxide, alumina, lithopone, zeolite, hydrated halloysite, magnesium carbonate, and magnesium hydroxide; and organic pigments such as styrene-based plastic pigments, acrylic plastic pigments, polyethylenes, microcapsules, urea resins, and melamine resins.

Examples of the water-soluble binders used for the back coat layer include water-soluble polymers such as styrene/maleate salt copolymers, styrene/acrylate salt copolymers, polyvinyl alcohols, silanol-modified polyvinyl alcohols, starches, cationized starches, caseins, gelatins, carboxymethyl celluloses, hydroxyethyl celluloses, and polyvinylpyrrolidones; and water-dispersable polymers such as styrene butadiene latexes and acrylic emulsions.

The back coat layer may contain the other components such as an antifoaming agent, a foam inhibitor, a dye, a fluorescent whitening agent, an antiseptic agent, and a water resistance-imparting agent.

(Preparation of ink-jet recording medium)

The ink-receiving layer of the ink-jet recording medium according to the invention is preferably formed by a Wet-on-Wet method comprising the steps of applying a first coating liquid (hereinafter referred to also as a coating liquid (A)), which contains at least the fine particles and the water-soluble resin, to the support; adding a second coating liquid (hereinafter referred to also as a coating liquid (B)), which contains at least the mordant and shows a pH value of 8 or more, to the first coating liquid (1) at the same time the first coating liquid is applied or (2) in the process of drying the applied first coating liquid before the applied liquid shows a falling drying rate; and cross-linking the water-soluble resin to harden the coating liquids. The sulfur-containing compound is preferably contained in at least one of the first coating liquid (the coating liquid (A)) and the second coating liquid (the coating liquid (B)). Also, the crosslinking agent to cross-link the water-soluble resin is preferably contained in at least one of the coating liquids (A) and (B).

The Wet-on-Wet method to form the cross-linked, hardened ink-receiving layer is preferred from the viewpoints of improving the ink absorbency and preventing the layer from cracking.

In the ink-receiving layer formed by the above method, many of the mordant molecules are preferably distributed around the surface of the ink-receiving layer, whereby the jetted coloring matters are efficiently and sufficiently mordanted to increase the waterproofness of the recorded letters and images. A part of the mordant may be contained in the coating liquid (A), and in this case, the coating liquids (A) and (B) may contain the same or different mordants.

For example, the coating liquid (A) for the ink-receiving layer, which contains at least the fine particles (e.g., the fumed silica particles) and the water-soluble resin (e.g., polyvinyl alcohol), may be prepared as follows: the fumed silica fine particles and the dispersing agent are added to water such that the mass ratio of the fumed silica fine particles is 10 to 20% by mass of the resulting mixture; the resulting mixture is dispersed at a high rotational speed of 10000 rpm (preferably 5000 to 20000 rpm) for 20 minutes (preferably 10 to 30 minutes) by a high-speed rotary wet colloid mill (e.g. CLEAR MIX manufactured by M Technique Co., Ltd.); the crosslinking agent (the boron compound) and an aqueous polyvinyl alcohol (PVA) solution are added to the obtained mixture such that the mass ratio of the PVA to the fumed silica is approximately 1/3; the sulfur-containing compound according to the invention is further added to the mixture if necessary; and the resulting mixture is dispersed under the above rotational conditions. Thus-obtained coating liquid (A) is in state of a uniform sol, and may be applied onto the support by a method to be hereinafter described and dried to form the ink-receiving layer having a porous, three-dimensional network structure.

In the preparation of the water dispersion containing the fumed silica and the dispersing agent, an aqueous fumed silica dispersion liquid may be prepared beforehand. The water dispersion may be prepared by adding the aqueous fumed silica dispersion liquid to an aqueous dispersing agent solution; or adding the aqueous dispersing agent solution to the aqueous fumed silica dispersion liquid; or simultaneously mixing the aqueous dispersing agent solution and the aqueous fumed silica dispersion liquid. The water dispersion may be prepared by using fumed silica powder instead of the aqueous fumed silica dispersion liquid, and by adding or mixing the powder as above.

An aqueous dispersion liquid having an average particle size of 50 to 300 nm can be obtained by mixing the fumed silica and the dispersing agent and by refining the resulting mixture using a dispersing apparatus. The dispersing apparatus for preparing the aqueous dispersion liquid may be known one such as a high-speed rotary disperser, a stirring type disperser (e.g. a ball mill, a sand mill, etc.), an ultrasonic disperser, a colloid mill, and a high-pressure disperser. The dispersing apparatus is preferably a stirring type disperser, a colloid mill, or a high-pressure disperser, from the viewpoint of dispersing a globular body of the fine particles effectively.

The solvent for use in each process may be water, an organic solvent, or a mixture thereof. Examples of the organic solvents for the application include alcohols such as methanol, ethanol, n-propanol, i-propanol, and methoxypropanol; ketones such as acetone and methyl ethyl ketone; tetrahydrofuran; acetonitrile; ethyl acetate; toluene; etc.

The dispersing agent may be a cationic polymer. The cationic polymer may be the same as the above-described mordant. Further, it is also preferred that a silane coupling agent is used as the dispersing agent.

The amount of the dispersing agent is preferably 0.1 to 30%, and more preferably 1 to 10%, based on the amount of the fine particles.

The coating liquid for the ink-receiving layer may be applied by a known method using an extrusion die coater, an air doctor coater, a blade coater, a rod coater, a knife coater, a squeeze coater, a reverse roll coater, a bar coater, etc.

The coating liquid (B) may be added to the coating liquid (A) during or after the application process of the coating liquid (A). The coating liquid (B) may be added before the applied coating liquid (A) shows a falling drying rate. Thus, the ink-receiving layer is preferably formed by adding the mordant to the applied coating liquid (A) during the applied coating liquid (A) exhibits a constant drying rate.

The applied coating liquid (A) generally shows a falling drying rate several minutes after the application. During the several minutes, the amount of the solvent (the dispersion medium) in the applied coating liquid (A) is reduced in proportion to time, and thus the applied coating liquid (A) shows a constant drying rate. The period to show the constant drying rate is described in *Kagaku Kogaku Binran,* pages 707 to 712, Maruzen Co., Ltd., October 25, 1980, etc.

As described above, the first coating liquid may be applied and dried until the applied liquid shows the falling drying rate. The applied coating liquid is generally dried at a temperature of 50 to 180°C for 0.5 to 10 minutes, preferably for 0.5 to 5 minutes. Such drying time is generally preferred, though the suitable drying time depends on the amount of the applied liquid as a matter of course.

The coating liquid (B) may be added to the applied coating liquid (A) before the applied coating liquid (A) shows the falling drying rate as follows: (1) the coating liquid (B) is further applied on the applied coating liquid (A); (2) the coating liquid (B) is sprayed onto the applied coating liquid (A); or (3) the support coated with the coating layer (A) is soaked in the coating liquid (B).

In the method (1), the coating liquid (B) may be applied by a known method using a curtain flow coater, an extrusion die coater, an air doctor coater, a blade coater, a rod coater, a knife coater, a squeeze coater, a reverse roll coater, a bar coater, etc. The coating liquid (B) is preferably applied by a method using the extrusion die coater, the curtain flow coater, the bar coater, etc., in which the coater does not directly come into contact with the applied coating liquid (A).

After the mordant solution (the coating liquid (B)) is added, the coating liquids are generally heated at 40 to 180°C for 0.5 to 30 minutes to dry and harden the liquids. The heating is preferably carried out at 40 to 150°C for 1 to 20 minutes.

In the case where the mordant solution (the coating liquid (B)) is added to the coating liquid (A) at the same time the coating liquid (A) is applied, the ink-receiving layer may be formed as follows: the coating liquids (A) and (B) are simultaneously applied to the support to form a multilayer structure such that the coating liquid (A) comes into contact with the support; and then the multilayer is dried and hardened.

The simultaneous application (the multi-layer coating) may be achieved by a method using an extrusion die coater or a curtain flow coater, etc. After the simultaneous application, the obtained multilayer is dried generally by heating at 40 to 150°C for 0.5 to 10 minutes, preferably by heating at 40 to 100°C for 0.5 to 5 minutes.

For example, in the case where the simultaneous application (the multi-layer coating) is achieved by an extrusion die coater, the 2 coating liquids, which are simultaneously discharged, forms the multilayer around the discharge opening of the extrusion die coater before the liquids reach the support, and then the support is coated with the multilayer. The crosslinking reaction of the 2 coating liquids often proceeds at the interface between the liquids in the multilayer before the liquids reach the support. There is a case where the 2 coating liquids are mixed around the discharge opening of the extrusion die coater, and thereby the viscosities of the liquids is increased to prevent the application. Thus, it is preferred that a liquid for a barrier layer (an intermediate layer) is disposed between the coating liquids (A) for ink-receiving layer and the mordant solution (the coating liquid (B)), and the 3 liquids are simultaneously applied to form a multilayer of the 3 liquids.

The liquid for the barrier layer may be selected without particular restrictions. For example, the liquid may be an aqueous solution containing a trace of a water-soluble resin. The water-soluble resin may be used as a thickener, etc. in view of the application properties. Examples of the water-soluble resins include cellulose resins such as hydroxypropylmethyl cellulose, methyl cellulose, and hydroxyethylmethyl cellulose; and polymers such as polyvinylpyrrolidone and gelatin. The liquid for the barrier layer may contain the above-described mordant.

After the ink-receiving layer is formed on the support, the ink-receiving layer may be subjected to a calendering treatment using a super calender, a gloss calender, etc. by passing the layer through a roll nip while heating the layer under a pressure, to increase the surface smoothness, the glossiness, the transparency, and the strength of the layer. However, because there is a case where the porosity of the ink-receiving layer is reduced by the calendering treatment to lower the ink absorbency, it is important to carry out the calendering treatment under a condition that the porosity is hardly reduced.

In the calendering treatment, the roll temperature is preferably 30 to 150°C, and more preferably 40 to 100°C, and the line pressure of the roll is preferably 50 to 400 kg/cm, and more preferably 100 to 200 kg/cm.

The thickness of the ink-receiving layer is determined depending on the porosity because the ink-receiving layer needs to absorb all the ink droplets. For example, when the amount of the inks is 8 nL/ $mm^2$ and the porosity is 60%, the thickness should be approximately 15 µm or more. Thus, in the invention, the thickness of the ink-receiving layer is preferably 10 to 50 µm.

Further, the pore median size of the ink-receiving layer is preferably 0.005 to 0.050 µm, and more preferably 0.01 to 0.035 µm. The porosity and the pore median size can be measured by a mercury porosimeter such as PORESIZER 9320-PC2 (trade name) manufactured by Shimadzu Corporation.

It is preferred that the ink-receiving layer is excellent in the transparency. When the ink-receiving layer is formed on a transparent film support, the haze is preferably 30% or less, and more preferably 20% or less. The haze may be measured by a haze meter such as HGM-2DP manufactured by Suga Test Instruments Co., Ltd.

A dispersion of fine polymer particles may be added to layers (e.g. the ink-receiving layer, the back layer, etc.) of the ink-jet recording medium according to the invention. The dispersion of fine polymer particles is used for improving layer properties such as dimensional stability, curl prevention, adhesion prevention and crack prevention. The dispersion of fine polymer particles is described in JP-A Nos. 62-245258, 62-136648, and 62-110066. By adding a dispersion of fine polymer particles with a low glass transition temperature of 40°C or lower to the layer containing the mordant, cracks and curls of the layer can be prevented. The curls can be prevented also by adding a dispersion of fine polymer particles with a high glass transition temperature to the back layer.

A thermoplastic resin may be added to the ink-receiving layer or the uppermost layer, whereby the ink-jet recording medium can have a uniform surface after recording by heat and pressure, or by the solvent in the ink. The glossiness and the ozone resistance are further increased by using the thermoplastic resin.

Examples of the treatments, which are carried out before or after the recording, include methods described in Japanese Patent No. 3352414, JP-B Nos. 5-50396 and 7-39206, Japanese Patent Nos. 2908518, 2868840, and 3359217, and JP-A Nos. 2002-225415, 2002-127248, and 2002-264266.

The ink-jet recording medium according to the invention may be produced by the methods described in JP-A Nos. 10-81064, 10-119423, 10-157277, 10-217601, 11-348409, 2001-138621, 2000-43401, 2000-211235, 2000-309157, 2001-96897, 2001-138627, 11-91242, 8-2087, 8-2090, 8-2091, and 8-2093.

- Ink-jet recording method-

There are no restrictions in the ink-jet recording system in the method of the invention. The ink-jet recording system may be known one such as a charge control system where an ink is discharged by utilizing an electrostatic attracting force; a drop-on-demand system (a pressure pulse system) utilizing a vibration pressure of a piezo device; an acoustic ink-jet system where electric signals are converted to acoustic beams, the acoustic beams are irradiated onto an ink, and an ink is discharged utilizing the radiation pressure; and a thermal ink-jet system where an ink is heated to form bubbles and thus-provided pressure is utilized. Further examples of the ink-jet recording systems include systems of injecting a number of droplets with a small volume of a so-called photo ink having a low concentration; systems of using a plurality of inks with substantially the same hue and different concentration to improve image quality; and systems using a colorless, transparent ink.

EXAMPLES

The present invention will be described below with reference to Examples, but the scope of the present invention should not be construed to be limited thereto. It should be noted that "parts" and "%" in Examples means "parts by mass" and "mass %", respectively.

(Example 1)

(Preparation of aqueous ink)

A deionized water was added to the following components into 1 liter, and stirred for 1 hour while heating at 30 to 40°C. The pH value of the obtained mixture was adjusted to pH 9 by a 10 mol/L aqueous KOH, and the mixture was filtrated under reduced pressure by a microfilter having the average pore size of 0.25 µm, to obtain a light magenta ink.

- Magenta dye (T-1) represented by the following 7.5 g/L formula
- Diethylene glycol 50 g/L
- Urea 10 g/L
- Glycerin 200 g/L
- Triethylene glycol monobutyl ether 120 g/L
- 2-pyrrolidone 20 g/L
- Triethanolamine 6.9 g/L
- Benzotriazole 0.08 g/L
- SURFYNOL 465 of a surfactant manufactured by Air Products Japan, Inc. 10.5 g/L
- PROXEL XL-2 of an antimicrobial agent manufactured by ICI Japan Ltd. 3.5 g/L

Further, a magenta ink, a light cyan ink, a cyan ink, a yellow ink, and a black ink were prepared changing dyes and additives, respectively, to obtain the ink set 101 having the composition shown in Table 1.

Table 1

| (Composition of ink set 101) | | | | | | |
|---|---|---|---|---|---|---|
| | Light magenta | Magenta | Light cyan | Cyan | Yellow | Black |
| Dye (g/L) Dye (g/L) | T-1 (7.5) | T-1 (30.0) | T-2 (8.75) | T-2 (35.0) | T-3 (29.0) | T-4 (20.0)<br>T-5 (20.0)<br>T-6 (20.0)<br>T-3 (21.0) |
| Diethylene glycol (g/L) | 50 | 80 | 170 | 110 | 90 | 10 |
| Urea (g/L) | 10 | 70 | - | - | - | - |
| Glycerin (g/L) | 200 | 150 | 170 | 150 | 150 | 160 |
| Triethylene glycol monobutyl ether (g/L) | 120 | 120 | 130 | 130 | 130 | - |
| Diethylene glycol monobutyl ether (g/L) | - | - | - | - | - | 110 |
| 2-Pyrrolidone (g/L) | 20 | - | - | - | - | 50 |
| SURFYNOL 465 (g/L) | 10.5 | 10 | 9.8 | 10.5 | - | - |
| SURFYNOL STG (g/L) | - | - | - | - | 8.5 | 9.8 |
| Triethanolamine (g/L) | 6.9 | 7 | 6 | 6 | 0.9 | 15 |
| Benzotriazole (g/L) | 0.08 | 0.07 | 0.08 | 0.08 | - | 0.06 |
| Proxel XL2 (g/L) | 3.5 | 1.5 | 1.1 | 1.2 | 1.5 | 1.1 |

(T-1)

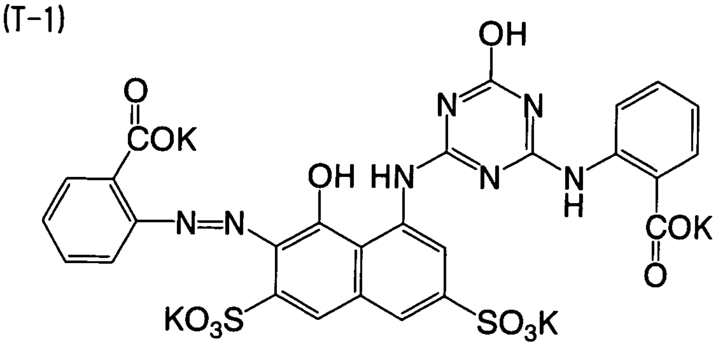

(0. 61)

(T-2)

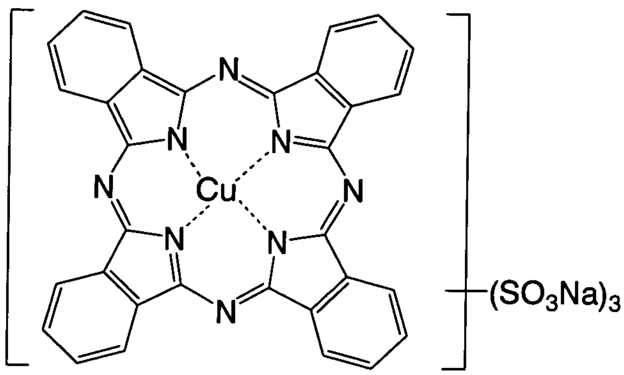

(0. 75)

(T-3)

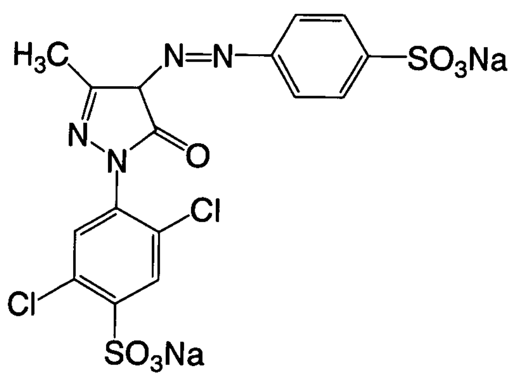

(0. 99)

(T-4)

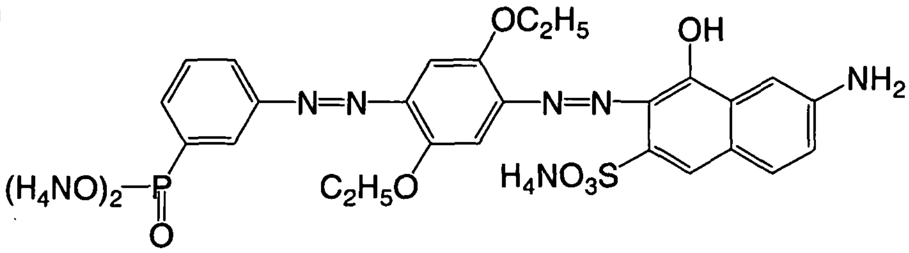

(T-5)

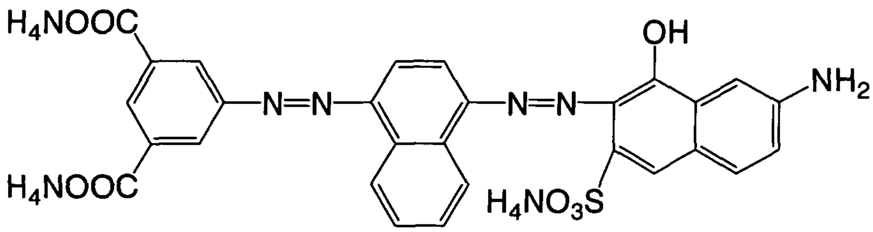

(T-6)

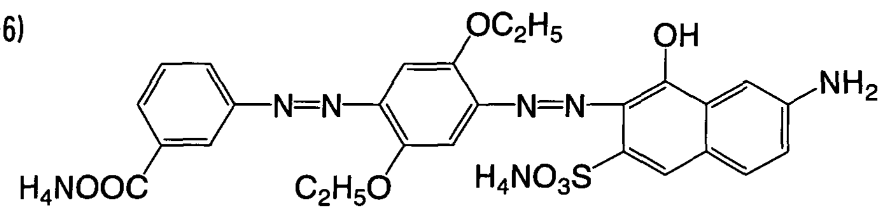

Then, the ink sets 102 to 106 were prepared in the same manner as the ink set 101 except that the dyes for the light magenta, magenta, light cyan, cyan, and yellow inks are changed as shown in Table 2, respectively. The amount by mole of each dye was basically not changed, and the concentration of each dye was controlled such that the transmission density of each ink was turned equal to that of the ink set 101. In the case of using a plurality of dyes for an ink, the mole numbers of the dyes used were equal.

Table 2

| Ink set | Light Magenta | Magenta | Light cyan | Cyan | Yellow |
|---|---|---|---|---|---|
| 101 | T-1 | T-1 | T-2 | T-2 | T-3 |
| 102 | T-1 | T-1 | C-10 | C-10 | T-3 |
| 103 | M-11 | M-11 | T-2 | T-2 | T-3 |
| 104 | M-11 | M-11 | C-10 | C-10 | T-3 |
| 105 | M-10 | M-10 | C-40 | C-40 | Y-4 |
| 106 | M-6 | M-3 | C-42 | C-40 | Y-24 Y-25 |

(Preparation of support)

Wood pulp comprising 100 parts of LBKP was beaten into the Canadian freeness of 300 ml by a double disc

refiner. 0.5 parts of epoxidated behenic amide, 1.0 part of anionic polyacrylamide, 0.1 parts of polyamide polyamine epichlorohydrin, and 0.5 parts of cationic polyacrylamide were added to the wood pulp, the amounts being absolute dry mass ratios to the wood pulp, and a base paper having an area weight of 170 g/$m^2$ was produced from the wood pulp by a Fourdrinier machine.

To control the surface size of the base paper, 0.04% of a fluorescent whitening agent (Whitex BB, manufactured by Sumitomo Chemical Co., Ltd.) was added to an aqueous 4% polyvinyl alcohol solution, and the base paper was impregnated with the obtained mixture such that the amount of the mixture was 0.5 g/$m^2$ based on the absolute dry mass and dried. The base paper was then subjected to a calendering treatment, to obtain substrate paper having the adjusted density of 1.05 g/mL.

The wire surface (back face) of the obtained substrate paper was subjected to a corona discharge treatment, and then coated with a high-density polyethylene by a melt extruder, to obtain a resin layer with a mat surface having the thickness of 19 μm. The surface of the resin layer side is hereinafter referred to as the back surface. The resin layer was further subjected to a corona discharge treatment, and an antistatic agent of a dispersion obtained by dispersing aluminum oxide (Alumina Sol 100, manufactured by Nissan Chemical Industries, Ltd.) and silicon dioxide (Snowtex O, manufactured by Nissan Chemical Industries, Ltd.) in the mass ratio of 1:2 in water was applied to the resin layer such that the dry mass ratio of the antistatic agent was 0.2 g/$m^2$.

Further, the felt surface (front face) without the resin layer of the substrate paper was subjected to a corona discharge treatment, and a low-density polyethylene was extruded into the thickness of 29 μm by a melt-extruder to form a high-glossy thermoplastic resin layer on the felt surface, whereby the desired support was produced. The low-density polyethylene contained 10% of anatase type titanium dioxide, a trace of ultramarine, and 0.01 % of a fluorescent whitening agent, based on the mass of the polyethylene, and had the MFR (melt flow rate) of 3.8. The surface of the high-glossy thermoplastic resin layer is hereinafter referred to as the front surface.

[Production of ink-jet recording sheet (1)]

(Preparation of coating liquid A for ink-receiving layer)

(1) The fumed silica fine particles, (2) the ion exchange water, and (3) the dispersing agent (SHAROLL DC-902P) in the following composition were mixed and dispersed by KD-P available from Shinmaru Enterprise Co. Then, (4) the polyaluminum chloride, (5) the zirconyl acetate and (6) the boric acid solution were added to the resulting mixture and stirred at 2000 rpm for 10 minutes by a dissolver, and (7) the polyvinyl alcohol was added thereto and stirred at 2000 rpm for 10 minutes, Further, a solution of (8) the surfactant and (9) the ion exchange water was added to the resultant mixture and stirred at 2000 rpm for 5 minutes, to obtain a coating liquid (A) for an ink-receiving layer.

| <Composition of coating liquid (A) for ink-receiving layer> | | |
|---|---|---|
| (1) | Fumed silica fine particles (REOLOSIL QS-30 manufactured by Tokuyama Co., average primary particle size: 7 nm) | 10 parts |
| (2) | Ion exchange water | 51.6 parts |
| (3) | Dispersing agent (SHAROLL DC-902P manufactured by Daiichi Kogyo Seiyaku Co., Ltd., 51% aqueous solution) | 1 part |
| (4) | Polyaluminum chloride (40% aqueous solution, basic formula: $Al_2(OH)_5Cl$, basicity: 83%, mordant) | 0.6 parts |
| (5) | Zirconyl acetate (25% aqueous solution, mordant) | 0.3 parts |
| (6) | Boric acid solution (5% aqueous solution, crosslinking agent) | 8 parts |
| (7) | Polyvinyl alcohol (PVA235 manufactured by Kuraray, Co., Ltd., saponification value: 88% by mole, polymerization degree: 3500, 8% aqueous solution, water-soluble resin) | 27.8 parts |
| (8) | Surfactant (OLFINE PD-101 manufactured by Nissin Chemical Industry Co., Ltd.) | 0.1 parts |
| (9) | Ion exchange water | 25.6 parts |

(Production of ink-jet recording sheet)

The front surface of the support was subjected to a corona discharge treatment, the above-obtained coating liquid (A) for ink-receiving layer was applied by an extrusion die coater to the front surface of the support in the amount of 200 mL/$m^2$, and the applied coating liquid (A) was dried by a hot-air drier at 80°C at the wind velocity of 3 to 8 m/second such that the solid content of the applied liquid became 20%. The applied coating liquid (A) showed a constant drying rate during the drying process. Immediately after the drying, the support coated with the coating liquid (A) was

soaked in the mordant coating liquid (B) having the following composition for 30 seconds, whereby 20 g/$m^2$ of the mordant coating liquid (B) was adhered to the applied coating liquid (A). The resultant was dried at 80°C for 10 minutes, to produce an ink-jet recording sheet (1) with an ink-receiving layer having the dry thickness of 32 μm according to the invention.

| <Composition of mordant coating liquid (B)> | |
|---|---|
| (1) Boric acid (crosslinking agent) | 0.65 parts |
| (2) Ammonium zirconium carbonate (ZIRCOSOL AC-7 manufactured by Daiichi Kigenso Kagaku Kogyo Co., Ltd., 28% aqueous solution) | 6.5 parts |
| (3) Ammonium carbonate | 6.0 parts |
| (4) Ion exchange water | 83.8 parts |
| (5) Surfactant (Megaface F-1405 manufactured by Dainippon Ink and Chemicals, Inc.) | 0.2 parts |

[Production of ink-jet recording sheet (2)]

An ink-jet recording sheet (2) was produced in the same manner as the production of the ink-jet recording sheet (1) except that 0.3 parts of the following compound (1) was added to the coating liquid (A) for ink-receiving layer.

$$HOCH_2CH_2SCH_2CH_2SCH_2CH_2OH \quad (1)$$

[Production of ink-jet recording sheet (3)]

An ink-jet recording sheet (3) was produced in the same manner as the production of the ink-jet recording sheet (1) except that 0.6 parts of the following compound (2) and 0.1 parts of the following compound (2') were added to the coating liquid (A) for ink-receiving layer.

$$HO_2C(CH_2)_3SCH_2CH_2S(CH_2)_3CO_2H \quad (2)$$

$$HO_2CCH_2SSCH_2CO_2H \quad (2')$$

[Production of ink-jet recording sheet (4)]

An ink-jet recording sheet (4) was produced in the same manner as the production of the ink-jet recording sheet (1) except that 0.5 parts of the following compound (3) was added to the coating liquid (A) for ink-receiving layer.

$$HOCH_2CH_2SOCH_2CH_2OH \quad (3)$$

[Production of ink-jet recording sheet (5)]

An ink-jet recording sheet (5) was produced in the same manner as the production of the ink-jet recording sheet (1) except that 0.4 parts of guanylthiourea was added to the coating liquid (A) for ink-receiving layer.

[Production of ink-jet recording sheet (6)]

An ink-jet recording sheet (6) was produced in the same manner as the production of the ink-jet recording sheet (1) except that 0.4 parts of the following compound (4) and 0.1 parts of sodium toluenesulfinate were added to the coating liquid (A) for ink-receiving layer.

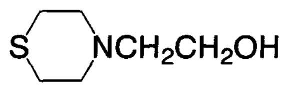

(4)

[Production of ink-jet recording sheet (7)]

An ink-jet recording sheet (7) was produced in the same manner as the production of the ink-jet recording sheet (1) except that 2 parts of sodium thiocyanate was added to the mordant coating liquid (B).

[Production of ink-jet recording sheet (8)]

An ink-jet recording sheet (8) was produced in the same manner as the production of the ink-jet recording sheet (1) except that 0.4 parts of methionine sulfoxide was added to the coating liquid (A) for ink-receiving layer.

[Production of ink-jet recording sheet (9)]

An ink-jet recording sheet (9) was produced in the same manner as the production of the ink-jet recording sheet (1) except that 0.6 parts of the above-illustrated P-10 was added to the coating liquid (A) for ink-receiving layer.

(Image recording and evaluation)

Each of the ink sets 101 to 106 was charged in the cartridge of the ink-jet printer PM900C manufactured by Seiko Epson Corporation, an image was printed on each of the ink-jet recording sheets (1) to (7) and evaluated.

<Ozone resistance>

Print samples of a magenta signal-colored image or a gray image were prepared ant the ozone resistance was evaluated as follows.

(Test 1)

A sample with the magenta reflection density of 1.0 was stored in a box for 2 days under a condition of the ozone gas concentration of 5 ppm. Then, the reflection density was measured, and the magenta dye-remaining rate was calculated using the following equation, and evaluated according to the following criteria A, B, and C.

$$\text{Magenta dye-remaining rate} = (\text{Magenta density after storage} / \text{Magenta density before storage}) \times 100$$

A: 80% or more
B: 70% or more and less than 80%
C: less than 70%

(Test 2)

A sample of a gray image was prepared and evaluated.

The color of the sample was evaluated before and after storing the sample in a box under a condition of the ozone gas concentration of 0.5 ppm for 7 days as follows.

The chromaticity (a*1, b*1) and the lightness (L1) of the sample were measured by SPM 100-II manufactured by GRETAG immediately after printing. The sample was irradiated with a xenon light (85,000 lux) by a weather meter manufactured by Atlas Co. for 7 days, and then the chromaticity (a*2, b*2) and the lightness (L2) were measured. The color difference $\Delta E$ between before and after the irradiation was calculated using the following equation (I) and evaluated.

$$\Delta E = \{(a^*1-a^*2)^2+(b^*1-b^*2)^2+(L1-L2)^2\}^{1/2} \qquad \text{Equation (I)}$$

The color difference was calculated under conditions of the reflection densities of 1.0, 1.3, and 1.6. When the color differences of less than 10% were obtained under all the conditions of the reflection densities of 1.0, 1.3, and 1.6, the ozone resistance was evaluated as A. When at least one color difference of less than 10% and at least one color difference of 10% or more were obtained depending on the reflection density, the ozone resistance was evaluated as B. When the color differences of 10% or more were obtained under all the conditions of the reflection densities of 1.0, 1.3, and 1.6, the ozone resistance was evaluated as C. Incidentally, the gas concentration in the box was controlled by the ozone gas monitor OZG-EM-01 manufactured by APPLICS.

The results are shown in Tables 3 and 4.

Table 3

| Ink set | Ink-jet recording sheet | Ozone resistance (Magenta) | Note |
|---|---|---|---|
| 101 | (1) | C | Comparative |
| 102 | (1) | C | Comparative |
| 103 | (1) | B | Comparative |
| 104 | (1) | B | Comparative |
| 105 | (1) | B | Comparative |
| 106 | (1) | B | Comparative |
| 101 | (2) | C | Comparative |
| 101 | (3) | C | Comparative |
| 101 | (4) | C | Comparative |
| 101 | (5) | C | Comparative |
| 102 | (6) | C | Comparative |
| 102 | (7) | C | Comparative |
| 103 | (2) | A | The Invention |
| 104 | (2) | A | The Invention |
| 105 | (3) | A | The Invention |
| 106 | (4) | A | The Invention |
| 104 | (5) | A | The Invention |
| 105 | (6) | A | The Invention |
| 106 | (7) | A | The Invention |
| 106 | (8) | A | The Invention |
| 106 | (9) | A | The Invention |

Table 4

| Ink set | Ink-jet recording sheet | Ozone resistance (Gray) | Note |
|---|---|---|---|
| 101 | (1) | C | Comparative |
| 101 | (2) | C | Comparative |
| 101 | (3) | C | Comparative |
| 104 | (2) | A | The Invention |
| 105 | (3) | A | The Invention |

Table 4 (continued)

| Ink set | Ink-jet recording sheet | Ozone resistance (Gray) | Note |
|---|---|---|---|
| 106 | (4) | A | The Invention |
| 104 | (5) | A | The Invention |
| 105 | (6) | A | The Invention |
| 106 | (7) | A | The Invention |
| 106 | (8) | A | The Invention |
| 106 | (9) | A | The Invention |

As shown in Tables 3 and 4, the images formed by the method of the invention were excellent in ozone resistance. Further, the images formed according to the invention were excellent in density, ink absorbency and glossiness, and hardly blurred.

As described in detail above, the ink-jet recording method of the invention can provide an image with excellent ozone gas fastness.

## Claims

**1.** An ink-jet recording method using an ink set for forming an image on an ink-jet recording medium, wherein:

the ink-jet recording medium comprises a support and an ink-receiving layer which comprises a sulfur-containing compound and is disposed on the support;
the ink set comprises a yellow ink comprising a yellow dye, a magenta ink comprising a magenta dye, and a cyan ink comprising a cyan dye; and
the magenta dye has an oxidation potential of higher than 0.8 V (vs SCE).

**2.** The ink-jet recording method of claim 1, wherein the magenta dye is represented by the following formula (M-I):

Formula (M-I)

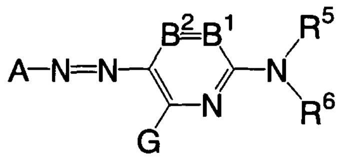

wherein A represents a residue of a 5-membered heterocyclic diazo component $A\text{-}NH_2$; $B^1$ and $B^2$ represent $-CR^1=$ and $-CR^2=$, or alternatively one of $B^1$ and $B^2$ represents a nitrogen atom and the other represents $-CR^1=$ or $-CR^2=$; $R^5$ and $R^6$ each independently represent one selected from the group consisting of a hydrogen atom, aliphatic groups, aromatic groups, heterocyclic groups, acyl groups, alkoxycarbonyl groups, aryloxycarbonyl groups, carbamoyl groups, alkyl or aryl sulfonyl groups, and sulfamoyl groups, and the groups may have a substituent; G, $R^1$ and $R^2$ each independently represent one selected from the group consisting of a hydrogen atom, halogen atoms, aliphatic groups, aromatic groups, heterocyclic groups, a cyano group, a carboxyl group, carbamoyl groups, alkoxycarbonyl groups, aryloxycarbonyl groups, heterocyclyloxycarbonyl groups, acyl groups, a hydroxy group, alkoxy groups, aryloxy groups, heterocyclyloxy groups, silyloxy groups, acyloxy groups, carbamoyloxy groups, alkoxycarbonyloxy groups, aryloxycarbonyloxy groups, amino groups, acylamino groups, ureido groups, sulfamoylamino groups, alkoxycarbonylamino groups, aryloxycarbonylamino groups, alkyl or aryl sulfonylamino groups, heterocyclylsulfonylamino groups, a nitro group, alkyl or aryl thio groups, alkyl or aryl sulfonyl groups, heterocyclylsulfonyl groups, alkyl or aryl sulfinyl groups, heterocyclylsulfinyl groups, sulfamoyl groups, a sulfo group, and heterocyclylthio groups, and the groups may have a substituent; and $R^1$ and $R^5$, or $R^5$ and $R^6$ may bond together to form a 5-or

6-membered ring.

**3.** The ink-jet recording method of claim 1, wherein the magenta dye is represented by the following formula (M-II):

Formula (M-II)

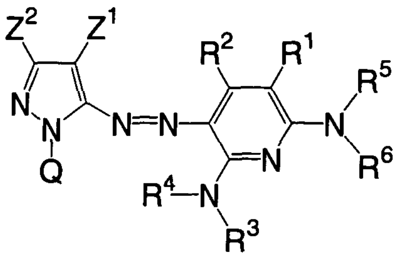

wherein $Z^1$ represents an electron-withdrawing group having a Hammett's substituent constant $\sigma_p$ of 0.20 or more; $Z^2$ represents a hydrogen atom, an aliphatic group, an aromatic group, or a heterocyclic group; $R^1$ and $R^2$ each independently represent one selected from the group consisting of a hydrogen atom, halogen atoms, aliphatic groups, aromatic groups, heterocyclic groups, a cyano group, a carboxyl group, carbamoyl groups, alkoxycarbonyl groups, aryloxycarbonyl groups, heterocyclyloxycarbonyl groups, acyl groups, a hydroxy group, alkoxy groups, aryloxy groups, heterocyclyloxy groups, silyloxy groups, acyloxy groups, carbamoyloxy groups, alkoxycarbonyloxy groups, aryloxycarbonyloxy groups, amino groups, acylamino groups, ureido groups, sulfamoylamino groups, alkoxycarbonylamino groups, aryloxycarbonylamino groups, alkyl or aryl sulfonylamino groups, heterocyclylsulfonylamino groups, a nitro group, alkyl or aryl thio groups, alkyl or aryl sulfonyl groups, heterocyclylsulfonyl groups, alkyl or aryl sulfinyl groups, heterocyclylsulfinyl groups, sulfamoyl groups, a sulfo group, and heterocyclylthio groups, and the groups may have a substituent; $R^3$ and $R^4$ each independently represent one selected from the group consisting of a hydrogen atom, aliphatic groups, aromatic groups, heterocyclic groups, acyl groups, alkoxycarbonyl groups, aryloxycarbonyl groups, carbamoyl groups, alkyl or aryl sulfonyl groups, and sulfamoyl groups; $R^5$ and $R^6$ each independently represent one selected from the group consisting of a hydrogen atom, an aliphatic group, an aromatic group, a heterocyclic group, an acyl group, an alkoxycarbonyl group, an aryloxycarbonyl group, a carbamoyl group, an alkyl or aryl sulfonyl group, and a sulfamoyl group, and the groups may have a substituent; and Q represents a hydrogen atom, an aliphatic group, an aromatic group, or a heterocyclic group.

**4.** The ink-jet recording method of claim 3, wherein $Z^1$ is one selected from the group consisting of acyl groups having 2 to 20 carbon atoms, alkyloxycarbonyl groups having 2 to 20 carbon atoms, a nitro group, a cyano group, alkylsulfonyl groups having 1 to 20 carbon atoms, arylsulfonyl groups having 6 to 20 carbon atoms, carbamoyl groups having 1 to 20 carbon atoms, and halogenated alkyl groups having 1 to 20 carbon atoms.

**5.** The ink-jet recording method of claim 1, wherein the cyan dye has an oxidation potential of higher than 0.8 V (vs SCE).

**6.** The ink-jet recording method of claim 1 or 5, wherein the sulfur-containing compound is at least one selected from the group consisting of thioether compounds, thiourea compounds, sulfoxide compounds, thiocyanic acid compounds, sulfinic acid compounds, disulfide compounds, and sulfur-containing heterocyclic compounds.

**7.** The ink-jet recording method of claim 1, wherein the cyan dye is represented by the following formula (C-I):

Formula (C-I)

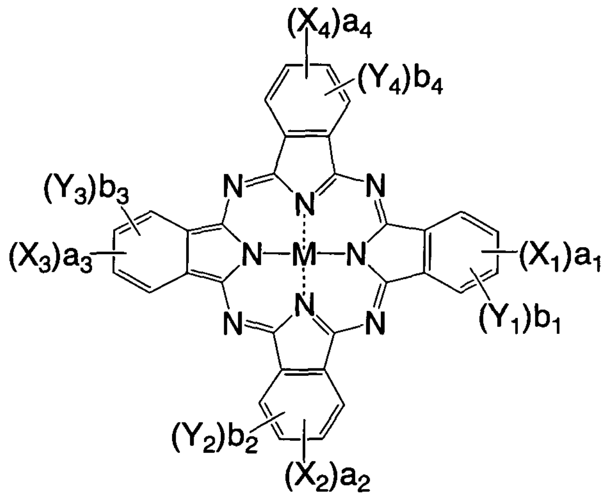

wherein $X_1$, $X_2$, $X_3$ and $X_4$ each independently represent an electron-withdrawing group having a Hammett's substituent constant $\sigma_p$ of 0.40 or more; $Y_1$, $Y_2$, $Y_3$ and $Y_4$ each independently represent a monovalent substituent; M represents a hydrogen atom, a metal atom, an oxide of a metal atom, a hydroxide of a metal atom, or a halide of a metal atom; $a_1$ to $a_4$ and $b_1$ to $b_4$ are the numbers of $X_1$ to $X_4$ and $Y_1$ to $Y_4$ respectively; $a_1$ to $a_4$ each independently represent an integer from 0 to 4; $b_1$ to $b_4$ each independently represent an integer from 0 to 4; and the sum of $a_1$ to $a_4$ is 2 or more.

**8.** The ink-jet recording method of claim 7, wherein $a_1$ to $a_4$ satisfy $a_1=a_2=a_3=a_4=1$.

**9.** The ink-jet recording method of claim 1, wherein the ink-receiving layer comprises particles, and the inks are absorbed into spaces between the particles.

**10.** The ink-jet recording method of claim 1, wherein the ink-receiving layer comprises water-soluble resin, and the inks are absorbed into the water-soluble resin.